# EUROPEAN PATENT SPECIFICATION

(11) **EP 4 695 940 B1**
(45) Date of publication and mention of the grant of the patent: **02.12.2026**
(21) Application number: 24718734.7
(22) Date of filing: 04.04.2024
(51) Int. Cl.: H04L 9/40, G05D 1/00, G06F 21/33, H04L 9/00, H04L 9/08, H04L 9/32, H04W 12/04, H04W 12/06, H04W 12/10

(54) **METHOD AND SYSTEM FOR CONTROLLING INTERCONNECTED DEVICES OPERATING IN AN UNTRUSTED ENVIRONMENT**
VERFAHREN UND SYSTEM ZUR STEUERUNG VON MITEINANDER VERBUNDENEN VORRICHTUNGEN, DIE IN EINER UNSICHEREN UMGEBUNG BETRIEBEN WERDEN
PROCÉDÉ ET SYSTÈME DE COMMANDE DE DISPOSITIFS INTERCONNECTÉS FONCTIONNANT DANS UN ENVIRONNEMENT NON SÉCURISÉ

(30) Priority: 11.04.2023 EP 23167325
(43) Date of publication of application: 18.02.2026
(73) Proprietor: SICPA HOLDING SA, 1008 Prilly (CH)
(72) Inventor: HARDMAN, Daniel, 1806 St. Légier-La Chiésaz (CH)
(74) Representative: GatesIP
(86) International application number: PCT/EP2024/059260
(87) International publication number: WO 2024/213475

(56) References cited:
- EP-A1- 3 992 078
- WO-A1-2022/128160
- US-A1- 2020 379 977

## Description

### TECHNICAL FIELD

The present invention relates to the field of control of operations performed by a plurality of devices operating in an untrusted environment and equipped with communication units operable to exchange data securely with each other via wired or wireless communication links.

### BACKGROUND OF THE INVENTION

Devices interconnected via wired or wireless networks and cooperating to perform various tasks, e.g. industrial robots executing operations within a factory according to industrial manufacturing processes or within a warehouse to store and move goods according to transportation or delivery processes, but also mobile devices like mobile phones, laptops or tablet computers, or Internet of Things (IoT) devices are widespread today. Another example relates to a swarm of drones belonging to different owners that operate in an untrusted environment, possibly hostile, and must exchange data to perform some tasks. All those devices must exchange data between each other and, possibly, with servers. These devices are generally equipped with a processing unit and a communication unit to exchange and process data received via a communication network. For example, interconnected robots are generally supervised by a server (having processing and communication means, as well as storage means like a database) to receive instructions for executing tasks and for controlling execution of the tasks.

In such a context of interconnected devices, many hardware and software solutions have been developed to provide secure transmission of data over different networks. Security of data exchanges through a network against intrusions (of untrusted party) has been improved by using encryption of data. For example, "Rich operating system Execution Environment" REE have been developed (e.g. like Android^{™}). However, this is not always sufficient to prevent (physical) intrusions and maintain data integrity. Thus, physical protection of the processing units, or at least part of them, has been developed to increase security. For example, the standard of "Trusted Execution Environment" TEE, using both hardware and software to protect data, has been developed by industry (for example the ARM TrustZone technology of ARM Holdings, see also ref.[1] and [2]). A trusted execution environment TEE is a secure area of a processor: as an isolated execution environment, it guarantees code and data loaded inside to be protected with respect to integrity and confidentiality of sensitive data.

TEE uses secure hardware enclaves. A secure enclave is a protected region of memory acting as a TEE for processing sensitive data inside a processing device. The secure enclave appears like an opaque box to the rest of the device and other processes running on the device: there is no way to view any data or code inside the enclave from the outside. For example, when parsing an application's query from a client driver, the processing device determines whether the query contains any operations on encrypted data that require the use of the secure enclave. For queries for which the secure enclave needs to be accessed: (i) the client driver sends the column encryption keys required for the operations to the secure enclave (over a secure channel), (ii) then, the client driver submits the query for execution along the encrypted query parameters. During query processing, the data or the column encryption keys are not exposed in plain text outside the secure enclave (the processing device delegates cryptographic operations and computations on encrypted columns to the secure enclave). The secure enclave (inside the processing device) can access sensitive data stored in the encrypted database column and the corresponding column encryption keys in plaintext. Before submitting a query that involves enclave computations to the processing device, the client driver inside the application must verify the secure enclave is a genuine enclave based on a given technology (for example, VBS "Virtualization-Based Security") and the code running inside the enclave has been signed for running inside the enclave.

Moreover, specific communication/verification protocols have been developed to improve security of data transfers (see [3]) over communication networks. For example, there exists verification protocols like "Zero-Knowledge Proof" ZKP (see [4]) to validate offline the digital signature (proof of signature) of a digital artefact (see, for example, [5], [6]).

There also exists ZKP protocols to sign a digital artefact with a new key oblivious of the key value, i.e. without learning how to positively respond to a proof of signature, e.g. via "Blind" (see [6], [7]), efficient (see [8], [9], [10]), or delegate (see [11]) signatures.

It is also possible to protect critical data and/or encryption keys that protect said data by using a Hardware Security Module (HSM), i.e. a specialized, highly trusted physical device adapted to perform all major cryptographic operations, including encryption, decryption, authentication, key management, key exchange, and more. HSMs generally have a robust Operating System (OS) and restricted, strictly controlled, network access protected by a firewall, they are also tamper-resistant and tamper-evident devices (see, e.g., [12]).

However, there is still a need for improving security and robustness in controlling execution of operations performed by interconnected devices with respect to potential intrusions altering execution of operations and/or data integrity, particularly in case the devices are not owned (or under full control) by a same entity or person, particularly in case the devices operate in a dangerous and hostile environment (with possible intrusions into data exchanges), so that only sensitive data that are strictly necessary for a secure execution of the operations may be transferred, unauthorized (re)use of transmitted data is prevented, and traceability of data exchanges is also prevented.

### SUMMARY OF THE INVENTION

According to one aspect, the invention relates to a method for controlling a plurality of devices via a reference device and making the devices cooperate to perform a task, each device being owned by a corresponding owner, each device being equipped with a processing unit with a memory and a communication unit, and adapted to execute operations necessary to perform the task, the memory of each device storing a corresponding set of cryptographic private keys of the owner of the device, a decentralized identifier (DID) of its owner associated with a set of public cryptographic keys respectively corresponding to the private keys, a programmed method of authentication of the other devices and the reference device adapted to run on the processing unit of the device, the sets of public cryptographic keys of the other devices, a set of verifiable data, each verifiable data comprising corresponding operation parameter data values and associated internal rules necessary to perform the task, and verifiable credentials of the owner of the device, the communication units of the devices being adapted to securely communicate with each other via a wireless or wired communication network, the reference device being equipped with a processing module, a memory module and a communication module and adapted to securely communicate with each device communication unit via the wireless or wired communication network, the reference device and the devices being adapted to transfer data using an encryption protocol, the memory module of the reference device storing corresponding set of cryptographic private keys of a reference owner of the reference device, and corresponding decentralized identifier data (DID) associated with a set of public cryptographic keys respectively corresponding to the reference device private keys, and the set of public cryptographic keys of each device of said plurality of devices, the reference device and each device being adapted to digitally sign with their corresponding stored private keys a transfer receipt, and the memory of each device further storing the set of public cryptographic keys of the reference device, the method being characterized in that:
- each transfer of data between any two devices, and between the reference device and any device, is encrypted with a private key according to the encryption protocol, and any receiver of a message transferred according to said encryption protocol authenticates a sender of the received message by decrypting the message with a public key corresponding to the private key of the owner of the sender of the message used for encrypting said message, and in case the message includes a signed transfer receipt, the receiver further verifies whether each signature on the signed transfer receipt is valid;
- each signed transfer receipt sent or received by a device is stored in its memory, and each signed transfer receipt sent or received by the reference device is stored in its memory module;
- each time a first device sends to a second device, via its communication unit, possibly via the reference device, an encrypted message including a signed transfer receipt and indicating an operation involving a use of given operation parameter data values to be executed by the second device as being part of the task, the signed transfer receipt includes the respective DIDs of the first device, the second device and the reference device together with the given operation parameter data values; and,
- the second device, upon reception of this message by its communication unit, decrypts the message, executes the operation by using the operation parameter data values included in the signed transfer receipt in the received message and its processing unit removes from the set of its verifiable data stored in its memory selected verifiable data of which operation parameter values match the given operation parameter data values used for executing the operation and stores apart in its memory said selected verifiable data, generates a proof of said removal and storing apart of the selected verifiable data and includes the generated proof into the signed transfer receipt, and the second device further signs via its processing unit the signed transfer receipt in the received decrypted message, and sends via its communication unit to the reference device an encrypted message including said further signed transfer receipt together with said selected verifiable data; and
- upon reception by the communication module of the reference device of the encrypted message from the second device including said further signed transfer receipt together with said selected verifiable data, the reference device verifies whether the received proof in the received further signed transfer receipt is valid and whether data of the received selected verifiable data comply with the associated internal rules; and
- in case of successful authentication of the respective receiver and sender for any transfer of message between the first device and the second device concerning said operation, and between any one of the first and second devices and the reference device concerning said operation, and successful verification of data content of any transferred message, the reference device further signs and stores in its memory module the transfer receipt signed by the first device and the second device and containing said proof generated by the second device, and sends an encrypted message containing said further signed transfer receipt to the first device and the second device, thereby indicating to said two devices that the operation has been executed; and
- upon reception by the communication unit of the second device of said transfer receipt further signed by the reference device, the second device deletes from its memory the selected verifiable data.

For each operation necessary to perform the (programmed) task, specific corresponding operation parameter data values are sent to a device in charge of executing said operation. The device receiving these specific operation parameter data values then looks for verifiable data within the set of verifiable data that are stored in its memory and selects verifiable data of which operation parameter data values match these received specific operation parameter data values. The device then executes the operation corresponding to the selected verifiable data (i.e. by using the specific operation parameter data values) and, because of the execution of the operation, the device removes the selected verifiable data from its set of device verifiable data that is stored in its memory and stores apart (from the set) in its memory these selected verifiable data. Thus, the device has stored (apart) the selected verifiable data in **a** "busy section" of its memory (i.e. the selected verifiable data are no more stored as an element of the set), by contrast to a "normal section" of the memory corresponding to these verifiable data being stored as an element of the set of the verifiable data of the device. Each instruction sent by a device to another device (possibly via the reference device) to execute an operation is part of a message containing a transfer receipt signed by the device, and this transfer receipt is stored in the memory of the device and, after its reception, in the memory of said another device. The reference device also stores in its memory module any received signed transfer receipt, and any transfer receipt signed by the reference device. The systematic storage of any sent or received transfer receipt (including any proof of modification of the storage of verifiable data by a device) allows a strict control of the execution of the various operations involved in the performance of the task assigned to the devices, and allows to check whether each device has correctly updated its set of verifiable data when moving from an operation to a next one. Each device, and the reference device, can sign a transfer receipt by calculating a hash value of the data content of the transfer receipt with a programmed signature hash function and encrypting the calculated hash value with one of its private keys. According to the conventional signature verification scheme, data integrity of a signed transfer receipt, received from a sender and decrypted by a receiver of said signed transfer receipt with a public key of the sender (corresponding to the private key used for signing), is checked by the receiver by using the decrypted signature of the sender, i.e. extracting the hash value of the decrypted signature and comparing this extracted hash value with a calculated hash value of the decrypted transfer receipt data: if these two hash values match, the signature is valid and data integrity of the transfer receipt is ensured. Moreover, a receiver of an encrypted signed transfer receipt can further check, at decryption stage, that the public key used for decryption indeed belongs to the owner of the sender as identified by his DID included in the decrypted signed transfer receipt.

The owner of a device, or that of the reference device, can be any entity (e.g. control unit, operator etc.) that participates in or organizes the operations of said device in view to collaborate with the other devices for performing a given task. An owner can program certain applications on its device and/or interact with the device via specific communication link or interface: these aspects are well known to the skilled person and are not the subject of the invention. A device can be a robot, or a mobile device like for example a mobile phone (e.g. programmed to interact with an apparatus for performing operations), a laptop or a tablet computer or an loT device. Another example of a plurality of interconnected devices is a swarm of drones that cooperate to perform a task like for example supplying materials to, or closely monitor (e.g. via optical sensors, cameras etc.), a designated zone. In this case, the verifiable data of a drone can correspond to, for example, flight instructions to set flight parameters of the drone (corresponding to specific operation parameter data values), while the internal rules can, for example, correspond to authorized values or ranges of values for the flight parameters. Verifiable data are considered to comply with its own internal rules if its corresponding operation parameter data values (used to execute an operation) do not contravene said internal rules. A device may update the internal rules of verifiable data (e.g. according to programmed instructions) to restrict a use of the corresponding operation parameter data values for certain operations to be executed by the device or by another device having to use, or receiving from the device, said operation parameter data values. A particular example of drones competing to perform a task is in the field of precision agriculture. In precision agriculture, drones can be used to survey crops, collect data on plant health, and spray pesticides or fertilizers. Multiple drone operators may be contracted to survey and treat a single farm, with each operator responsible for a different area or task.
In this scenario, the drone operators are competing with one another to provide the best service to the farmer, while also trying to maximize their own profits. They must cooperate with one another to ensure that they are not interfering with each other's work, but they also have incentives to cheat, such as flying their drones outside of their designated area to collect more data or spraying more pesticides than necessary to finish their task faster. To address these issues, a regulatory authority may lay down rules for the operators to follow, such as designated flight paths or limits on the amount of pesticide that can be sprayed. The operators may also share data with each other to improve the overall quality of the survey, but they must be cautious to protect their own interests and data privacy.

According to an embodiment of the above invention, a processing unit clock of each device is synchronized with a processing module clock of the reference device RD, and each device and the reference device RD are adapted to include timestamp data in a transfer receipt and verify whether there is timeout from time stamp data in a received transfer receipt, and wherein an operation being part of the task is executed according to the following steps:
(A) a first device D1 sends to a second device D2 via its communication unit a message, encrypted by its processing unit using one of its private keys stored in its memory, the message including data indicating an operation OP to be executed by the second device D2 and corresponding transfer receipt signed by the first device containing given operation parameter data values to be used for executing the operation OP and first timestamp data;
(B) upon reception by the second device D2 of the encrypted message from the first device D1, the processing unit of the second device authenticates the first device as being the sender of the received message by decrypting the message using a public cryptographic key corresponding to the private key of the owner of the first device used to encrypt the message, or by using a shared symmetric key negotiated with the private key of the sender of the message, and verifying whether the signature on the received signed transfer receipt is valid, and the processing unit of the second device verifies whether there is no timeout from the first timestamp data in the received signed transfer receipt; and,
(B1) in case authentication of the first device D1 fails, or the signature on the signed transfer receipt is not valid or there is timeout, the second device D2 sends to the reference device a corresponding error notification via its communication unit, the transfer of data with the first device D1 is cancelled, and the reference device RD forwards the received error notification to the first device D1; and
(B2) in case authentication of the first device D1 succeeds, and the signature on the signed transfer receipt is valid, and there is no timeout, the processing unit of the second device D2 selects verifiable data D2SVD of which operation parameter data values match the received given operation parameter data values in the set of verifiable data D2VD stored in its memory, the processing unit of the second device D2 updates the internal rules of the selected verifiable data, the second device D2 executes the operation by using the selected verifiable data D2SVD and its processing unit removes from the set of its verifiable data D2VD stored in its memory the selected verifiable data D2SVD and stores apart in its memory said selected verifiable data D2SVD with the updated associated internal rules, generates a proof PR1 of said removal and storing apart of the selected verifiable data D2SVD, incorporates the selected verifiable data D2SVD into the message, includes the generated proof PR1 and second timestamp data in the signed transfer receipt, further signs the transfer receipt and includes this further signed transfer receipt in the message, encrypts with one of its private keys the message and sends to the reference device RD the encrypted message;
(C) upon reception by the communication module of the reference device RD of the message from the second device D2, the processing module of the reference device RD decrypts the message with a public key corresponding to the private key used by the second device D2 to encrypt the message, verifies whether the signatures on the transfer receipt are valid and there is no timeout from the first and second timestamp data, whether the proof PR1 is valid and the received second device selected verifiable data D2SVD comply with the corresponding associated internal rules; and
(C1) in case a signature is not valid or there is timeout or the proof PR1 is not valid or the received second device selected verifiable data D2SVD do not comply with the corresponding internal rules, the reference device RD sends to the first device D1 and the second device D2 a corresponding error notification via its communication module and the transfer of data between the first device D1 and the second device D2 is cancelled; and
(C2) in case the signatures are valid, there is no timeout, the proof PR1 is valid, and the received second device selected verifiable data D2SVD comply with the corresponding internal rules, the processing module of the reference device RD includes the second device selected verifiable data D2SVD in the message, further signs the signed transfer receipt and attaches this further signed transfer receipt to the message, encrypts the message with a private key stored in the memory module, sends to the first device D1 the encrypted message, and the processing module of the reference device RD encrypts the further signed transfer receipt with a private key stored in the memory module and sends the encrypted further signed transfer receipt to the second device D2;
(D) upon reception by the communication unit of the first device D1 of the message from the reference device RD, the processing unit of the first device D1 decrypts the message with the public key corresponding to the private key used by the reference device RD to encrypt the message and extracts the second device selected verifiable data from the message; and,
(D1) the first device D1 modifies its set of first device verifiable data (D1VD) stored in its memory by generating and storing a new set of first device verifiable data D1VD' including the extracted second device selected verifiable data D2SVD;
(E) upon reception by the communication unit of the second device D2 of the error notification sent by the reference device RD according to step (C1), the processing unit of the second device D2 transfers the second device selected verifiable data D2SVD stored apart in its memory into the set of its verifiable data D2VD;
(F) upon reception by the communication unit of the second device D2, decryption and validation of the signatures of the encrypted signed transfer receipt sent by the reference device RD according to step (C2), the processing unit of the second device D2 deletes the second device selected verifiable data D2SVD stored apart in its memory.

In the above, the timestamp data included in a transfer receipt is not just a snapshot of the current time. Rather, it is a constraint about time that, if violated, should cause a timeout. Each device can express specific timing constraints and thus, the most demanding constraint will end up governing the timeouts. Such timestamp data allow to increase a security level of execution of operations by the devices and detect (and report) malfunctions.

The message sent by the first device at step (A) is encrypted to protect a content of the message and/or authenticate itself before the second device. It is possible, for example, that the second device challenges the first device, or the first device uses authenticated encryption with combination of keys, to perform said authentication. Alternatively, at step (B), upon reception by the second device of the message, the processing unit of the second device may authenticate the owner of the sender of the message as by using a shared symmetric key negotiated with the private key of the sender of the message, and then perform the step of verifying whether the signature on the received transfer receipt is valid, and there is no timeout from the first timestamp data of the transfer receipt. According to the invention, strong authentication of a sender of an encrypted message including a signed transfer receipt is based on a first phase of decrypting the message with a public key corresponding to the private key of the sender used for encrypting the message, and a second phase of verifying that the signature on the (decrypted) signed transfer receipt matches with the signature corresponding to that private key. Said verification of the validity of the signature on the transfer receipt also serves to ensure data integrity of the content of the signed transfer receipt (in case the signature is valid).

According to another embodiment of the invention, wherein a processing unit clock of each device is synchronized with a processing module clock of the reference device RD, and each device and the reference device RD are adapted to include timestamp data in a transfer receipt and verify whether there is timeout from time stamp data in a received transfer receipt, and wherein an operation being part of the task is executed according to the following steps:
(A') a first device D1 sends to the reference device RD via its communication unit a message, encrypted by its processing unit using one of its private keys stored in its memory, the message including data indicating an operation OP to be executed by the second device D2 and corresponding transfer receipt signed by the first device containing given operation parameter data values to be used for executing the operation OP and first timestamp data;
   upon reception by the communication module of the reference device RD of the encrypted message from the first device D1, the processing module of the reference device RD authenticates the first device as being the sender of the received message by decrypting the message using a public cryptographic key corresponding to the private key of the owner of the first device D1 used to encrypt the message, and the processing module of the reference device RD verifies whether the signature on the received signed transfer receipt is valid, and whether there is no timeout from the first timestamp data in the signed transfer receipt, and,
(A1') in case authentication of the first device D1 fails, or the signature of the transfer receipt is not valid or there is timeout, the reference device RD sends to the first device D1 an error message via its communication module and the transfer of data between the first device D1 and the second device D2 is cancelled; and
(A2') in case authentication of the first device is successful, and the signature on the transfer receipt is valid, and there is no timeout from the first timestamp data, the processing module of the reference device RD includes a reference device timestamp RDTS in the signed transfer receipt, attaches this signed transfer receipt to the message and encrypts the message including the signed transfer receipt with one of its private keys stored in the memory module, and sends to the second device D2 the encrypted message via its communication module;
(B') upon reception by the second device D2 of the encrypted message from the reference device RD, the processing unit of the second device D2 authenticates the reference device RD as being the sender of the received message by decrypting the message using a public cryptographic key corresponding to the private key of the owner of the reference device RD used to encrypt the message, verifies whether the signature of the first device D1 on the received signed transfer receipt is valid, and whether there is no timeout from the first and reference device timestamp data of the signed transfer receipt in the message; and,
(B1') in case authentication of the reference device RD fails, or the signature on the signed transfer receipt is not valid or there is timeout, the second device D2 sends to the reference device RD a corresponding error notification via its communication unit, the reference device RD forwards the received error notification to the first device D1 and the transfer of data with the first device D1 is cancelled; and
(B2') in case authentication of the reference device RD succeeds, and the signature on the signed transfer receipt is valid, and there is no timeout, the processing unit of the second device D2 selects verifiable data D2SVD of which operation parameter data values match the received given operation parameter data values in the set of verifiable data D2VD stored in its memory, the processing unit of the second device D2 updates the internal rules associated with the selected verifiable data, the second device D2 executes the operation according to the selected verifiable data D2SVD and its processing unit removes from the set of its verifiable data D2VD stored in its memory the selected verifiable data D2SVD and stores apart in its memory said selected verifiable data D2SVD with the updated associated internal rules, generates a proof PR1 of said removal and storing apart corresponding to said execution of the operation OP, incorporates the selected verifiable data D2SVD into the message, includes the generated proof PR1 and second timestamp data in the signed transfer receipt, further signs the signed transfer receipt and attaches the further signed transfer receipt to the message, encrypts with one of its private keys the message and sends to the reference device RD the encrypted message;
(C') upon reception by the communication module of the reference device RD of the message from the second device D2, the processing module of the reference device RD decrypts the message with a public key corresponding to the private key used by the second device D2 to encrypt the message, verifies whether the signatures on the signed transfer receipt are valid and there is no timeout from the first, reference device and second timestamp data in the signed transfer receipt, whether the proof PR1 in the signed transfer receipt is valid and the received second device selected verifiable data D2SVD comply with the corresponding associated internal rules; and
(C1') in case a signature is not valid or there is timeout or the proof PR1 is not valid or the received second device selected verifiable data D2SVD do not comply with the associated internal rules, the reference device RD sends to the first device D1 and the second device D2 a corresponding error notification via its communication module and the transfer of data between the first device D1 and the second device D2 is cancelled; and
(C2') in case the signatures are valid, there is no timeout, the proof PR1 is valid, and the received second device selected verifiable data D2SVD comply with the associated internal rules, the processing module of the reference device RD encrypts the message with a private key stored in the memory module, and sends to the first device D1 the encrypted message including the signed transfer receipt;
(D') upon reception by the communication unit of the first device D1 of the message and the signed transfer receipt from the reference device RD, the processing unit of the first device D1 decrypts the message with the public key corresponding to the private key used by the reference device RD to encrypt the message, verifies whether the signatures on the signed transfer receipt are valid and whether there is no timeout from the first, reference device and second timestamp data, extracts the second device verifiable data D2SVD from the decrypted message; and,
(D1') in case a signature on the signed transfer receipt is not valid or there is timeout, the first device D1 sends to the reference device RD a corresponding error notification via its communication unit, the reference device RD forwards the received error notification to the second device D2 and the transfer of data with the first device D1 is cancelled; and
(D2') in case the signatures on the signed transfer receipt are valid and there is no timeout, the processing unit of the first device D1 modifies its set of first device verifiable data (D1VD) stored in its memory to generate and store a new set of first device verifiable data D1VD' including the extracted second device selected verifiable data D2SVD into the set of first device verifiable data (D1VD), generates a proof PR2 of such inclusion, removes the second device selected verifiable data D2SVD from the message, incorporates the generated proof of inclusion PR2 into the signed transfer receipt, encrypts the message with a private key stored in the memory of the first device D1 and forwards to the reference device RD the encrypted message including the signed transfer receipt; and
(D3') upon reception by the communication module of the reference device RD of the message with the signed transfer receipt sent by the first device D1 according to the sub-step (D2'), the processing module of the reference device RD decrypts the message with the public key corresponding to the private key used by the first device D1 for encrypting the message, verifies whether the signatures on the signed transfer receipt are valid, whether there is no timeout from the first, reference device and second timestamp data, whether the proof of inclusion PR2 in the signed transfer receipt is valid, and
(D4') in case a signature is not valid or there is timeout or the proof of inclusion PR2 is not valid, the reference device RD sends to the first device D1 and the second device D2 a corresponding error notification via its communication module and the transfer of data between the first device D1 and the second device D2 is cancelled, and
(D5') in case the signatures are valid, there is no timeout, and the proof of inclusion PR2 is valid, the processing module of the reference device RD encrypts the message with a private key from the set of the private keys stored in the memory module, and forwards to the second device D2 the message via the communication module;
(E') upon reception by the communication unit of the second device D2 of the error notification sent by the reference device RD according to step (C1'), the processing unit of the second device D2 transfers the second device selected verifiable data D2SVD stored apart in its memory into the set of its verifiable data;
(F') upon reception by the communication unit of the second device D2 of the message with the signed transfer receipt forwarded by the reference device RD according to step (D5'), the processing unit of the second device D2 decrypts the message with a stored public key corresponding to the private key used by the reference device RD to encrypt the message, verifies whether the signatures on the transfer receipt are valid and there is no timeout from the first, reference device and second timestamp data, and that the proof of inclusion PR2 is valid; and,
(F1') in case a signature is not valid or there is timeout or the received proof of inclusion PR2 is not valid, the second device D2 sends to the reference device RD a corresponding error notification via its communication unit, the transfer of data to said first device D1 is cancelled, and the reference device RD forwards said error notification to the first device D1; and
(F2') in case the signatures are valid, and there is no timeout, and the received proof of inclusion PR2 is valid, the second device D2 deletes the second device selected verifiable data D2SVD stored apart in its memory, further generates a proof PR3 of that deletion, incorporates the generated proof of deletion PR3 into the signed transfer receipt, encrypts with one of its private keys the message including the signed transfer receipt, and forwards to the reference device RD the encrypted message; and
(G') upon reception by the communication module of the reference device RD of the message with the signed transfer receipt forwarded by the second device D2 according to step (F2'), the processing module of the reference device RD decrypts the message with a public key corresponding to the private key used by the second device D2 for encrypting the message, verifies whether the signatures on the transfer receipt are valid, whether there is no timeout from the first, reference device and second timestamp data, and whether the received proof of deletion PR3 in the signed transfer receipt is valid; and
(G1') in case a signature on the signed transfer receipt is not valid, or there is timeout, or the received proof of deletion PR3 is not valid, the reference device RD sends to the second device D2 and the first device D1 a corresponding error notification via its communication module, the transfer of data between said first device D1 and second device D2 is cancelled; and
(G2') in case the signatures on the signed transfer receipt are valid, and there is no timeout from the first, reference device and second timestamp data, and the received proof of deletion PR3 is valid, the processing module of the reference device RD further signs the signed transfer receipt, encrypts the further signed transfer receipt with one of the private keys stored in the memory module, and forwards via the communication module to the first device D1 and the second device D2 the encrypted further signed transfer receipt.

According to a variant of the invention, respectively at step (C) or (C') of the above methods, in case the internal rules of the received second device selected verifiable data D2SVD specify a use of verifiable credentials of respectively the owner of the first device D1 or the second device D2, the reference device RD further checks a compliance of the verifiable credentials respectively of the owner of the first device D1 or the second device D2 with said internal rules, respectively by communicating with said first or second devices via a credential-sharing protocol.
Examples of known credential sharing protocols: Indy Anoncreds (ZKP)(see, for example, [17]), W3C CHAPI (non-ZKP)(see, e.g., [18]), DIF credential manifest (either ZKP or non-ZKP) (Credential Manifest is a specification being developed within the Decentralized Identity Foundation (DIF), and intended for ratification as a DIF recommended data format).

A possible representation of the verifiable data in the memory of a device may use a Merkle tree, to clearly detect and prove a change from a "normal section" storage to a "busy section" storage, as mentioned above. A Merkle tree presents the advantage of being practically unfalsifiable due to the multiple levels of hashing to create its nodes (from the leaf nodes up to the root node). Thus, in the above method wherein each verifiable data of the set of verifiable data of a device are associated with respective leaf nodes of a Merkle tree corresponding to said device, each leaf node corresponding to a hash value obtained by hashing corresponding associated verifiable data with a hash function, the Merkle tree comprising intermediate nodes up to a root node of the tree corresponding to a root value of the tree calculated according to a hashing scheme of the Merkle tree, the Merkle tree being stored in the memory of the device;
- the processing unit of the device is adapted to perform a modification of the set of verifiable data stored in its memory, corresponding to a removal of given verifiable data from the set, by selecting nodes of the stored Merkle tree corresponding to each given verifiable data to be removed from the stored set of verifiable data, replacing each removed verifiable data by corresponding piece of placeholder data and hashing with the hash function each piece of placeholder data to obtain corresponding placeholder leaf node value, forming a new Merkle tree from the stored Merkle tree by replacing the selected leaf nodes by the respectively corresponding placeholder leaf nodes to obtain a first part of the leaf nodes of the new Merkle tree and adjoining to said first part a distinct second part of leaf nodes respectively corresponding to the selected leaf nodes of the Merkle tree, as stored apart leaf nodes, and calculating new intermediate nodes of the new Merkle tree up to a new root node of the new Merkle tree having said first and second parts of leaf nodes by using the hash function according to the hashing scheme, and storing in the memory of the device the new Merkle tree;
- the processing unit of the device is adapted to generate a proof that the modification of the set of verifiable data stored in its memory, corresponding to execution of an operation performed by the device using the operation parameter data values of the given verifiable data, by sending to the reference device the new root node value of the new Merkle tree together with root verification data respectively comprising the values of the new placeholder nodes and the values of new intermediate nodes of the new Merkle tree that have been modified with respect to the Merkle tree and that are necessary to retrieve the new root value with the hash function according to the hashing scheme; and
- the processing module of the reference device is adapted to verify that a new root node value of a new Merkle tree received from the device together with corresponding root verification data, as a proof of performance of the operation by the device, matches a test root node value calculated from the received root verification data, thereby performing a verification that the device has performed the operation;
- in case of deletion of the verifiable data corresponding to the stored apart leaf nodes of the new Merkle tree, a resulting updated Merkle tree is obtained by calculating respective values of its updated intermediate leaf nodes up to its updated root node with the hash function according to the hashing scheme only from the first part of the leaf nodes of the new Merkle tree, the updated root node value of the updated Merkle tree together with corresponding updated root verification data constituting a proof of said deletion of the verifiable data;
- in case of inclusion of specific verifiable data in a set of verifiable data stored as an initial Merkle tree in a memory of a device, corresponding values of additional leaf nodes are calculated with the hash function from each included specific verifiable data, and a corresponding final Merkle tree is calculated from the values of the leaf nodes of the initial Merkle tree and the values of the additional leaf nodes according to the hashing scheme, the resulting root node value of said final Merkle tree together with resulting root verification data constituting a proof of said inclusion of the specific verifiable data; and
- the processing units of the devices and the processing module of the reference device being adapted to calculate node values of a Merkle tree with a programmed hash function and hashing scheme, and calculate a root value from root verification data.

In the above method according to the invention, at step (B2) or step (B2'), respectively, the processing unit of the second device may:
- generate a new symmetric encryption key K and encrypt a specific control field of each selected verifiable data D2SVD with said generated key K;
- encrypt the generated key K so it can be decrypted with a public cryptographic key of the first device D1; and
- further incorporate in the message the encrypted key K together with each encrypted specific control field.

Moreover, at step (C2) or step (C2'), respectively, upon reception from the reference device RD of the message including the second device selected verifiable data D2SVD and the signed transfer receipt, the processing unit of the first device may decrypt the encrypted key K with a first device's corresponding private key stored in its memory to obtain the encryption key K, and decrypt each encrypted control field of the second device selected verifiable data D2SVD in the received message with the key K, thereby allowing the first device D1 to access control field data of the second device D2 without that data being revealed to the reference device RD.

In the above method according to the invention, at step (B) or step (B'), respectively, after having decrypted the received message and before verifying that the signature of the received transfer receipt is valid, that there is no timeout, the second device D2 may perform a further level of authentication of, respectively, the first device D1 or the reference device RD by performing a step of challenge-response communication with, respectively, the first device D1 or the reference device RD, and only upon reception by the second device D2 of a correct response received from, respectively, the first device D1 or the reference device RD, to a challenge sent to it by the second device D2, the processing unit of the second device D2 then may verify that the signature on the received transfer receipt is valid, that there is no timeout from the first timestamp data of the message, and in case the response to the challenge is erroneous the transfer of data with the first device D1 is cancelled.

According to a further variant of the above method,
- each DID of an owner of a device may include a corresponding unique identifier (UID) of the owner of said device delivered by an Identity Server (IS) in response to a one-time enrollment setup of the owner of the device with the Identity Server,
- each device may be adapted to communicate via the communication network with an Escrow Server (ES) and each owner of a device can perform one-time enrollment setup with the Escrow Server by sending it via said device a request containing its unique identifier and a cryptographic commitment to a link secret of the device, upon reception of the request the Escrow Server may create a corresponding Entropy Test Vector (ETV) as a chunk of bytes generated by a random number generator, a corresponding pair of asymmetric encryption keys (OK_{pub}, OKₚᵣᵢᵥ), determine a corresponding shielded profile (SP) obtained by first encrypting the received unique identifier (UID) with the private key OKₚᵣᵢᵥ and then encrypting the Entropy Test Vector and encrypted unique identifier with the private key OKₚᵣᵢᵥ, store the obtained triplet (OK_{pub}, SP, UID), and deliver to the device an anonymous verifiable credential C_{ES} containing the triplet (OK_{pub}, SP, UID) and the cryptographic commitment to the device's link secret, the Escrow Server may be adapted to communicate with the Identity Server via the communication network and request the Identity Server to confirm that a unique identifier (UID) received by the Escrow Server from a device is indeed owned by the owner of said device,
- each device may be adapted to communicate via the communication network with a Governance Server (GS) and each owner of a device can perform one-time enrollment setup with the Governance Server by first establishing via his device a session with the Governance Server during which the device uses an ephemeral DID and the Governance Server is authenticated, the Governance Server may then challenge the device to produce a proof of enrollment of its owner with the Escrow Server (ES) and, as a response, the device may generate a proof based on the anonymous verifiable credential C_{ES} delivered by the Escrow Server and send the proof to the Governance Server, upon reception of the proof the Governance Server may deliver to the device a plurality of Single-Use Identity Tokens and corresponding verifiable credential C_{GS}, each delivered Single-Use Identity Token (SUIT) being a string that can be used to look up the device's public key OK_{pub}, the delivered verifiable credential C_{GS} containing one field for each delivered Single-Use Identity Token (SUIT) and the cryptographic commitment to the link secret of the device,
- in case a device A of the plurality of devices communicates with a device B of the plurality of devices by using a never-before-seen DID,
   - the device B may then challenge the device A to prove that the owner of device A is enrolled with the Governance Server by revealing one of the Single-Use Identity Tokens SUITs delivered to the device A by the Governance Server in the corresponding verifiable credential C_{GS},
   - in response, the device A may produce a Zero-Knowledge Proof
      based upon the verifiable credential C_{GS} that reveals one of the corresponding Single-Use Identity Tokens SUIT, and
   - the device B may record the revealed Single-Use Identity
Tokens SUIT in the signed transfer receipt generated by the device A.

Another aspect of the invention relates to a system for controlling a plurality of devices via a reference device to making the devices cooperate to perform a task, each device being owned by a corresponding owner, each device being equipped with a processing unit with a memory and a communication unit, and adapted to execute operations necessary to perform the task, the memory of each device storing a corresponding set of cryptographic private keys of the owner of the device, a decentralized identifier (DID) of its owner associated with a set of public cryptographic keys respectively corresponding to the private keys, a programmed method of authentication of the other devices and the reference device adapted to run on the processing unit of the device, the sets of public cryptographic keys of the other devices, a set of verifiable data, with corresponding operation parameter data values and associated internal rules necessary to perform the task, and verifiable credentials of the owner of the device, the communication units of the devices being adapted to securely communicate with each other via a wireless or wired communication network, the reference device being equipped with a processing module, a memory module and a communication module and being adapted to securely communicate with each device communication unit via the wireless or wired communication network, the reference device and the devices being adapted to transfer data using encryption protocols, the memory module of the reference device storing a corresponding set of cryptographic private keys of a reference owner of the reference device, and a corresponding decentralized identifier data (DID) and a set of public cryptographic keys respectively corresponding to the reference device private keys, and the set of public cryptographic keys of each device of said plurality of devices, the reference device and each device being adapted to digitally sign with their corresponding private keys a transfer receipt, and the memory of each device further storing the set of public cryptographic keys of the reference device, a processing unit clock of each device is synchronized with a processing module clock of the reference device RD, and each device and the reference device RD are adapted to include timestamp data in a transfer receipt and verify whether there is timeout from time stamp data in a received transfer receipt, the system being characterized in that the devices and the reference device are adapted to perform the steps of the method according to the invention.

Particularly, in case the above system is adapted to implement the steps of the above mentioned further variant of the method of the invention, said system may further comprise:
- an Identity Server IS adapted to communicate with the devices via the communication network and deliver to a device, in response to a one-time enrollment setup of the owner of the device with the Identity Server, a corresponding unique identifier UID of said owner to be associated with the decentralized identifier data DID of the owner of the device,
- an Escrow Server ES adapted to communicate with the devices via the communication network and perform a one-time enrollment of the owner of a device, upon reception from that device of a request containing the unique identifier UID of its owner and a cryptographic commitment to a link secret of said device, by
   - creating a corresponding Entropy Test Vector (ETV) as a chunk of bytes generated by a random number generator, a corresponding pair of asymmetric encryption keys (OK_{pub}, OKₚᵣᵢᵥ), determining a corresponding shielded profile (SP) obtained by first encrypting the received unique identifier (UID) with the private key OKₚᵣᵢᵥ and then encrypting the Entropy Test Vector and encrypted unique identifier with the private key OKₚᵣᵢᵥ, storing the obtained triplet (OK_{pub}, SP, UID), and delivering to the device an anonymous verifiable credential C_{ES} containing the triplet (OK_{pub}, SP, UID) and the cryptographic commitment to the device's link secret, the Escrow Server being adapted to communicate with the Identity Server via the communication network and request the Identity Server to confirm that a unique identifier (UID) received by the Escrow Server from a device is indeed owned by the owner of said device,
- a Governance Server GS adapted to communicate with the devices via the communication network and perform a one-time enrollment setup of the owner of a device, upon establishment by said device of a session with the Governance Server during which the device uses an ephemeral DID and the Governance Server is authenticated, the Governance Server then challenging the device to produce a proof of enrollment of its owner with the Escrow Server (ES) and, as a response, the device generating a proof based on the anonymous verifiable credential C_{ES} delivered by the Escrow Server and sending the proof to the Governance Server, and upon reception of the proof the Governance Server delivering to the device a plurality of Single-Use Identity Tokens and corresponding verifiable credential C_{GS}, each delivered Single-Use Identity Token (SUIT) being a string that can be used to look up the device's public key OK_{pub}, the delivered verifiable credential C_{GS} containing one field for each delivered Single-Use Identity Token (SUIT) and the cryptographic commitment to the link secret of the device, and
- wherein, in case a device A of the plurality of devices communicates with a device B of the plurality of devices by using a never-before-seen DID,
   - the device B then challenges the device A to prove that
      the owner of the device A is enrolled with the Governance Server GS by revealing one of the Single-Use Identity Tokens SUITs delivered to the device A by the Governance Server in the corresponding verifiable credential C_{GS}, and
   - in response, the device A produces a Zero-Knowledge Proof
      based upon the verifiable credential C_{GS} that reveals one of the corresponding Single-Use Identity Tokens SUIT, and
   - the device B records the revealed Single-Use Identity
Tokens SUIT in the signed transfer receipt generated by the device A.

The present invention will be described more fully hereinafter with reference to the accompanying drawings in which like numerals represent like elements throughout the different figures, and in which prominent aspects and features of the invention, in no way limiting, are illustrated.

### BRIEF DESCRIPTION OF DRAWINGS

**Fig.1** schematically illustrates how interconnected devices execute operations necessary to perform an assigned task according to an embodiment of the invention.
**Fig.2** schematically illustrates another embodiment of the invention, with improved security with respect to intrusion in the operations performed by cooperating devices.

### DETAILED DESCRIPTION

According to an embodiment of the invention, a plurality of drones (devices) D1,D2,...,DN respectively belonging to owners OW1,OW2,..., are cooperating to perform a complex task: e.g. deliver specific equipment at different places in a specified area while detecting suspicious movements and/or carrying out a video surveillance in said area. Each drone Di (i = 1,..., N) is equipped with a processing unit coupled with a memory and a communication unit, and has a motor coupled to rotor blades to propel the drone and make it to operate above the area. Each drone is also equipped with a power source (battery) to power its processing unit as well as its motor. A drone may further be equipped with sensor(s) (e.g. light sensor, thermal sensor, barometric or radar altimeter etc. adapted to the task) and a camera (with image processing capabilities), that are controlled via its processing unit. The memory of each drone Di (i = 1,..., N) stores a set of verifiable data, each verifiable data of the set comprising corresponding operation parameter data values and associated internal rules that must be used by the drone Di to execute a corresponding (programmed) operation being part of a task to be performed by the drones. The memory of each drone Di (i = 1,..., N) owned by a corresponding owner OWi (i = 1,..., N) also stores a corresponding set of unique private cryptographic keys belonging to said owner OWi, a corresponding unique decentralized identifier (DID, see for example ref.[13]) of the owner OWi, associated with a set of public cryptographic keys respectively corresponding to the stored private keys, and verifiable credentials (see, for example, ref.[14]) of the owner OWi. The memory of each drone further stores the respective sets of public keys of the other drones. The cooperation of the plurality of drones to perform the complex task necessitates that the drones are capable to exchange data and execute different operations using exchanged data while carrying out said task. However, as the environment in which the drones are evolving is untrusted (or even hostile), particularly regarding possible intrusion during exchange of data (to divert or corrupt data, or to sabotage execution of the task), it is imperative to secure data exchanges and correctly identify the parties exchanging data while minimizing the amount and criticality of the data exchanged to prevent critical data diversion/corruption by an intruder. It is particularly important that only devices (including the reference device) belonging to authorized owners can cooperate to perform the task. During performance of the task, the drones can be flown by their owners (via wireless communication network), or can use pre-programmed fly instructions (stored in their memories and managed by their processing units).

According to the invention, each drone Di (i = 1,..., N) stores in its memory a set of verifiable data, each element of the set, and particularly the operation parameter data values of the element, can be used to allow the drone to execute some operation necessary to perform the task. The memory of each drone Di also stores, associated with each stored verifiable data, corresponding internal rules with which said verifiable data must comply during execution of said operation. During performance of any operation necessary to carry out the task, based on data exchanged with other drone(s), the internal rules associated with each verifiable data of a set of verifiable data can be modified, and can be used to prove correct execution of the operation. Thus, the communication units of the drones are adapted to securely communicate with each other via a wireless communication network, and the memory of each drone Di (i = 1,..., N) further stores a programmed method of authentication of the other drone(s) adapted to run on its processing unit. The control of the plurality of drones is carried out via a reference drone RD (reference device). The reference drone RD is owned by a reference owner RW and is equipped with a processing module coupled with a memory module and a communication module, and has a motor coupled to rotor blades to propel the reference drone and make it to operate above the area (together with the other drones). The reference drone RD is also equipped with a power module (battery) to power its processing module as well as its motor. The reference drone may also be equipped with various sensor(s) adapted to the task and a camera (with image processing capabilities), that are controlled via its processing module. The memory module of the reference drone RD stores a corresponding set of unique private cryptographic keys belonging to the reference owner RW, associated with a corresponding unique decentralized identifier (RW-DID) of the reference owner RW, a set of public cryptographic keys respectively corresponding to its stored reference owner's private keys, and verifiable credentials of the reference owner RW. The memory module also stores the respective sets of public keys of each drone Di (i = 1,..., N). Preferably, the memory module stores the DIDs of each drone rather than storing the public keys. More preferably, the memory of any drone also stores the respective sets of public keys of the other drone and of the reference drone. The DIDs are then used to resolve the public keys just in time. The advantage being that the DIDs thus permit key rotation without invalidating the knowledge stored in peer drones.

The reference drone RD is also adapted to securely communicate (via its communication module) with each drone communication unit via a wireless communication network (here, RD uses the same communication link as for the communications between drones). The reference drone RD and the communication units of the drones Di (i = 1,..., N) are adapted to transfer data using encryption protocols. The reference drone RD and each drone Di are further adapted to digitally sign, with their corresponding private keys, a transfer receipt for exchange of data. The memory of each drone Di (i = 1,...,N) further stores the set of public keys corresponding to the private keys belonging to the reference owner RW of the reference drone RD. Moreover, the processing unit of each drone is equipped with a clock, the processing module of the reference drone is also equipped with a clock, and the processing unit clock of each drone is synchronized with the processing module clock of the reference drone RD. Each drone and the reference drone RD are adapted to include timestamp data in a transfer receipt and verify whether there is timeout from time stamp data in a received transfer receipt.

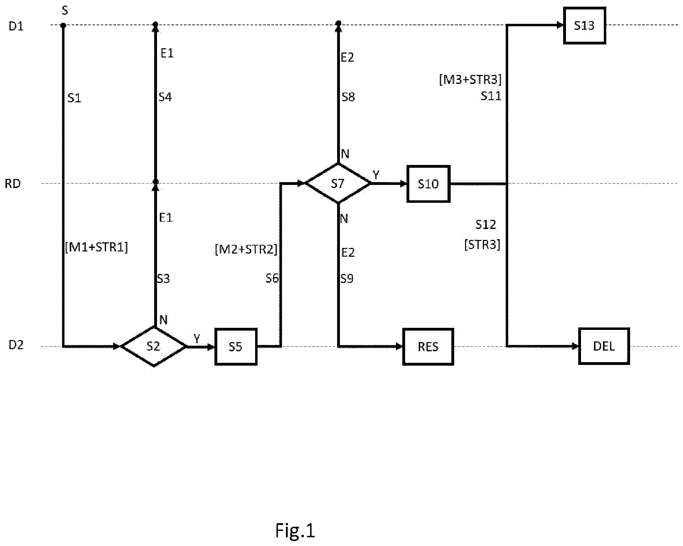

Fig.1 schematically illustrates a typical secure exchange of data between two specific drones, e.g. D1 and D2 respectively owned by owner OW1 and OW2, controlled via the reference drone RD, to execute operations necessary to perform the task according to the above embodiment. Typically, in case a drone D1 communicates with a drone D2 to execute an operation OP: the drone D1 creates a message M1 for the drone D2, the message M1 including a transfer receipt containing data specifying the operation OP to be performed by D2, the data indicating specific operation parameter data values that must be used by D2 to execute the operation, together with first timestamp data TS1. The transfer receipt also includes the respective DIDs of the drone D1, the drone D2 and the reference drone RD (together with the given operation parameter data values for the operation OP). Then, the processing unit of D1 signs a transfer receipt TR1 for the transfer of the message M1, and thus produces a corresponding signed transfer receipt STR1 and stores STR1 in its memory, attaches the signed transfer receipt STR1 to the message M1 and encrypts the message M1 (including STR1) with a private key selected from the set of private keys stored in its memory (belonging to its owner OW1). The drone D1 then starts (S) the exchange by sending to the drone D2 (via its communication unit over the wireless communication network), at step S1, the encrypted message M1 including the signed transfer receipt STR1, shown on Fig.1 with the symbolic representation [M1+STR1]. Encryption is used to protect the content of the message M1, but also will serve to authenticate D1 before D2 (as the sender of the message).

Upon reception by the communication unit of D2 of the encrypted message including the signed transfer receipt [M1+STR1] from D1, the processing unit of D2 performs the step S2, i.e.:
- authenticates the sender of the received message as being the drone D1 belonging to the (authorized) owner OW1 (in short, D2 authenticates D1) by decrypting the received message with the public cryptographic key of (the owner OW1 of) D1 that corresponds to the private key (of the owner OW1 of D1) used by D1 for encrypting M1 (this public key is part of the set of public keys of D1 that are stored in the memory of D2). Alternatively, the processing unit of D2 may use a shared symmetric key negotiated with the private key of D1.
- verifies whether the signature on the received (and decrypted) signed transfer receipt STR1 is valid according to the conventional signature verification scheme, i.e. checks the data integrity of the signed transfer receipt by using the decrypted signature (decrypted with the above mentioned public key of D1), extracting the hash value of the transfer receipt data contained in the decrypted signature and comparing this extracted hash value with a calculated hash value of the decrypted transfer receipt data: if these two hash values match, the signature is valid and data integrity of the transfer receipt is ensured. D2 also verifies whether there is no timeout from the first timestamp data TS1 of the received (and decrypted) signed transfer receipt STR1; and then,
- in case authentication of D1 fails, i.e. decryption is not possible with a public key (stored in the memory of D2) corresponding to a private key used by D1 for encrypting the message, or the signature on the received signed transfer receipt STR1 is not valid (i.e. cannot be attributed to the owner OW1 of the device D1 authenticated at decryption stage) or there is timeout from the first timestamp data TS1 extracted from the decrypted signed transfer receipts STR1, then D2 performs step S3 of sending to the reference drone RD a corresponding error notification E1 via its communication unit, and cancelling the transfer of data with D1. Upon reception of the error notification E1 from D2, the reference drone RD performs the step S4 of forwarding the received error notification E1 to D1 via its communication module, and
- in case authentication of (the owner OW1 of) D1 by D2 succeeds, and the signature on the signed transfer receipt STR1 is valid, and there is no timeout from the timestamp data TS1, then D2 stores the signed transfer receipt STR1 in its memory and performs the step S5, i.e.
- the processing unit of D2 selects, among the set of verifiable data D2VD stored in the memory of D2, verifiable data D2SVD of which corresponding operation parameter data values match the specific operation parameter data values specified in the received signed transfer receipt STR1 (these parameter data values must be used by D2 to execute the operation OP), and (possibly) updates the internal rules associated with the selected verifiable data D2SVD. This (possible) updating of the internal rules by D2 allows to adapt some of the rules concerning the very operation OP to be executed.
- D2 performs the operation OP by using the selected verifiable data D2SVD and the corresponding operation parameter data values. Accordingly, the processing unit of D2 modifies the set of verifiable data D2VD stored in its memory (including corresponding internal rules) by removing from the stored set of verifiable data the selected verifiable data D2SVD used to execute the operation OP, and storing apart in the memory of D2 said selected verifiable data D2SVD: thus, D2SVD is no more stored as an element of the original set of verifiable data (i.e. before execution of the operation OP) and is now stored apart in a "busy section" of the memory.
- the processing unit of the drone D2 generates a proof PR1 that the operation OP has been performed. The proof PR1 in fact demonstrates a storage in a new "busy section" of the memory of (the stored apart) D2SVD as well as a storage of the modified set of verifiable data D2VD', with respect to the previous storage in a "normal section" of the memory of the previous original set of verifiable data D2VD. This proof PR1 shows that the verifiable data of which corresponding operation parameter data values have been used to execute the operation OP have been removed from the set of verifiable data and thus, these verifiable data will not be potentially reused for another operation (according to the programmed operations necessary to perform the task). The processing unit of D2 includes the proof PR1 in the (decrypted) signed transfer receipt STR1 together with second timestamp data TS2, and further signs the resulting signed transfer receipt, thus producing a signed transfer receipt STR2. The processing unit of D2 then stores STR2 in the memory of D2 and incorporates the selected verifiable data D2SVD into the message M1 together with the signed transfer receipt STR2, thus producing a message M2. The processing unit of D2 encrypts the message M2 with one of its private keys; then,
- D2 performs the step S6 of forwarding to the reference drone RD the encrypted message M2 including the signed transfer receipt STR2 via its communication unit, as represented symbolically on Fig.1 by [M2+STR2].

Upon reception by the communication module of the reference drone RD of the encrypted message with the signed transfer receipt [M2+STR2] from D2, the processing module of the reference drone RD performs the step S7, i.e.:
- the processing module of the reference drone RD authenticates the owner OW2 of D2 (in short, authenticates D2) as being the sender of the received message [M2+STR2] by decrypting the received message with the public cryptographic key of D2 that corresponds to the private key used by D2 for encrypting M2 (this public key is part of the set of public keys of the drones that are stored in the memory module of RD);
- verifies whether the signatures on the (decrypted) signed transfer receipt STR2 (i.e. the signatures of D1 and D2) are valid (i.e. checks data integrity of the transfer receipt STR2, as explained above regarding step S2) and that there is no timeout from the most demanding time constraint of the first timestamp data TS1 and the second timestamp data TS2 in STR2;
- verifies whether the proof PR1 is valid (i.e. corresponds with a storage apart of D2SVD), and whether the received verifiable data D2SVD comply with the associated (updated) internal rules; and then,
- in case a signature is not valid on STR2 or there is timeout from the decrypted message M2 or the first proof PR1 is not valid or the verifiable data D2SVD do not comply with the associated internal rules, the reference drone RD sends to the drone D1, at step S8, and the drone D2, at step S9, a corresponding error notification E2 via its communication module and the transfer of data between D1 and D2 is cancelled, and
- in case the signatures on STR2 are valid, there is no timeout, the proof PR1 is valid, and the verifiable data D2SVD comply with the associated internal rules, the processing module of the reference drone RD performs the step S10 of recording in the memory module the signed transfer receipt STR2 (including the proof PR1) with data indicating that the first proof PR1 is valid and the verifiable data D2SVD comply with the associated internal rules, further signs the transfer receipt STR2 to produce the signed transfer receipt STR3, stores the signed transfer receipt STR3 in the memory module, attaches the signed transfer receipt STR3 to the (decrypted) message M2 thus producing a message M3, encrypts with one of its private keys stored in the memory module the message M3, and the reference drone RD performs the step S11 of forwarding to the drone D1 the encrypted message M3 including the signed transfer receipt STR3 via its communication module, as represented on Fig.1 by [M3+STR3]. The reference drone RD further performs the step S12 of encrypting the signed transfer receipt STR3 (with one of its private keys stored in the memory module) and forwarding to the drone D2 the encrypted signed transfer receipt STR3, shown as [STR3] on Fig.1, via its communication module, thereby indicating to D2 that the verifiable data D2SVD (stored apart in the memory of D2) must be deleted.

upon reception by the communication unit of the drone D1 of the encrypted message with the signed transfer receipt [M3+STR3] from the reference drone RD, the processing unit of the drone D1 performs the step S13, i.e.
- the processing unit of D1 decrypts the encrypted message M3 with the public key of the reference drone RD (stored in the memory of D1) corresponding to the private key used by RD for encrypting the message M3, and stores the (decrypted) signed transfer receipt STR3 in the memory of D1; and
- the drone D1 includes in its set of verifiable data D1VD (stored in the memory of D1) the verifiable data D2SVD received in the (decrypted) message M3, thus generating its new set of verifiable data D1VD'. At this stage, the drone D1 has modified its set of verifiable data after the drone D2 has indeed performed the operation OP required in the first message M1 sent by D1, as verified by the reference drone RD. Preferably, the drone D1 further generates a proof of the inclusion of the verifiable data D2SVD into its set of verifiable data, and stores the generated proof in its memory.

Upon reception by the communication unit of the drone D2 of the error notification E2 from the reference drone RD at step S9, the processing unit of the drone D2 performs the step RES of restoring the stored apart verifiable data D2SVD into its set of verifiable data (and then deleting the stored apart D2SVD), thus retrieving its original set of verifiable data D2VD. Thereby only the original set of verifiable data D2VD remains in the memory of D2 (transfer of data between D1 and D2 failed, and thus operation OP has not been executed).

Upon reception by the communication unit of the drone D2 of the encrypted signed transfer receipt STR3, sent by the communication module of the reference drone according to step S12, the processing unit of the drone D2:
- decrypts the encrypted signed transfer receipt STR3 with the public key of the reference drone RD (stored in the memory of D2) corresponding to the private key used by RD for encrypting the signed transfer receipt STR3, thus authenticating the reference drone RD as the sender of the signed transfer receipt STR3, and stores the signed transfer receipt STR3 in the memory of D2; and
- the processing unit of the drone D2 performs the step DEL of deleting the selected verifiable data D2SVD stored apart in the memory of D2 (the "busy section" of the memory is deleted), thus updating the memory state of D2 by having only the (modified) set of verifiable data D2VD' stored in its memory, and indicating that the transfer of data between D1 and D2 has been successful and the operation OP have been executed accordingly. Moreover, the drone D2 generates a proof of such deletion of the stored apart D2SVD and stores the generated proof in its memory.
In case D2 does not perform the above step DEL of deleting the verifiable data D2SVD stored apart in its memory, then the reference drone RD will immediately detect this anomaly when D2 will have to perform a further operation (e.g. via a communication with another drone) as the "initial" storage in a "normal section" of the set of verifiable data of D2 indicating D2VD' plus the stored apart D2SVD (i.e. the original D2VD, before the data exchange with D1) will contradict the storage state of D2 according to the previously signed transfer receipt STR2 containing the proof PR1 indicating that the new "normal section" must correspond to only the stored set of verifiable data D2VD' (i.e. the final approved storage state according to the proof generated by D2 and stored in its memory). Thanks to the delivery (and storage) of the signed transfer receipt with the proof by D2 (for each operation), the reference drone can immediately detect any inconsistency between successive proofs delivered by D2 (or any other drone). Thus, the new normal storage section in the memory of D2 of the set of verifiable data for the further operation must contain the verifiable data D2VD' and not the verifiable data D2VD. As a result, the reference drone will cancel any further transfer of data between D2 and the another drone. Consequently, the erroneous storage state of the verifiable data of D2 will not propagate errors via transfers with other drones.

In a preferred variant of the invention, the processing units of the respective drones Di (i = 1,..., N), and the processing module of the reference drone RD, are adapted to calculate with a programmed hash function H (e.g. a function of the SHA "Secure Hash Algorithm" class, for example a SHA-256 hash function) a hash value of data. In this variant, a drone is capable to provide a strong proof of execution of an operation and to clearly represent a corresponding change in the stored verifiable data. According to this variant, to each verifiable data VDi(k) (k = 1,..., p) of a drone Di (i = 1,...,N), i.e. to each corresponding operation parameter data values and associated internal rules, there is an associated leaf node Ai(1,k) (k = 1,..., p) of a Merkle tree, the Merkle tree being stored in the memory of the drone (see ref. [15] or [16]). Each leaf node value Ai(1,k) of the Merkle tree of the drone Di is obtained by hashing with the hash function H the verifiable data VDi(k) associated with the leaf node: Ai(1,k) = H(VDi(k)) (k = 1,..., p). The Merkle tree of the drone Di also comprises intermediate nodes disposed at successive intermediate levels up to a root node Ri of the tree (the base level corresponds to the level of the leaf nodes). Each intermediate node value is obtained by hashing node values of the previous level according to the conventional hashing scheme of a Merkle tree: for example, the node Ai(2,1) of the level 2 (i.e. next to the leaf node level of the tree) is obtained as Ai(2,1) = H(Ai(1,1)+Ai(1,2)) = H(H(VDi(1))+H(VDi(2))) (here the symbol "+" indicates a concatenation of data), the next node Ai(2,2) of level 2 is obtained as Ai(2,2) = H(Ai(1,3)+Ai(1,4)) = H(H(VDi(3))+ H(VDi(4))), etc. The root node value Ri (i.e. the root value of the tree) is obtained as the hash value of the concatenation of the two node values of the penultimate level of the tree. Due to the cascade of concatenations and hashing involved in a tree, it is practically impossible to recalculate a correct root node value if any bit of digital data has been changed in a node (particularly, in a leaf node). The Merkle tree, as a representation of the set of verifiable data DiVD of the drone Di (DiVD = { VDi(k), k = 1,..., p }), is stored in the memory of the drone. According to the conventional verification scheme of a Merkle tree, a "verification path" only comprising a leaf node value and few intermediate node values (from the second level to the penultimate level of the tree) is sufficient to retrieve the root value with the hash function (according to the hashing scheme). Thus, the root node value Ri can finally be retrieved from any given leaf node value by hashing a concatenation of this leaf node value with only the intermediate node values constituting the corresponding verification path. The specific intermediate nodes of the verification path that must be used for retrieving the root value can be identified based on the hashing scheme of the Merkle tree. Consequently, the volume of data in the verification path that is necessary for retrieving the root node value is clearly much lower than the volume of data necessary for calculating the reference root node value based only on the leaf node values (i.e. by calculating all the non-leaf node values of the intermediate levels of the tree).

The Merkle tree, as a representation of the set of verifiable data of a drone, is stored in the memory of the drone. The processing unit of the drone is adapted to perform a modification of the set of verifiable data stored in its memory, as a representation of an execution by the drone of an operation using given verifiable data (corresponding to a removal of the given verifiable data from the set of verifiable data), by:
- selecting a leaf node of the stored Merkle tree associated with the given verifiable data (i.e. the selected verifiable data) to be removed from the stored set of verifiable data,
- removing the selected leaf node from the Merkle tree,
- replacing the verifiable data corresponding to the removed leaf node by a corresponding piece of placeholder data,
- hashing with the hash function the piece of placeholder data to obtain corresponding placeholder leaf node value, and
- forming a new Merkle tree (representing a new storage of the removed verifiable data in a "busy section" of the memory) from the stored Merkle tree by replacing the selected leaf node by the corresponding placeholder leaf node to obtain a first part of the leaf nodes of the new Merkle tree and then adjoining to said first part a distinct second part of leaf nodes respectively corresponding to the selected leaf node of the Merkle tree, and calculating new intermediate nodes up to a new root node of the new Merkle tree having said first and second parts of leaf nodes by using the hash function according to the hashing scheme. The obtained new Merkle tree is then stored in the memory of the device and represents by its very two-part structure of its leaf nodes the removing, and storing apart (via the second part of leaf nodes), of the given verifiable data from the stored set of verifiable data of the drone. The second part of the leaf nodes, together the intermediate nodes calculated from these leaf nodes, in fact represent the "busy section" part of the new Merkle tree. The first part of the leaf nodes, together with the intermediate nodes calculated from these leaf nodes, in fact represent the new "normal section" part of the new Merkle tree.

A processing unit of a drone can then generate a proof that execution of the operation OP has been performed by said drone by sending to the reference drone the new root node value of the new Merkle tree (resulting from a removal, and storing apart, of selected verifiable data from the set of verifiable data of the drone) together with root verification data comprising the values of the new placeholder nodes and the values of new intermediate nodes of the new Merkle tree that have been modified with respect to the Merkle tree and that are necessary to retrieve (i.e. recalculate) the new root value with the hash function according to the hashing scheme. The processing module of the reference device can then verify that the new root node value of the new Merkle tree received from the device together with corresponding root verification data (as a proof of performance of an operation by the device), indeed matches a test root node value calculated only from the received root verification data, thereby performing a further and strong verification test that the device has performed the operation.

In case of inclusion of specific verifiable data in a set of verifiable data stored as an initial Merkle tree in a memory of a drone (e.g. at the above mentioned step (S13)), a corresponding additional leaf node is added to the initial Merkle tree of which corresponding value is calculated with the hash function from the included specific verifiable data, and a corresponding final Merkle tree is calculated from the values of the leaf nodes of the initial Merkle tree and the value of the additional leaf node according to the hashing scheme, the resulting root node value of said final Merkle tree together with resulting root verification data constituting a proof (e.g. the proof PR2) of said inclusion of the specific verifiable data into the set of verifiable data of the drone. The resulting root verification data comprises the value of the additional leaf node and the values of intermediate nodes of the final Merkle tree that have been modified with respect to the initial Merkle tree and that are necessary to retrieve the root value of the final Merkle tree with the hash function according to the hashing scheme. In this case, the processing module of the reference drone RD (or the processing unit of any drone) can verify that the root node value of the final Merkle tree received from the drone together with corresponding root verification data (as a proof of performance of an operation by the drone), indeed matches a test root node value calculated only from the received root verification data, thereby performing a further and strong verification test that the drone has included the specific verifiable data in its set of verifiable data.

In case of deletion of verifiable data corresponding to a stored apart leaf node of the above mentioned new Merkle tree, a resulting updated Merkle tree (that no more contains said stored apart leaf node) is obtained by calculating respective values of its updated intermediate leaf nodes up to its updated root node with the hash function (according to the hashing scheme) only from the first part of the leaf nodes of the new Merkle tree, the updated root node value of the updated Merkle tree together with corresponding updated root verification data constituting a proof of said deletion of the verifiable data. For any given leaf node value, the updated root verification data further comprises the values of intermediate nodes of the updated Merkle tree that have been modified with respect to the new Merkle tree and that are necessary to retrieve the root value of the updated Merkle tree with the hash function according to the hashing scheme. In this case, the processing module of the reference drone can verify that the received root node value of the updated Merkle tree together with corresponding root verification data (as a proof of deletion of the verifiable data), indeed matches a test root node value calculated only from the received root verification data, thereby performing a further and strong verification test that the drone has deleted the stored apart verifiable data.

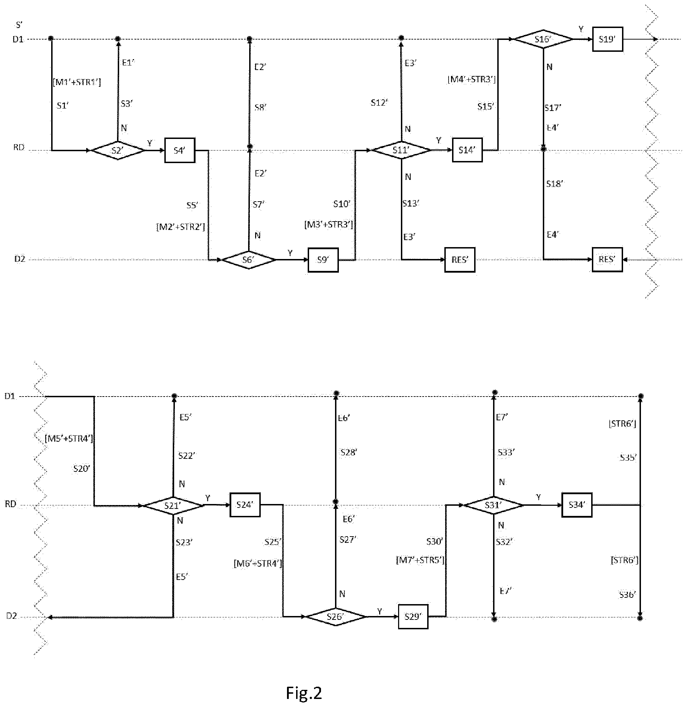

According to a preferred embodiment of the invention, schematically illustrated on Fig.2, still with the above-mentioned example with interconnected drones, the devices (resp. drones) do not communicate directly but only via the reference device (resp. reference drone), and the devices and the reference device systematically perform verification of data exchanged between them and authentication of (the owners of) the devices that are exchanging data. This embodiment has the advantage of providing an improved security for the exchanges of data and provide a better reliability in execution of operations by the devices together with better prevention of diversion/corruption of the exchanged data by an intruder.

Fig.2 schematically illustrates an example of secure exchange of data between two specific drones, e.g. D1 and D2 respectively owned by owner OW1 and OW2, as controlled via the reference drone RD, to execute operations necessary to perform the task according to the preferred embodiment. Here also, the processing unit of the drone D1 creates a message M1' for the drone D2, the message M1' containing data specifying an operation OP to be executed by D2, by using specified operations parameter data values contained in a corresponding transfer receipt TR1' together with first timestamp data TS1'. The processing unit of the drone D1 then signs a transfer receipt TR1' (for the transfer of the message M1') to produce a signed transfer receipt STR1', stores the signed transfer receipt STR1' in the memory of D1, includes the signed transfer receipt STR1' in the message M1', and encrypts the message M1' with a private key selected from the set of private keys stored in the memory of D1. The drone D1 then starts (S') the exchange by sending to the reference drone RD (via its communication unit), at step S1', the encrypted message M1' with corresponding signed transfer receipt STR1', also shown on Fig.2 with the symbolic representation [M1'+STR1'].

Upon reception by the communication module of the reference drone RD of the encrypted message with the transfer receipt [M1'+STR1'] from D1, the processing module of the reference drone RD performs step S2', i.e. authenticates the owner OW1 of D1 (in short, authenticates D1) as being the sender of the received message by decrypting the encrypted message M1' using a public cryptographic key of D1 (stored in the memory module of RD) corresponding to the private key of the owner OW1 of the first drone D1 used by the processing unit of D1 to encrypt the message M1'. The processing module of the reference drone RD also verifies whether the signature on the received transfer receipt STR1' is valid (i.e. corresponds to that of the drone D1, by checking the data integrity of the receipt STR1' by using the decrypted signature of D1), the processing module of RD further verifies whether there is no timeout from the first timestamp data TS1' of the (decrypted) signed transfer receipt STR1', and,
- in case authentication of the owner of D1 fails (i.e. decryption with any public key of OW1 fails), or the signature on the transfer receipt STR1' is not valid or there is timeout from TS1', the reference drone RD sends to D1, at step S3', an error message E1' via its communication module and the transfer of data between D1 and D2 is cancelled, and
- in case authentication of the owner OW1 of D1 succeeds (i.e. decryption possible with a public key, stored in the memory module of RD, corresponding to the private key of OW1 used by D1 for encryption of the message M1'), and the signature on the transfer receipt STR1' is valid (i.e. corresponds to that of D1), and there is no timeout from the first timestamp data TS1', at step S4' the processing module of the reference drone RD stores the signed transfer receipt STR1' in the memory module, includes a reference drone timestamp RDTS' in the (decrypted) signed transfer receipt STR1' to produce a signed transfer receipt STR2', stores STR2' in the memory module, attaches the signed transfer receipt STR2' to the (decrypted) message M1' to produce a message M2', encrypts the message M2' with a private key stored in the memory module to produce an encrypted message M2', and at step S5', sends to D2 the encrypted message M2' including the signed transfer receipt STR2' via its communication module, as represented by [M2'+STR2'] on Fig.2.

Upon reception by the communication unit of D2 of the encrypted message with the signed transfer receipt [M2'+STR2'] from the reference drone RD, the processing unit of D2 performs the step S6', i.e.:
- authenticates the reference drone RD as being the sender of the received message [M2'+STR2'] by decrypting this received message with a public cryptographic key of RD (stored in the memory of D2) that corresponds to the private key of the owner RW of the reference drone used by RD to encrypt M2' (this public key is part of the set of public keys of RW that are stored in the memory of D2), and then
- verifies whether the signature of D1 on the (decrypted) signed transfer receipt STR2' is valid (showing that D1 is the original sender of the message M2'), and
- whether there is no timeout from the first timestamp data TS1' and the reference drone timestamp data RDTS' of the received (and decrypted) signed transfer receipt STR2' in the message M2'; and then,
- in case authentication of (the owner RW of) RD fails as being the sender of the message M2' (i.e. decryption is not possible with any public key corresponding to the private key of RW used by RD to encrypt M1' and produce M2'), or the signature of D1 on the received signed transfer receipt STR2' is not valid or there is timeout from the first timestamp data TS1' or the reference drone timestamp data RDTS' extracted from the decrypted signed transfer receipt STR2', then D2 performs step S7' of sending to the reference drone RD a corresponding error notification E2' via its communication unit, and cancelling the transfer of data with D1. Upon reception of the error notification E2' from D2, the reference drone RD performs the step S8' of forwarding the received error notification E2' to the drone D1 via its communication module (thereby informing D1 that the transfer of data with D2 is cancelled), and
- in case authentication of the owner RW of the reference drone RD by D2 is successful (i.e., for short, authentication of the sender RD of the message M2' by D2), and the signature on the signed transfer receipt STR2' is valid, and there is no timeout from the timestamp data TS1' and the reference drone timestamp data RDTS', then D2 stores the signed transfer receipt STR2' in its memory and performs the step S9', i.e.
- the processing unit of D2 selects, in its stored set of verifiable data D2VD, verifiable data D2SVD' of which operation parameter data values match the specified operations parameter data values received in the (decrypted) signed transfer receipt STR2' of the message M2', and (possibly) updates the internal rules associated with the selected verifiable data D2SVD', and then the drone D2 execute the operation OP by using these selected verifiable data D2SVD'.

Once the operation OP is executed by D2, the processing unit of D2 removes the selected verifiable data D2SVD' from its set of verifiable data D2VD and stores apart in its memory these selected verifiable data D2SVD' (including the associated updated internal rules). This storage apart of the selected verifiable data D2SVD' corresponds to a storage of said D2SVD'in a "busy section" of the memory. The processing unit of D2 then generates a proof PR1 of that removal and storing apart of the selected verifiable data (because of execution of the operation OP by D2 based on D2SVD'). Preferably, the proof PR1 is based on a stored Merkle tree representation of the set of verifiable data of D2, as explained above, the proof PR1 being then the new root node value of the new Merkle tree (resulting from the removal, and storing apart, of the selected verifiable data D2SVD' from the Merkle tree representation of the set of verifiable data D2VD of the drone D2) together with root verification data comprising the values of the new placeholder nodes and the values of new intermediate nodes of the new Merkle tree that have been modified with respect to those of the Merkle tree and that are necessary to retrieve the new root value with the hash function according to the hashing scheme of the Merkle tree. The processing unit of the drone D2 then:
- includes the generated proof PR1 and second timestamp data TS2' (i.e. D2 timestamp data) into the (decrypted) signed transfer receipt STR2', further signs this signed transfer receipt to produce a signed transfer receipt STR3' and stores STR3' in the memory of D2,
- incorporates the selected verifiable data D2SVD' (including the possibly updated associated internal rules) into the message M2' together with the signed transfer receipt STR3' to produce a message M3', and
- encrypts the message M3' with one of the private keys stored in the memory of D2.
Then, the drone D2 performs the step S10' of sending to the reference drone RD the encrypted message M3' (including the signed transfer receipt STR3') via its communication unit. This is shown on Fig.2 as [M3'+STR3'].

Upon reception by the communication module of the reference drone RD of the encrypted message with the signed transfer receipt [M3'+STR3'] from D2, the processing module of the reference drone RD performs the step S11', i.e.:
- authenticates (the owner OW2 of) D2 as being the sender of the received message [M3'+STR3'] by successfully decrypting the received message M3' with a public cryptographic key of D2 that corresponds to the private key used by the processing unit of D2 to encrypt M3' (this public key is part of the set of public keys of the drones that are stored in the memory module of RD);
- verifies whether the signatures on the signed transfer receipt STR3' are valid (i.e. that the signatures of D1 and D2 are valid) and that there is no timeout from the first timestamp data TS1', the reference drone timestamp data RDTS', and the second timestamp data TS2' indicated in the (decrypted) signed transfer receipt STR3';
- verifies whether the proof PR1 is valid, and whether the received drone D2 (decrypted) selected verifiable data D2SVD' comply with the corresponding associated (possibly updated) internal rules; and then,
- in case a signature is not valid on STR3', or there is timeout from TS1' or RDTS' or TS2', or the first proof PR1 is not valid, or the received selected verifiable data D2SVD' do not comply with the associated internal rules, the reference drone RD sends to the drone D1, at step S12', and the drone D2, at step S13', a corresponding error notification E3' via its communication module and the transfer of data between D1 and D2 is cancelled, and
- in case the signatures on the (decrypted) signed transfer receipt STR3' are all valid, there is no timeout (from TS1' and RDTS' and TS2'), the first proof PR1 is valid, and the received selected verifiable data D2SVD' comply with the associated internal rules, the processing module of the reference drone RD performs the step S14' of recording in its memory module the signed transfer receipt STR3' (including the proof PR1) with data indicating that the proof PR1 is valid and the received selected verifiable data D2SVD' comply with the associated internal rules, encrypting the (decrypted) message M3' with a private key stored in the memory module to produce an encrypted message M4', and the reference drone performs the step S15' of forwarding to the drone D1 the encrypted message M4' (including the signed transfer receipt STR3') via its communication module, as represented on Fig.2 by [M4'+STR3'].

Upon reception by the communication unit of the drone D1 of the encrypted message with the signed transfer receipt [M4'+STR3'] from the reference drone RD, the processing unit of the drone D1 performs the step S16', i.e.
- the processing unit of D1 decrypts the encrypted message M4' with a public key of the reference drone RD (stored in the memory of D1) corresponding to the private key of RW used by the reference drone RD for encrypting the (decrypted) message M3' (and thus producing the encrypted message M4'), thus authenticating the reference drone RD as the sender of the message M4';
- verifies whether the signatures (of D1 and D2) on the transfer receipt STR3' are valid and whether there is no timeout from the timestamp data TS1', RDTS' and TS2' in the (decrypted) signed transfer receipt STR3' of the (decrypted) message M4'; and
- in case a signature on STR3' is not valid, or there is timeout (from TS1' or RDTS' or TS2'), the drone D1, at step S17', sends to the reference drone RD a corresponding error notification E4' via its communication unit, the transfer of data with the drone D2 is cancelled, and, at step S18', the reference drone RD forwards said error notification E4' to the drone D2 (thus indicating to D2 that the transfer of data with D1 is cancelled); and
- in case the signatures on the signed transfer receipt STR3' are all valid, and there is no timeout (from TS1' and RDTS' and TS2'), the processing unit of the drone D1, at step S19', stores the signed transfer receipt STR3' in the memory of D1, modifies its set of verifiable data D1VD stored in its memory to generate and store a new set of verifiable data D1VD' including the received selected verifiable data D2SVD' from drone D2 (the change in the set of verifiable data D1VD being a result of the validated execution of the operation OP by D2).

The processing unit of D1 then generates a proof PR2 of the inclusion of D2SVD' into its stored set of verifiable data. In case the stored set of verifiable data D1VD is represented via an "initial" Merkle tree (as explained above) stored in the memory of D1, the new set of verifiable data of D1 (after inclusion of D2SVD') is represented by a "final" Merkle tree having an additional leaf node calculated with the hash function of the Merkle tree from the included selected verifiable data D2SVD'. The final Merkle tree is calculated from the values of the leaf nodes of the initial Merkle tree and the value of the additional leaf node according to the hashing scheme of the Merkle tree, the resulting root node value of said final Merkle tree together with resulting root verification data constituting the proof PR2 of said inclusion of the selected verifiable data D2SVD' into the set of verifiable data of D1.

The processing unit of D1 then incorporates the generated proof of inclusion PR2 into the (decrypted) signed transfer receipt STR3' to produce a signed transfer receipt STR4' and stores STR4' in the memory of D1, removes the selected verifiable data D2SVD' from the (decrypted) message M4' and attaches the signed transfer receipt STR4' to this message, thus producing a message M5'. The processing unit of D1 then encrypts the message M5' with a private key stored in the memory of D1. The drone D1 sends to the reference drone RD, via its communication unit at step S20', the encrypted message M5' (including the signed transfer receipt STR4'), as shown on Fig.2 with [M5'+STR4'], thus indicating to the reference drone RD that the drone D1 has included the received D2SVD' into its set of verifiable data.

Upon reception by the communication module of the reference drone RD of the encrypted message with the signed transfer receipt [M5'+STR4'], the processing module of the reference drone RD performs the step S21', of
- authenticating (the owner OW1 of) D1 as being the sender of the received message [M5'+STR4'] by decrypting the received encrypted message M5' with a public cryptographic key of D1 that corresponds to the private key used by D1 for encrypting the message M5' (this public key is part of the set of public keys of the drones that are stored in the memory module of RD),
- verifying whether the signatures on the signed transfer receipt STR4' are valid,
- verifying whether there is no timeout from the received timestamp data TS1', RDTS' and TS2'(in the decrypted signed transfer receipt STR4' of the decrypted message M5'); and
- verifying whether the received proof of inclusion PR2 (in STR4') is valid; and then,
- in case a signature is not valid on STR4', or there is timeout from the timestamp data TS1' or RDTS' or TS2' in the (decrypted) signed transfer receipt STR4', or the proof of inclusion PR2 is not valid, the reference drone RD sends to the drone D1, at step S22', and to the drone D2, at step S23', a corresponding error notification E5' via its communication module, and the transfer of data between D1 and D2 is cancelled; and
- in case the signatures on STR4' are valid, there is no timeout from TS1' and RDTS' and TS2', and the proof of inclusion PR2 is valid, the processing module of the reference drone RD performs the step S24' of recording in its memory module the signed transfer receipt STR4' (including the proof of inclusion PR2) with data indicating that the proof of inclusion PR2 is valid, encrypting the (decrypted) message M5' with a private key stored in the memory module to produce an encrypted message M6', and performs the step S25' of sending to the drone D2 the encrypted message M6' (including the signed transfer receipt STR4') via its communication module, as represented on Fig.2 by [M6'+STR4'].

Upon reception by the communication unit of the drone D2 of the encrypted message with the signed transfer receipt [M6'+STR4'] sent by the reference drone RD according to step S25', the processing unit of D2 performs the step S26' of: decrypting the message M6' with a public key (stored in the memory of D2) corresponding to the private key used by the reference drone RD to encrypt the message M6', verifying whether the signatures on the transfer receipt STR4' (in the decrypted message M6') are valid and whether there is no timeout from TS1', RDTS' and TS2'(in the decrypted signed transfer receipt STR4' of the decrypted message M6'), and whether the received proof of inclusion PR2 is valid (in STR4'), and,
- in case a signature on STR2' is not valid, or there is timeout from TS1' or RDTS' or TS2', or the received proof of inclusion PR2 is not valid, the drone D2 sends to the reference drone RD, at step S27', a corresponding error notification E6' via its communication unit, the transfer of data with D1 is cancelled, and the reference drone RD forwards said error notification E6' to the drone D1 at step S28'.
- in case the signatures on STR2' are valid, and there is no time out (from TS1' and RDTS' and TS2'), and the received proof PR2 is valid, the drone D2 stores the signed transfer receipt STR4' (including the proof PR2) in its memory and performs the step S29', i.e.
- the processing unit of D2 deletes the selected verifiable data D2SVD' stored apart in its memory (only the new set of verifiable data D2VD' remains in the memory of D2), generates a proof PR3 of that deletion, incorporates the generated proof PR3 into the (decrypted) signed transfer receipt STR4' thus producing a signed transfer receipt STR5', stores the signed transfer receipt STR5' in the memory of D2, attaches the signed transfer receipt STR5' to the message M6' to produce a message M7', encrypts the message M7' with a private key stored in the memory of D2 to produce an encrypted message M7', and sends via its communication unit, at step S30', to the reference drone RD the encrypted message M7' (including the signed transfer receipt STR5'), shown as [M7'+STR5'] on Fig.2.

In case the stored set of verifiable data of the drone D2, having the stored apart selected verifiable data D2SVD', is represented as a "new" Merkle tree (as explained above), the deletion of the stored apart selected verifiable data D2SVD' (in the "busy section" part), corresponding to the stored apart leaf node of the new Merkle tree, creates a resulting "updated" Merkle tree obtained by calculating respective values of its updated intermediate leaf nodes up to its updated root node (calculated with the hash function according to the hashing scheme of the Merkle tree) only from the first part of the leaf nodes of the new Merkle tree. The updated root node value of the updated Merkle tree together with corresponding updated root verification data constituting a proof of said deletion of the selected verifiable data D2SVD'.

Upon reception by the communication module of the reference drone RD of the encrypted message with the signed transfer receipt [M7'+STR5'] sent by D2 according to step S30', the processing module of the reference drone RD performs the step S31', i.e.
- decrypts the message M7' with a public key corresponding to the private key used by D2 to produce the encrypted message M7';
- verifies whether the signatures on the signed transfer receipt STR5' are valid, whether there is no timeout from the timestamp data TS1', RDTS' and TS2' (in the decrypted signed transfer receipt STR5' of the decrypted message M7'), and whether the proof of deletion PR3 (in STR5') is valid, and
- in case a signature on the signed transfer receipt STR2' is not valid, or there is timeout from TS1' and RDTS' and TS2', or the deletion proof PR3 is not valid, the reference drone RD sends to D2, at step S32', and to D1, at step S33', a corresponding error notification E7' via its communication module, and the transfer of data between D1 and D2 is cancelled; and
- in case the signatures on the signed transfer receipt STR5' are valid, and there is no timeout from the timestamp data TS1' and RDTS' and TS2', and the proof of deletion PR3 is valid, the processing module of the reference drone RD performs the step S34' of:
- recording in its memory module the signed transfer receipt STR5' (including the proof PR3) with data indicating that the drone D2 has performed the deletion of the stored apart selected verifiable data D2SVD' from its memory,
- further signing the signed transfer receipt STR5' to produce a signed transfer receipt STR6' and storing the signed transfer receipt STR6' in the memory module,
- encrypting the signed transfer receipt STR6' with **a** private key stored in the memory module; and
the reference drone RD forwards to D1, at step S35', and to D2, at step S36', the encrypted signed transfer receipt STR6' via its communication module (represented symbolically on Fig.2 by [STR6']). The signed transfer receipt STR6' is a triply signed receipt: it is signed by D1, D2 and RD. In this embodiment, only a triply signed transfer receipt can ensure that the operation OP has been successfully executed.

Thereby, the operation OP, the transfer of the corresponding selected verifiable data D2SVD' to D1 and its inclusion into the set of verifiable data of D1, and the resulting deletion of the selected verifiable data D2SVD' from the memory of D2 have been executed and fully verified by the reference drone RD, while exchanges of data between the drones have been minimized, secured via data encryption, signature of transfer receipts and timestamping, and strictly relate to execution of the operation OP necessary to perform the assigned task. Moreover, no critical data relating to the verifiable credentials of the owners of the drones has been exchanged (and thus, possibly diverted and used for hacking the owner), and the exchanges of data between the drones have been realized in an offline mode (i.e. without involving communications with an entity, e.g. a server, external to the plurality of drones). At this stage, the reference drone RD knows that the new "final" storage state of the set of verifiable data of D2 must correspond to D2VD' and that the "old" storage state corresponding to D2VD must be deleted from the memory of D2. In case D2 does not perform the deleting of the selected verifiable data D2SVD' stored apart in its memory at step S29', then the reference drone RD immediately detects this anomaly from the received proof PR3. The initial storage state of the set of verifiable data of D2 (i.e. D2VD) will contradict the storage state of D2 according to the proof PR3 contained in the signed transfer receipt STR5' delivered by D2, and stored in the memory module of the reference drone indicating that the new initial storage state must in fact correspond to the set of verifiable data D2VD', i.e. the new initial storage state of the set of verifiable data for the further operation must be D2VD' and not D2VD. As a result, the reference drone will cancel any further transfer of data between D2 and the other drones. Consequently, the erroneous storage state of the set of verifiable data of D2 will not propagate errors via transfers with other drones, and will not corrupt a correct performance of the task.

Upon reception by the communication unit of the drone D2 of the error message E3' from the reference drone RD at step S13', or the error message E4' from RD at step S18', or the error message E5' from RD at step S23', the processing unit of the drone D2 performs the step RES' of moving back the stored apart selected verifiable data D2SVD' into the set of its verifiable data (i.e. restoring the initial set D2VD), and deleting the selected verifiable data D2SVD' stored apart in its memory (i.e. in the "busy section" of the memory), thereby only the initial set of verifiable data D2VD remains in the memory of D2 (i.e. as in the "initial normal section" of the memory). In these cases, the transfer of data between D1 and D2 has failed, and thus operation OP has not been executed.

In a variant of the above embodiments, still illustrated with the example of interconnected drones cooperating for performing a given task, the level of security is even improved by allowing the drones (and the reference drone) to further check whether the owners of the drones are duly enrolled with authorized entities. In this variant, each drone can further communicate (via the communication network) with an Identity Server (IS) that can deliver unique identifiers to the drones of enrolled owners, an Escrow Server(ES) that can deliver verifiable credentials to the drones of enrolled owners, and a Governance Server (GS) that can deliver single-use identity tokens to the drones of enrolled owners. The possibility for any drone (including the reference drone) to challenge another drone to prove that the owner of said other drone is enrolled with GS (and IS and ES), considerably improves the security of the execution of operations by preventing any hostile intrusion in the exchanges of data necessary to ensure said execution.

Thus, according to this variant:
- each DID of an owner of a drone is associated with a corresponding unique identifier (UID) of this owner that has been delivered by the Identity Server IS in response to a one-time enrollment setup of the owner of the drone with the Identity Server IS;
- each drone (reference drone included) is adapted to communicate during a setup phase via the communication network with the Escrow Server ES and each owner of a drone can perform a one-time enrollment setup with the Escrow Server ES by sending it, via said drone, a request containing its unique identifier UID and a cryptographic commitment to a link secret of the drone;
- upon reception of the request the Escrow Server ES creates a corresponding Entropy Test Vector (ETV) as a chunk of bytes generated by a random number generator, a corresponding pair of asymmetric encryption keys (OKpub, OKpriv), determines a corresponding shielded profile (SP) obtained by first encrypting the received unique identifier UID with the private key OKpriv and then encrypting the Entropy Test Vector and encrypted unique identifier UID with the private key OKpriv, stores the obtained triplet (OKpub, SP, UID), and delivers to the requesting drone an anonymous verifiable credential CES containing the triplet (OKpub, SP, UID) and the cryptographic commitment to the drone's link secret. The two layers of encryption of the unique identifier UID allow partial or halfway decryption. Partial decryption lets the escrow server ES reveal part of the data for internal analysis without exposing the rest of the encrypted data at the same time. This makes it harder to spy on the escrow server.

The Escrow Server ES is adapted to communicate with the Identity Server IS via the communication network and request the Identity Server IS to confirm that a unique identifier UID received by the Escrow Server from a drone is indeed owned by the owner of said drone. Each drone (reference drone included) is adapted to communicate via the communication network with the Governance Server GS and each owner of a drone can perform a one-time enrollment setup with the Governance Server GS by first establishing via his drone a session with the Governance Server GS during which the drone uses an ephemeral DID and the Governance Server GS is authenticated, the Governance Server GS then challenges the drone to produce a proof of enrollment of its owner with the Escrow Server ES and, as a response, the drone generates a proof based on the anonymous verifiable credential CES delivered by the Escrow Server ES and sends the proof to the Governance Server GS. Upon reception of the proof from the challenged drone, the Governance Server GS delivers to the drone a plurality of Single-Use Identity Tokens and corresponding verifiable credential CGS: each delivered Single-Use Identity Token SUIT being a string that can be used to look up the drone's public key OKpub, the delivered verifiable credential CGS containing one field for each delivered Single-Use Identity Token SUIT and the cryptographic commitment to the link secret of the drone.

In case a drone Di of the plurality of drones Di (i = 1,..., N) communicates with another drone Dj (j ≠ i) of said plurality of drones by using a never-before-seen DID:
- the drone Dj then challenges the drone Di to prove that the owner OWi of drone Di is enrolled with the Governance Server GS by revealing one of the Single-Use Identity Tokens SUITs delivered to the drone Di by the Governance Server GS in the corresponding verifiable credential CGSi,
- in response, the drone Di produces a Zero-Knowledge Proof (ZKP) based upon the verifiable credential CGSi that reveals one of the corresponding Single-Use Identity Tokens SUIT, say SUITi, and
the drone Dj records the revealed Single-Use Identity Tokens SUITi in the signed transfer receipt STR generated by the drone Di.
Thus, with the above enrollments of the owners of the drones (owner of the reference drone included) with the Identity Server IS, the Escrow Server GS and the Governance Server GS, and with the possibility for any drone (reference drone included) to challenge another drone to check that the owner of said other drone is correctly enrolled, any intrusion of a fake owner in the process of execution of operations by the drones is prevented (without revealing critical data of the owner), and the task assigned to the drones can be performed with a maximum of security.

According to the above system of control based on the Identity Server IS, the Escrow Server ES and the Governance Server GS, the risk of data breach concerning an owner of a challenged drone D during the above data exchanges is minimized as:
- IS does not know the SUITs, the credential CES, the verifiable credential CGS, the ephemeral DID of the drone D, nor the exchanges between D and the other drones;
- ES does not know the SUITs, the CES, the CGS, the ephemeral DID of the drone D, nor the exchanges between D and the other drones; and
- GS does not know the UID of the drone D (GS only knows the SUITs and OKpub of D).

It is further possible to have an Audit Server (AUD) in charge with oversight of data exchanges between drones and compliance of their internal rules with some stored data operation rules (OpR). In this case, each drone (reference drone included) must store an history of its (encrypted) exchanges of data with the other drones during the performance of the task that can be audited by the Audit Server AUD.

The invention can be used in many other contexts than that of the above-mentioned (non-limiting) examples of drones, loTs etc. For example, a first device may be a smartphone owned by a person having a digital wallet, a second device may be another smartphone owned by another person with a corresponding digital wallet, and the verifiable data may represent the digital cash in the wallets (the operation parameter data values representing the face values of banknotes). The invention can then secure the operations of transfer of cash between the wallets via the smartphones. Moreover, it is possible to have a plurality of reference devices to control the execution of operations by the devices.

The above disclosed subject matter is to be considered illustrative, and not restrictive, and serves to provide a better understanding of the invention defined by the independent claims.

### REFERENCES

[1] M. Sabt, M. Achemlal, A. Bouabdallah: "Trusted Execution Environment: Wat It is, and What It is Not", 14th IEEE International Conference on Trust, Security and Privacy in Computing and Communications, Aug 2015, Helsinki, Finland.
[2] https://en.wikipedia.org/wiki/Trusted_execution_environment (edited on 15 November 2020, at 13:04 (UTC)).
[3] from Crypto Wiki: cryptowiki.net/index.php?title=Protocols_for_secure_communication_channels (27 December 2014, at 21:54).
[4] S. Goldwasser, M. Bellare: "Lecture Notes on Cryptography", July 2008: http://www.cs.tufts.edu/comp/165/papers/Goldwasser-Bellare-notes-cryptography.pdf
[5] https://en.wikipedia.org/wiki/Digital_signature (edited on 14 December 2020, at 00:29 (UTC)).
[6] https://en.wikipedia.org/wiki/Blind_signature (edited on 4 January 2020, at 18:21 (UTC)).
[7] D. Chaum, EUROCRYPT '90: Proceedings of the workshop on the theory and application of cryptographic techniques on Advances in cryptology, February 1991, Pages 458-464.
[8] Wikipedia. "Signatures with efficient protocols", https://en.wikipedia.org/wiki/Signatures_with_efficient_protocols (edited on 14 December 2020, at 02:13 (UTC)).
[9] Goldwasser S., Ostrovsky R. (1993) Invariant Signatures and Non-Interactive Zero-Knowledge Proofs are Equivalent. In: Brickell E.F. (eds) Advances in Cryptology - CRYPTO' 92. CRYPTO 1992. Lecture Notes in Computer Science, vol 740. Springer, Berlin, Heidelberg. https://doi.org/10.1007/3-540-48071-4_16.
[10] Camenisch J., Lysyanskaya A. (2003) A Signature Scheme with Efficient Protocols. In: Cimato S., Persiano G., Galdi C. (eds) Security in Communication Networks. SCN 2002. Lecture Notes in Computer Science, vol 2576. Springer, Berlin, Heidelberg. https://doi.org/10.1007/3-540-36413-7_20.
[11] Knox, D.A. and Adams, C. "Digital credentials with privacy-preserving delegation", First published: 15 July 2011, https://doi.org/10.1002/sec.213, (see https://onlinelibrary.wiley.com/doi/full/10.1002/sec.213).
[12] https://en.wikipedia.org/wiki/Hardware_security_module (edited on 20 November 2022, at 20:18 (UTC).)
[13] https://en.wikipedia.org/wiki/Decentralized_identifier (edited on 6 November 2022, at 19:48 (UTC)); or https://www.w3.org/TR/did-core/ (19 July 2022)
[14] https://en.wikipedia.org/wiki/Verifiable_credentials (edited on 9 October 2022, at 14:20 (UTC)); or https://www.w3.org/TR/vc-data-model/ (3 March 2022)
[15] https://en.wikipedia.org/wiki/Merkle_tree (edited on 24 November 2022, at 08:58 (UTC))
[16] US 4,309,569 (published on January 5, 1982)
[17] https://github.com/hyperledger-archives/indy-anoncreds
[18] https://github.com/w3c-ccg/chapi-interop-test-suite

## Claims

1. A method for controlling a plurality of devices via a reference device and making the devices cooperate to perform a task, each device being owned by a corresponding owner, each device being equipped with a processing unit with a memory and a communication unit, and adapted to execute operations necessary to perform the task, the memory of each device storing a corresponding set of cryptographic private keys of the owner of the device, a decentralized identifier (DID) of its owner associated with a set of public cryptographic keys respectively corresponding to the private keys, a programmed method of authentication of the other devices and the reference device adapted to run on the processing unit of the device, the sets of public cryptographic keys of the other devices, a set of verifiable data, each verifiable data comprising corresponding operation parameter data values and associated internal rules necessary to perform the task, and verifiable credentials of the owner of the device, the communication units of the devices being adapted to securely communicate with each other via a wireless or wired communication network, the reference device being equipped with a processing module, a memory module and a communication module and adapted to securely communicate with each device communication unit via the wireless or wired communication network, the reference device and the devices being adapted to transfer data using an encryption protocol, the memory module of the reference device storing corresponding set of cryptographic private keys of a reference owner of the reference device, and corresponding decentralized identifier data (DID) associated with a set of public cryptographic keys respectively corresponding to the reference device private keys, and the set of public cryptographic keys of each device of said plurality of devices, the reference device and each device being adapted to digitally sign with their corresponding stored private keys a transfer receipt, and the memory of each device further storing the set of public cryptographic keys of the reference device, the method being **characterized in that**:
- each transfer of data between any two devices, and between the reference device and any device, is encrypted with a private key according to the encryption protocol, and any receiver of a message transferred according to said encryption protocol authenticates a sender of the received message by decrypting the message with a public key corresponding to the private key of the owner of the sender of the message used for encrypting said message, and in case the message includes a signed transfer receipt, the receiver further verifies whether each signature on the signed transfer receipt is valid;
- each signed transfer receipt sent or received by a device is stored in its memory, and each signed transfer receipt sent or received by the reference device is stored in its memory module;
- each time a first device sends to a second device, via its communication unit, possibly via the reference device, an encrypted message including a signed transfer receipt and indicating an operation involving a use of given operation parameter data values to be executed by the second device as being part of the task, the signed transfer receipt includes the respective DIDs of the first device, the second device and the reference device together with the given operation parameter data values; and,
- the second device, upon reception of this message by its communication unit, decrypts the message, executes the operation by using the operation parameter data values included in the signed transfer receipt in the received message and its processing unit removes from the set of its verifiable data stored in its memory selected verifiable data of which operation parameter values match the given operation parameter data values used for executing the operation and stores apart in its memory said selected verifiable data, generates a proof of said removal and storing apart of the selected verifiable data and includes the generated proof into the signed transfer receipt, and the second device further signs via its processing unit the signed transfer receipt in the received decrypted message, and sends via its communication unit to the reference device an encrypted message including said further signed transfer receipt together with said selected verifiable data; and
- upon reception by the communication module of the reference device of the encrypted message from the second device including said further signed transfer receipt together with said selected verifiable data, the reference device verifies whether the received proof in the received further signed transfer receipt is valid and whether data of the received selected verifiable data comply with the associated internal rules; and
- in case of successful authentication of the respective receiver and sender for any transfer of message between the first device and the second device concerning said operation, and between any one of the first and second devices and the reference device concerning said operation, and successful verification of data content of any transferred message, the reference device further signs and stores in its memory module the transfer receipt signed by the first device and the second device and containing said proof generated by the second device, and sends an encrypted message containing said further signed transfer receipt to the first device and the second device, thereby indicating to said two devices that the operation has been executed; and
- upon reception by the communication unit of the second device of said transfer receipt further signed by the reference device, the second device deletes from its memory the selected verifiable data.

2. The method of claim 1, wherein a processing unit clock of each device is synchronized with a processing module clock of the reference device RD, and each device and the reference device RD are adapted to include timestamp data in a transfer receipt and verify whether there is timeout from time stamp data in a received transfer receipt, and wherein an operation being part of the task is executed according to the following steps:
(A) a first device D1 sends to a second device D2 via its communication unit a message, encrypted by its processing unit using one of its private keys stored in its memory, the message including data indicating an operation OP to be executed by the second device D2 and corresponding transfer receipt signed by the first device containing given operation parameter data values to be used for executing the operation OP and first timestamp data;
(B) upon reception by the second device D2 of the encrypted message from the first device D1, the processing unit of the second device authenticates the first device as being the sender of the received message by decrypting the message using a public cryptographic key corresponding to the private key of the owner of the first device used to encrypt the message, or by using a shared symmetric key negotiated with the private key of the sender of the message, and verifying whether the signature on the received signed transfer receipt is valid, and the processing unit of the second device verifies whether there is no timeout from the first timestamp data in the received signed transfer receipt; and,
(B1) in case authentication of the first device D1 fails, or the signature on the signed transfer receipt is not valid or there is timeout, the second device D2 sends to the reference device a corresponding error notification via its communication unit, the transfer of data with the first device D1 is cancelled, and the reference device RD forwards the received error notification to the first device D1; and
(B2) in case authentication of the first device D1 succeeds, and the signature on the signed transfer receipt is valid, and there is no timeout, the processing unit of the second device D2 selects verifiable data D2SVD of which operation parameter data values match the received given operation parameter data values in the set of verifiable data D2VD stored in its memory, the processing unit of the second device D2 updates the internal rules of the selected verifiable data, the second device D2 executes the operation by using the selected verifiable data D2SVD and its processing unit removes from the set of its verifiable data D2VD stored in its memory the selected verifiable data D2SVD and stores apart in its memory said selected verifiable data D2SVD with the updated associated internal rules, generates a proof PR1 of said removal and storing apart of the selected verifiable data D2SVD, incorporates the selected verifiable data D2SVD into the message, includes the generated proof PR1 and second timestamp data in the signed transfer receipt, further signs the transfer receipt and includes this further signed transfer receipt in the message, encrypts with one of its private keys the message and sends to the reference device RD the encrypted message;
(C) upon reception by the communication module of the reference device RD of the message from the second device D2, the processing module of the reference device RD decrypts the message with a public key corresponding to the private key used by the second device D2 to encrypt the message, verifies whether the signatures on the transfer receipt are valid and there is no timeout from the first and second timestamp data, whether the proof PR1 is valid and the received second device selected verifiable data D2SVD comply with the corresponding associated internal rules; and
(C1) in case a signature is not valid or there is timeout or the proof PR1 is not valid or the received second device selected verifiable data D2SVD do not comply with the corresponding internal rules, the reference device RD sends to the first device D1 and the second device D2 a corresponding error notification via its communication module and the transfer of data between the first device D1 and the second device D2 is cancelled; and
(C2) in case the signatures are valid, there is no timeout, the proof PR1 is valid, and the received second device selected verifiable data D2SVD comply with the corresponding internal rules, the processing module of the reference device RD includes the second device selected verifiable data D2SVD in the message, further signs the signed transfer receipt and attaches this further signed transfer receipt to the message, encrypts the message with a private key stored in the memory module, sends to the first device D1 the encrypted message, and the processing module of the reference device RD encrypts the further signed transfer receipt with a private key stored in the memory module and sends the encrypted further signed transfer receipt to the second device D2;
(D) upon reception by the communication unit of the first device D1 of the message from the reference device RD, the processing unit of the first device D1 decrypts the message with the public key corresponding to the private key used by the reference device RD to encrypt the message and extracts the second device selected verifiable data from the message; and,
(D1) the first device D1 modifies its set of first device verifiable data (D1VD) stored in its memory by generating and storing a new set of first device verifiable data D1VD' including the extracted second device selected verifiable data D2SVD;
(E) upon reception by the communication unit of the second device D2 of the error notification sent by the reference device RD according to step (C1), the processing unit of the second device D2 transfers the second device selected verifiable data D2SVD stored apart in its memory into the set of its verifiable data D2VD;
(F) upon reception by the communication unit of the second device D2, decryption and validation of the signatures of the encrypted signed transfer receipt sent by the reference device RD according to step (C2), the processing unit of the second device D2 deletes the second device selected verifiable data D2SVD stored apart in its memory.

3. The method of claim 1, wherein a processing unit clock of each device is synchronized with a processing module clock of the reference device RD, and each device and the reference device RD are adapted to include timestamp data in a transfer receipt and verify whether there is timeout from time stamp data in a received transfer receipt, and wherein an operation being part of the task is executed according to the following steps:
(A') a first device D1 sends to the reference device RD via its communication unit a message, encrypted by its processing unit using one of its private keys stored in its memory, the message including data indicating an operation OP to be executed by the second device D2 and corresponding transfer receipt signed by the first device containing given operation parameter data values to be used for executing the operation OP and first timestamp data;
upon reception by the communication module of the reference device RD of the encrypted message from the first device D1, the processing module of the reference device RD authenticates the first device as being the sender of the received message by decrypting the message using a public cryptographic key corresponding to the private key of the owner of the first device D1 used to encrypt the message, and the processing module of the reference device RD verifies whether the signature on the received signed transfer receipt is valid, and whether there is no timeout from the first timestamp data in the signed transfer receipt; and,
(A1') in case authentication of the first device D1 fails, or the signature of the transfer receipt is not valid or there is timeout, the reference device RD sends to the first device D1 an error message via its communication module and the transfer of data between the first device D1 and the second device D2 is cancelled; and
(A2') in case authentication of the first device is successful, and the signature on the transfer receipt is valid, and there is no timeout from the first timestamp data, the processing module of the reference device RD includes a reference device timestamp RDTS in the signed transfer receipt, attaches this signed transfer receipt to the message and encrypts the message including the signed transfer receipt with one of its private keys stored in the memory module, and sends to the second device D2 the encrypted message via its communication module;
(B') upon reception by the second device D2 of the encrypted message from the reference device RD, the processing unit of the second device D2 authenticates the reference device RD as being the sender of the received message by decrypting the message using a public cryptographic key corresponding to the private key of the owner of the reference device RD used to encrypt the message, verifies whether the signature of the first device D1 on the received signed transfer receipt is valid, and whether there is no timeout from the first and reference device timestamp data of the signed transfer receipt in the message; and,
(B1') in case authentication of the reference device RD fails, or the signature on the signed transfer receipt is not valid or there is timeout, the second device D2 sends to the reference device RD a corresponding error notification via its communication unit, the reference device RD forwards the received error notification to the first device D1 and the transfer of data with the first device D1 is cancelled; and
(B2') in case authentication of the reference device RD succeeds, and the signature on the signed transfer receipt is valid, and there is no timeout, the processing unit of the second device D2 selects verifiable data D2SVD of which operation parameter data values match the received given operation parameter data values in the set of verifiable data D2VD stored in its memory, the processing unit of the second device D2 updates the internal rules associated with the selected verifiable data, the second device D2 executes the operation according to the selected verifiable data D2SVD and its processing unit removes from the set of its verifiable data D2VD stored in its memory the selected verifiable data D2SVD and stores apart in its memory said selected verifiable data D2SVD with the updated associated internal rules, generates a proof PR1 of said removal and storing apart corresponding to said execution of the operation OP, incorporates the selected verifiable data D2SVD into the message, includes the generated proof PR1 and second timestamp data in the signed transfer receipt, further signs the signed transfer receipt and attaches the further signed transfer receipt to the message, encrypts with one of its private keys the message and sends to the reference device RD the encrypted message;
(C') upon reception by the communication module of the reference device RD of the message from the second device D2, the processing module of the reference device RD decrypts the message with a public key corresponding to the private key used by the second device D2 to encrypt the message, verifies whether the signatures on the signed transfer receipt are valid and there is no timeout from the first, reference device and second timestamp data in the signed transfer receipt, whether the proof PR1 in the signed transfer receipt is valid and the received second device selected verifiable data D2SVD comply with the corresponding associated internal rules; and
(C1') in case a signature is not valid or there is timeout or the proof PR1 is not valid or the received second device selected verifiable data D2SVD do not comply with the associated internal rules, the reference device RD sends to the first device D1 and the second device D2 a corresponding error notification via its communication module and the transfer of data between the first device D1 and the second device D2 is cancelled; and
(C2') in case the signatures are valid, there is no timeout, the proof PR1 is valid, and the received second device selected verifiable data D2SVD comply with the associated internal rules, the processing module of the reference device RD encrypts the message with a private key stored in the memory module, and sends to the first device D1 the encrypted message including the signed transfer receipt;
(D') upon reception by the communication unit of the first device D1 of the message and the signed transfer receipt from the reference device RD, the processing unit of the first device D1 decrypts the message with the public key corresponding to the private key used by the reference device RD to encrypt the message, verifies whether the signatures on the signed transfer receipt are valid and whether there is no timeout from the first, reference device and second timestamp data, extracts the second device verifiable data D2SVD from the decrypted message; and,
(D1') in case a signature on the signed transfer receipt is not valid or there is timeout, the first device D1 sends to the reference device RD a corresponding error notification via its communication unit, the reference device RD forwards the received error notification to the second device D2 and the transfer of data with the first device D1 is cancelled; and
(D2') in case the signatures on the signed transfer receipt are valid and there is no timeout, the processing unit of the first device D1 modifies its set of first device verifiable data (D1VD) stored in its memory to generate and store a new set of first device verifiable data D1VD' including the extracted second device selected verifiable data D2SVD into the set of first device verifiable data (D1VD), generates a proof PR2 of such inclusion, removes the second device selected verifiable data D2SVD from the message, incorporates the generated proof of inclusion PR2 into the signed transfer receipt, encrypts the message with a private key stored in the memory of the first device D1 and forwards to the reference device RD the encrypted message including the signed transfer receipt; and
(D3') upon reception by the communication module of the reference device RD of the message with the signed transfer receipt sent by the first device D1 according to the step (D2'), the processing module of the reference device RD decrypts the message with the public key corresponding to the private key used by the first device D1 for encrypting the message, verifies whether the signatures on the signed transfer receipt are valid, whether there is no timeout from the first, reference device and second timestamp data, whether the proof of inclusion PR2 in the signed transfer receipt is valid; and
(D4') in case a signature is not valid or there is timeout or the proof of inclusion PR2 is not valid, the reference device RD sends to the first device D1 and the second device D2 a corresponding error notification via its communication module and the transfer of data between the first device D1 and the second device D2 is cancelled; and
(D5') in case the signatures are valid, there is no timeout, and the proof of inclusion PR2 is valid, the processing module of the reference device RD encrypts the message with a private key from the set of the private keys stored in the memory module, and forwards to the second device D2 the message via the communication module;
(E') upon reception by the communication unit of the second device D2 of the error notification sent by the reference device RD according to step (C1'), the processing unit of the second device D2 transfers the second device selected verifiable data D2SVD stored apart in its memory into the set of its verifiable data;
(F') upon reception by the communication unit of the second device D2 of the message with the signed transfer receipt forwarded by the reference device RD according to step (D5'), the processing unit of the second device D2 decrypts the message with a stored public key corresponding to the private key used by the reference device RD to encrypt the message, verifies whether the signatures on the transfer receipt are valid and there is no timeout from the first, reference device and second timestamp data, and that the proof of inclusion PR2 is valid; and,
(F1') in case a signature is not valid or there is timeout or the received proof of inclusion PR2 is not valid, the second device D2 sends to the reference device RD a corresponding error notification via its communication unit, the transfer of data to said first device D1 is cancelled, and the reference device RD forwards said error notification to the first device D1; and
(F2') in case the signatures are valid, and there is no timeout, and the received proof of inclusion PR2 is valid, the second device D2 deletes the second device selected verifiable data D2SVD stored apart in its memory, further generates a proof PR3 of that deletion, incorporates the generated proof of deletion PR3 into the signed transfer receipt, encrypts with one of its private keys the message including the signed transfer receipt, and forwards to the reference device RD the encrypted message; and
(G') upon reception by the communication module of the reference device RD of the message with the signed transfer receipt forwarded by the second device D2 according to step (F2'), the processing module of the reference device RD decrypts the message with a public key corresponding to the private key used by the second device D2 for encrypting the message, verifies whether the signatures on the transfer receipt are valid, whether there is no timeout from the first, reference device and second timestamp data, and whether the received proof of deletion PR3 in the signed transfer receipt is valid; and
(G1') in case a signature on the signed transfer receipt is not valid, or there is timeout, or the received proof of deletion PR3 is not valid, the reference device RD sends to the second device D2 and the first device D1 a corresponding error notification via its communication module, the transfer of data between said first device D1 and second device D2 is cancelled; and (G2') in case the signatures on the signed transfer receipt are valid, and there is no timeout from the first, reference device and second timestamp data, and the received proof of deletion PR3 is valid, the processing module of the reference device RD further signs the signed transfer receipt, encrypts the further signed transfer receipt with one of the private keys stored in the memory module, and forwards via the communication module to the first device D1 and the second device D2 the encrypted further signed transfer receipt.

4. The method of claim 2 or 3, wherein respectively at step (C) or (C'),
in case the internal rules of the received second device selected verifiable data D2SVD specify a use of verifiable credentials of respectively the owner of the first device D1 or the second device D2, the reference device RD further checks a compliance of the verifiable credentials respectively of the owner of the first device D1 or the second device D2 with said internal rules, respectively by communicating with said first or second devices via a credential-sharing protocol.

5. The method of any one of claims 1 to 4, wherein
each verifiable data of the set of verifiable data of a device are associated with respective leaf nodes of a Merkle tree corresponding to said device, each leaf node corresponding to a hash value obtained by hashing corresponding associated verifiable data with a hash function, the Merkle tree comprising intermediate nodes up to a root node of the tree corresponding to a root value of the tree calculated according to a hashing scheme of the Merkle tree, the Merkle tree being stored in the memory of the device;
the processing unit of the device is adapted to perform a modification of the set of verifiable data stored in its memory, corresponding to a removal of given verifiable data from the set, by selecting nodes of the stored Merkle tree corresponding to each given verifiable data to be removed from the stored set of verifiable data, replacing each removed verifiable data by corresponding piece of placeholder data and hashing with the hash function each piece of placeholder data to obtain corresponding placeholder leaf node value, forming a new Merkle tree from the stored Merkle tree by replacing the selected leaf nodes by the respectively corresponding placeholder leaf nodes to obtain a first part of the leaf nodes of the new Merkle tree and adjoining to said first part a distinct second part of leaf nodes respectively corresponding to the selected leaf nodes of the Merkle tree, as stored apart leaf nodes, and calculating new intermediate nodes of the new Merkle tree up to a new root node of the new Merkle tree having said first and second parts of leaf nodes by using the hash function according to the hashing scheme, and storing in the memory of the device the new Merkle tree;
the processing unit of the device is adapted to generate a proof that the modification of the set of verifiable data stored in its memory, corresponding to execution of an operation performed by the device using the operation parameter data values of the given verifiable data, by sending to the reference device the new root node value of the new Merkle tree together with root verification data respectively comprising the values of the new placeholder nodes and the values of new intermediate nodes of the new Merkle tree that have been modified with respect to the Merkle tree and that are necessary to retrieve the new root value with the hash function according to the hashing scheme; and
the processing module of the reference device is adapted to verify that a new root node value of a new Merkle tree received from the device together with corresponding root verification data, as a proof of performance of the operation by the device, matches a test root node value calculated from the received root verification data, thereby performing a verification that the device has performed the operation;
in case of deletion of the verifiable data corresponding to the stored apart leaf nodes of the new Merkle tree, a resulting updated Merkle tree is obtained by calculating respective values of its updated intermediate leaf nodes up to its updated root node with the hash function according to the hashing scheme only from the first part of the leaf nodes of the new Merkle tree, the updated root node value of the updated Merkle tree together with corresponding updated root verification data constituting a proof of said deletion of the verifiable data;
in case of inclusion of specific verifiable data in a set of verifiable data stored as an initial Merkle tree in a memory of a device, corresponding values of additional leaf nodes are calculated with the hash function from each included specific verifiable data, and a corresponding final Merkle tree is calculated from the values of the leaf nodes of the initial Merkle tree and the values of the additional leaf nodes according to the hashing scheme, the resulting root node value of said final Merkle tree together with resulting root verification data constituting a proof of said inclusion of the specific verifiable data; and
the processing units of the devices and the processing module of the reference device being adapted to calculate node values of a Merkle tree with a programmed hash function and hashing scheme, and calculate a root value from root verification data.

6. The method according to any one of claims 2 to 5, wherein at step (B2) or step (B2'), respectively, the processing unit of the second device D2:
generates a new symmetric encryption key K and encrypts a specific control field of each selected verifiable data D2SVD with said generated key K;
encrypts the generated key K so it can be decrypted with a public cryptographic key of the first device D1; and
further incorporates in the message the encrypted key K together with each encrypted specific control field.

7. The method according to claim 6, wherein at step (C2) or step (C2'), respectively, upon reception from the reference device RD of the message including the second device selected verifiable data D2SVD and the signed transfer receipt, the processing unit of the first device decrypts the encrypted key K with a first device's corresponding private key stored in its memory to obtain the encryption key K, and decrypts each encrypted control field of the second device selected verifiable data D2SVD in the received message with the key K, thereby allowing the first device D1 to access control field data of the second device D2 without that data being revealed to the reference device RD.

8. The method of any one of claims 2 to 5, wherein at step (B) or step (B'), respectively, after having decrypted the received message and before verifying that the signature of the received signed transfer receipt is valid, that there is no timeout, the second device D2 performs a further level of authentication of, respectively, the first device D1 or the reference device RD by performing a step of challenge-response communication with, respectively, the first device D1 or the reference device RD, and only upon reception by the second device D2 of a correct response received from, respectively, the first device D1 or the reference device RD, to a challenge sent to it by the second device D2, the processing unit of the second device D2 then verifies that the signature on the received signed transfer receipt is valid, that there is no timeout from the first timestamp data in the signed transfer receipt, and in case the response to the challenge is erroneous the transfer of data with the first device D1 is cancelled.

9. The method according to any one of claims 1 to 8, wherein
each DID of an owner of a device includes a corresponding unique identifier (UID) of the owner of said device delivered by an Identity Server (IS) in response to a one-time enrollment setup of the owner of the device with the Identity Server,
each device is adapted to communicate via the communication network with an Escrow Server (ES) and each owner of a device can perform one-time enrollment setup with the Escrow Server by sending it via said device a request containing its unique identifier and a cryptographic commitment to a link secret of the device, upon reception of the request the Escrow Server creates a corresponding Entropy Test Vector (ETV) as a chunk of bytes generated by a random number generator, a corresponding pair of asymmetric encryption keys (OK_{pub}, OKₚᵣᵢᵥ), determines a corresponding shielded profile (SP) obtained by first encrypting the received unique identifier (UID) with the private key OKₚᵣᵢᵥ and then encrypting the Entropy Test Vector and encrypted unique identifier with the private key OKₚᵣᵢᵥ, stores the obtained triplet (OK_{pub}, SP, UID), and delivers to the device an anonymous verifiable credential C_{ES} containing the triplet (OK_{pub}, SP, UID) and the cryptographic commitment to the device's link secret, the Escrow Server being adapted to communicate with the Identity Server via the communication network and request the Identity Server to confirm that a unique identifier (UID) received by the Escrow Server from a device is indeed owned by the owner of said device,
each device is adapted to communicate via the communication network with a Governance Server (GS) and each owner of a device can perform one-time enrollment setup with the Governance Server by first establishing via his device a session with the Governance Server during which the device uses an ephemeral DID and the Governance Server is authenticated, the Governance Server then challenges the device to produce a proof of enrollment of its owner with the Escrow Server (ES) and, as a response, the device generates a proof based on the anonymous verifiable credential C_{ES} delivered by the Escrow Server and sends the proof to the Governance Server, upon reception of the proof the Governance Server delivers to the device a plurality of Single-Use Identity Tokens and corresponding verifiable credential C_{GS}, each delivered Single-Use Identity Token (SUIT) being a string that can be used to look up the device's public key OK_{pub}, the delivered verifiable credential C_{GS} containing one field for each delivered Single-Use Identity Token (SUIT) and the cryptographic commitment to the link secret of the device,
in case a device A of the plurality of devices communicates with a device B of the plurality of devices by using a never-before-seen DID,
the device B then challenges the device A to prove that the owner of device A is enrolled with the Governance Server by revealing one of the Single-Use Identity Tokens SUITs delivered to the device A by the Governance Server in the corresponding verifiable credential C_{GS},
in response, the device A produces a Zero-Knowledge Proof based upon the verifiable credential C_{GS} that reveals one of the corresponding Single-Use Identity Tokens SUIT, and
the device B records the revealed Single-Use Identity Tokens SUIT in the signed transfer receipt generated by the device A.

10. A system for controlling a plurality of devices via a reference device to making the devices cooperate to perform a task, each device being owned by a corresponding owner, each device being equipped with a processing unit with a memory and a communication unit, and adapted to execute operations necessary to perform the task, the memory of each device storing a corresponding set of cryptographic private keys of the owner of the device, a decentralized identifier (DID) of its owner associated with a set of public cryptographic keys respectively corresponding to the private keys, a programmed method of authentication of the other devices and the reference device adapted to run on the processing unit of the device, the sets of public cryptographic keys of the other devices, a set of verifiable data, with corresponding operation parameter data values and associated internal rules necessary to perform the task, and verifiable credentials of the owner of the device, the communication units of the devices being adapted to securely communicate with each other via a wireless or wired communication network, the reference device being equipped with a processing module, a memory module and a communication module and being adapted to securely communicate with each device communication unit via the wireless or wired communication network, the reference device and the devices being adapted to transfer data using encryption protocols, the memory module of the reference device storing a corresponding set of cryptographic private keys of a reference owner of the reference device, and a corresponding decentralized identifier data (DID) and a set of public cryptographic keys respectively corresponding to the reference device private keys, and the set of public cryptographic keys of each device of said plurality of devices, the reference device and each device being adapted to digitally sign with their corresponding private keys a transfer receipt, and the memory of each device further storing the set of public cryptographic keys of the reference device, a processing unit clock of each device is synchronized with a processing module clock of the reference device RD, and each device and the reference device RD are adapted to include timestamp data in a transfer receipt and verify whether there is timeout from time stamp data in a received transfer receipt, the system being **characterized in that** the devices and the reference device are adapted to perform the steps of the method according to any one of claims 1 to 9.

11. The system of claim 10, further comprising
an Identity Server IS adapted to communicate with the devices via the communication network and deliver to a device, in response to a one-time enrollment setup of the owner of the device with the Identity Server, a corresponding unique identifier UID of said owner to be associated with the decentralized identifier data DID of the owner of the device,
an Escrow Server ES adapted to communicate with the devices via the communication network and perform a one-time enrollment of the owner of a device, upon reception from that device of a request containing the unique identifier UID of its owner and a cryptographic commitment to a link secret of said device, by
creating a corresponding Entropy Test Vector (ETV) as a chunk of bytes generated by a random number generator, a corresponding pair of asymmetric encryption keys (OK_{pub}, OKₚᵣᵢᵥ), determining a corresponding shielded profile (SP) obtained by first encrypting the received unique identifier (UID) with the private key OKₚᵣᵢᵥ and then encrypting the Entropy Test Vector and encrypted unique identifier with the private key OKₚᵣᵢᵥ, storing the obtained triplet (OK_{pub}, SP, UID), and delivering to the device an anonymous verifiable credential C_{ES} containing the triplet (OK_{pub}, SP, UID) and the cryptographic commitment to the device's link secret, the Escrow Server being adapted to communicate with the Identity Server via the communication network and request the Identity Server to confirm that a unique identifier (UID) received by the Escrow Server from a device is indeed owned by the owner of said device,
a Governance Server GS adapted to communicate with the devices via the communication network and perform a one-time enrollment setup of the owner of a device, upon establishment by said device of a session with the Governance Server during which the device uses an ephemeral DID and the Governance Server is authenticated, the Governance Server then challenging the device to produce a proof of enrollment of its owner with the Escrow Server (ES) and, as a response, the device generating a proof based on the anonymous verifiable credential C_{ES} delivered by the Escrow Server and sending the proof to the Governance Server, and upon reception of the proof the Governance Server delivering to the device a plurality of Single-Use Identity Tokens and corresponding verifiable credential C_{GS}, each delivered Single-Use Identity Token (SUIT) being a string that can be used to look up the device's public key OK_{pub}, the delivered verifiable credential C_{GS} containing one field for each delivered Single-Use Identity Token (SUIT) and the cryptographic commitment to the link secret of the device, and
wherein, in case a device A of the plurality of devices communicates with a device B of the plurality of devices by using a never-before-seen DID,
the device B then challenges the device A to prove that the owner of the device A is enrolled with the Governance Server GS by revealing one of the Single-Use Identity Tokens SUITs delivered to the device A by the Governance Server in the corresponding verifiable credential C_{GS}, and
in response, the device A produces a Zero-Knowledge Proof based upon the verifiable credential C_{GS} that reveals one of the corresponding Single-Use Identity Tokens SUIT, and
the device B records the revealed Single-Use Identity Tokens SUIT in the signed transfer receipt generated by the device A.

## Patentansprüche

1. Verfahren zum Steuern einer Vielzahl von Vorrichtungen über eine Referenzvorrichtung und zum Veranlassen der Vorrichtungen, zur Durchführung einer Aufgabe zusammenzuwirken, wobei jede Vorrichtung einem jeweiligen Eigentümer gehört, wobei jede Vorrichtung mit einer Verarbeitungseinheit mit einem Speicher und einer Kommunikationseinheit ausgestattet und dazu eingerichtet ist, zur Durchführung der Aufgabe erforderliche Operationen auszuführen, wobei der Speicher jeder Vorrichtung Folgendes speichert: einen jeweiligen Satz privater kryptografischer Schlüssel des Eigentümers der Vorrichtung, einen dezentralen Identifikator (DID) ihres Eigentümers, dem ein Satz öffentlicher kryptografischer Schlüssel zugeordnet ist, die jeweils den privaten Schlüsseln entsprechen, ein programmiertes Verfahren zur Authentifizierung der anderen Vorrichtungen und der Referenzvorrichtung, das dazu eingerichtet ist, auf der Verarbeitungseinheit der Vorrichtung ausgeführt zu werden, die Sätze öffentlicher kryptografischer Schlüssel der anderen Vorrichtungen, einen Satz verifizierbarer Datenelemente, wobei jedes verifizierbare Datenelement jeweilige Betriebsparameter-Datenwerte und zugehörige, zur Durchführung der Aufgabe erforderliche interne Regeln aufweist, und verifizierbare Nachweise des Eigentümers der Vorrichtung, wobei die Kommunikationseinheiten der Vorrichtungen dazu eingerichtet sind, über ein drahtloses oder drahtgebundenes Kommunikationsnetz sicher miteinander zu kommunizieren, wobei die Referenzvorrichtung mit einem Verarbeitungsmodul, einem Speichermodul und einem Kommunikationsmodul ausgestattet und dazu eingerichtet ist, über das drahtlose oder drahtgebundene Kommunikationsnetz sicher mit der Kommunikationseinheit jeder Vorrichtung zu kommunizieren, wobei die Referenzvorrichtung und die Vorrichtungen dazu eingerichtet sind, Daten unter Verwendung eines Verschlüsselungsprotokolls zu übertragen, wobei das Speichermodul der Referenzvorrichtung einen jeweiligen Satz privater kryptografischer Schlüssel eines Referenzeigentümers der Referenzvorrichtung, jeweilige dezentrale Identifikatordaten (DID), denen ein Satz öffentlicher kryptografischer Schlüssel zugeordnet ist, die jeweils den privaten Schlüsseln der Referenzvorrichtung entsprechen, sowie den Satz öffentlicher kryptografischer Schlüssel jeder Vorrichtung der Vielzahl von Vorrichtungen speichert, wobei die Referenzvorrichtung und jede Vorrichtung dazu eingerichtet sind, einen Übertragungsbeleg mit ihren jeweiligen gespeicherten privaten Schlüsseln digital zu signieren, und wobei der Speicher jeder Vorrichtung ferner den Satz öffentlicher kryptografischer Schlüssel der Referenzvorrichtung speichert, **dadurch gekennzeichnet, dass**:
- jede Übertragung von Daten zwischen zwei beliebigen Vorrichtungen sowie zwischen der Referenzvorrichtung und einer beliebigen Vorrichtung gemäß dem Verschlüsselungsprotokoll mit einem privaten Schlüssel verschlüsselt wird, und jeder Empfänger einer gemäß dem Verschlüsselungsprotokoll übertragenen Nachricht einen Absender der empfangenen Nachricht authentifiziert, indem er die Nachricht mit einem öffentlichen Schlüssel entschlüsselt, der dem zum Verschlüsseln der Nachricht verwendeten privaten Schlüssel des Eigentümers des Absenders der Nachricht entspricht, und, falls die Nachricht einen signierten Übertragungsbeleg enthält, der Empfänger ferner überprüft, ob jede Signatur auf dem signierten Übertragungsbeleg gültig ist;
- jeder von einer Vorrichtung gesendete oder empfangene signierte Übertragungsbeleg in ihrem Speicher gespeichert wird, und jeder von der Referenzvorrichtung gesendete oder empfangene signierte Übertragungsbeleg in ihrem Speichermodul gespeichert wird;
- jedes Mal, wenn eine erste Vorrichtung mittels ihrer Kommunikationseinheit, gegebenenfalls über die Referenzvorrichtung, an eine zweite Vorrichtung eine verschlüsselte Nachricht sendet, die einen signierten Übertragungsbeleg enthält und eine Operation angibt, die eine Verwendung gegebener Betriebsparameter-Datenwerte beinhaltet und von der zweiten Vorrichtung als Teil der Aufgabe auszuführen ist, der signierte Übertragungsbeleg die jeweiligen DIDs der ersten Vorrichtung, der zweiten Vorrichtung und der Referenzvorrichtung zusammen mit den gegebenen Betriebsparameter-Datenwerten enthält; und
- die zweite Vorrichtung bei Empfang dieser Nachricht durch ihre Kommunikationseinheit die Nachricht entschlüsselt, die Operation unter Verwendung der in dem signierten Übertragungsbeleg in der empfangenen Nachricht enthaltenen Betriebsparameter-Datenwerte ausführt und ihre Verarbeitungseinheit aus dem in ihrem Speicher gespeicherten Satz ihrer verifizierbaren Datenelemente ausgewählte verifizierbare Datenelemente entfernt, deren Betriebsparameterwerte mit den zum Ausführen der Operation verwendeten gegebenen Betriebsparameter-Datenwerten übereinstimmen, und die ausgewählten verifizierbaren Datenelemente gesondert in ihrem Speicher speichert, einen Beweis für das Entfernen und gesonderte Speichern der ausgewählten verifizierbaren Datenelemente erzeugt und den erzeugten Beweis in den signierten Übertragungsbeleg aufnimmt, und die zweite Vorrichtung den signierten Übertragungsbeleg in der empfangenen entschlüsselten Nachricht mittels ihrer Verarbeitungseinheit zusätzlich signiert und mittels ihrer Kommunikationseinheit eine verschlüsselte Nachricht, die den zusätzlich signierten Übertragungsbeleg zusammen mit den ausgewählten verifizierbaren Datenelementen enthält, an die Referenzvorrichtung sendet; und
- bei Empfang der verschlüsselten Nachricht von der zweiten Vorrichtung, die den zusätzlich signierten Übertragungsbeleg zusammen mit den ausgewählten verifizierbaren Datenelementen enthält, durch das Kommunikationsmodul der Referenzvorrichtung die Referenzvorrichtung überprüft, ob der empfangene Beweis in dem empfangenen zusätzlich signierten Übertragungsbeleg gültig ist und ob Daten der empfangenen ausgewählten verifizierbaren Datenelemente den zugehörigen internen Regeln entsprechen; und
- im Falle einer erfolgreichen Authentifizierung des jeweiligen Empfängers und Absenders bei jeder Übertragung einer Nachricht zwischen der ersten Vorrichtung und der zweiten Vorrichtung betreffend die Operation sowie zwischen einer der ersten und der zweiten Vorrichtung und der Referenzvorrichtung betreffend die Operation und einer erfolgreichen Überprüfung des Dateninhalts jeder übertragenen Nachricht die Referenzvorrichtung den Übertragungsbeleg, der von der ersten Vorrichtung und der zweiten Vorrichtung signiert ist und den von der zweiten Vorrichtung erzeugten Beweis enthält, zusätzlich signiert und in ihrem Speichermodul speichert und eine verschlüsselte Nachricht, die den zusätzlich signierten Übertragungsbeleg enthält, an die erste Vorrichtung und die zweite Vorrichtung sendet, wodurch den beiden Vorrichtungen angezeigt wird, dass die Operation ausgeführt worden ist; und
- bei Empfang des von der Referenzvorrichtung zusätzlich signierten Übertragungsbelegs durch die Kommunikationseinheit der zweiten Vorrichtung die zweite Vorrichtung die ausgewählten verifizierbaren Datenelemente aus ihrem Speicher löscht.

2. Verfahren nach Anspruch 1, wobei eine Uhr der Verarbeitungseinheit jeder Vorrichtung mit einer Uhr des Verarbeitungsmoduls der Referenzvorrichtung RD synchronisiert ist und jede Vorrichtung und die Referenzvorrichtung RD dazu eingerichtet sind, Zeitstempeldaten in einen Übertragungsbeleg aufzunehmen und anhand von Zeitstempeldaten in einem empfangenen Übertragungsbeleg zu überprüfen, ob eine Zeitüberschreitung vorliegt, und wobei eine Operation, die Teil der Aufgabe ist, gemäß den folgenden Schritten ausgeführt wird:
(A) eine erste Vorrichtung D1 sendet mittels ihrer Kommunikationseinheit an eine zweite Vorrichtung D2 eine Nachricht, die durch die Verarbeitungseinheit unter Verwendung eines ihrer in ihrem Speicher gespeicherten privaten Schlüssel verschlüsselt ist, wobei die Nachricht Daten, die eine von der zweiten Vorrichtung D2 auszuführende Operation OP angeben, und einen jeweiligen, von der ersten Vorrichtung signierten Übertragungsbeleg enthält, der gegebene, zum Ausführen der Operation OP zu verwendende Betriebsparameter-Datenwerte und erste Zeitstempeldaten enthält;
(B) bei Empfang der verschlüsselten Nachricht von der ersten Vorrichtung D1 durch die zweite Vorrichtung D2 authentifiziert die Verarbeitungseinheit der zweiten Vorrichtung die erste Vorrichtung als Absender der empfangenen Nachricht, indem sie die Nachricht unter Verwendung eines öffentlichen kryptografischen Schlüssels entschlüsselt, der dem zum Verschlüsseln der Nachricht verwendeten privaten Schlüssel des Eigentümers der ersten Vorrichtung entspricht, oder indem sie einen gemeinsam genutzten symmetrischen Schlüssel verwendet, der mit dem privaten Schlüssel des Absenders der Nachricht ausgehandelt wurde, und indem sie überprüft, ob die Signatur auf dem empfangenen signierten Übertragungsbeleg gültig ist, und die Verarbeitungseinheit der zweiten Vorrichtung überprüft anhand der ersten Zeitstempeldaten in dem empfangenen signierten Übertragungsbeleg, ob keine Zeitüberschreitung vorliegt; und
(B1) falls die Authentifizierung der ersten Vorrichtung D1 fehlschlägt oder die Signatur auf dem signierten Übertragungsbeleg nicht gültig ist oder eine Zeitüberschreitung vorliegt, sendet die zweite Vorrichtung D2 mittels ihrer Kommunikationseinheit eine entsprechende Fehlermeldung an die Referenzvorrichtung, wird die Übertragung von Daten mit der ersten Vorrichtung D1 abgebrochen und leitet die Referenzvorrichtung RD die empfangene Fehlermeldung an die erste Vorrichtung D1 weiter; und
(B2) falls die Authentifizierung der ersten Vorrichtung D1 erfolgreich ist und die Signatur auf dem signierten Übertragungsbeleg gültig ist und keine Zeitüberschreitung vorliegt, wählt die Verarbeitungseinheit der zweiten Vorrichtung D2 in dem in ihrem Speicher gespeicherten Satz verifizierbarer Datenelemente D2VD verifizierbare Datenelemente D2SVD aus, deren Betriebsparameter-Datenwerte mit den empfangenen gegebenen Betriebsparameter-Datenwerten übereinstimmen, aktualisiert die Verarbeitungseinheit der zweiten Vorrichtung D2 die internen Regeln der ausgewählten verifizierbaren Datenelemente, führt die zweite Vorrichtung D2 die Operation unter Verwendung der ausgewählten verifizierbaren Datenelemente D2SVD aus und entfernt ihre Verarbeitungseinheit aus dem in ihrem Speicher gespeicherten Satz ihrer verifizierbaren Datenelemente D2VD die ausgewählten verifizierbaren Datenelemente D2SVD, speichert die ausgewählten verifizierbaren Datenelemente D2SVD mit den aktualisierten zugehörigen internen Regeln gesondert in ihrem Speicher, erzeugt einen Beweis PR1 für das Entfernen und gesonderte Speichern der ausgewählten verifizierbaren Datenelemente D2SVD, integriert die ausgewählten verifizierbaren Datenelemente D2SVD in die Nachricht, nimmt den erzeugten Beweis PR1 und zweite Zeitstempeldaten in den signierten Übertragungsbeleg auf, signiert den Übertragungsbeleg zusätzlich und nimmt diesen zusätzlich signierten Übertragungsbeleg in die Nachricht auf, verschlüsselt die Nachricht mit einem ihrer privaten Schlüssel und sendet die verschlüsselte Nachricht an die Referenzvorrichtung RD;
(C) bei Empfang der Nachricht von der zweiten Vorrichtung D2 durch das Kommunikationsmodul der Referenzvorrichtung RD entschlüsselt das Verarbeitungsmodul der Referenzvorrichtung RD die Nachricht mit einem öffentlichen Schlüssel, der dem von der zweiten Vorrichtung D2 zum Verschlüsseln der Nachricht verwendeten privaten Schlüssel entspricht, und überprüft, ob die Signaturen auf dem Übertragungsbeleg gültig sind und anhand der ersten und zweiten Zeitstempeldaten keine Zeitüberschreitung vorliegt, ob der Beweis PR1 gültig ist und die empfangenen ausgewählten verifizierbaren Datenelemente D2SVD der zweiten Vorrichtung den jeweiligen zugehörigen internen Regeln entsprechen; und
(C1) falls eine Signatur nicht gültig ist oder eine Zeitüberschreitung vorliegt oder der Beweis PR1 nicht gültig ist oder die empfangenen ausgewählten verifizierbaren Datenelemente D2SVD der zweiten Vorrichtung den jeweiligen internen Regeln nicht entsprechen, sendet die Referenzvorrichtung RD mittels ihres Kommunikationsmoduls eine entsprechende Fehlermeldung an die erste Vorrichtung D1 und die zweite Vorrichtung D2 und wird die Übertragung von Daten zwischen der ersten Vorrichtung D1 und der zweiten Vorrichtung D2 abgebrochen; und
(C2) falls die Signaturen gültig sind, keine Zeitüberschreitung vorliegt, der Beweis PR1 gültig ist und die empfangenen ausgewählten verifizierbaren Datenelemente D2SVD der zweiten Vorrichtung den jeweiligen internen Regeln entsprechen, nimmt das Verarbeitungsmodul der Referenzvorrichtung RD die ausgewählten verifizierbaren Datenelemente D2SVD der zweiten Vorrichtung in die Nachricht auf, signiert den signierten Übertragungsbeleg zusätzlich, hängt diesen zusätzlich signierten Übertragungsbeleg an die Nachricht an, verschlüsselt die Nachricht mit einem in dem Speichermodul gespeicherten privaten Schlüssel und sendet die verschlüsselte Nachricht an die erste Vorrichtung D1, und verschlüsselt das Verarbeitungsmodul der Referenzvorrichtung RD den zusätzlich signierten Übertragungsbeleg mit einem in dem Speichermodul gespeicherten privaten Schlüssel und sendet den verschlüsselten zusätzlich signierten Übertragungsbeleg an die zweite Vorrichtung D2;
(D) bei Empfang der Nachricht von der Referenzvorrichtung RD durch die Kommunikationseinheit der ersten Vorrichtung D1 entschlüsselt die Verarbeitungseinheit der ersten Vorrichtung D1 die Nachricht mit dem öffentlichen Schlüssel, der dem von der Referenzvorrichtung RD zum Verschlüsseln der Nachricht verwendeten privaten Schlüssel entspricht, und extrahiert die ausgewählten verifizierbaren Datenelemente der zweiten Vorrichtung aus der Nachricht; und
(D1) die erste Vorrichtung D1 modifiziert ihren in ihrem Speicher gespeicherten Satz verifizierbarer Datenelemente der ersten Vorrichtung (D1VD), indem sie einen neuen Satz verifizierbarer Datenelemente der ersten Vorrichtung D1VD' erzeugt und speichert, der die extrahierten ausgewählten verifizierbaren Datenelemente D2SVD der zweiten Vorrichtung enthält;
(E) bei Empfang der von der Referenzvorrichtung RD gemäß Schritt (C1) gesendeten Fehlermeldung durch die Kommunikationseinheit der zweiten Vorrichtung D2 überführt die Verarbeitungseinheit der zweiten Vorrichtung D2 die gesondert in ihrem Speicher gespeicherten ausgewählten verifizierbaren Datenelemente D2SVD der zweiten Vorrichtung in den Satz ihrer verifizierbaren Datenelemente D2VD;
(F) bei Empfang des von der Referenzvorrichtung RD gemäß Schritt (C2) gesendeten verschlüsselten signierten Übertragungsbelegs durch die Kommunikationseinheit der zweiten Vorrichtung D2, dessen Entschlüsselung und Validierung seiner Signaturen löscht die Verarbeitungseinheit der zweiten Vorrichtung D2 die gesondert in ihrem Speicher gespeicherten ausgewählten verifizierbaren Datenelemente D2SVD der zweiten Vorrichtung.

3. Verfahren nach Anspruch 1, wobei eine Uhr der Verarbeitungseinheit jeder Vorrichtung mit einer Uhr des Verarbeitungsmoduls der Referenzvorrichtung RD synchronisiert ist und jede Vorrichtung und die Referenzvorrichtung RD dazu eingerichtet sind, Zeitstempeldaten in einen Übertragungsbeleg aufzunehmen und anhand von Zeitstempeldaten in einem empfangenen Übertragungsbeleg zu überprüfen, ob eine Zeitüberschreitung vorliegt, und wobei eine Operation, die Teil der Aufgabe ist, gemäß den folgenden Schritten ausgeführt wird:
(A') eine erste Vorrichtung D1 sendet mittels ihrer Kommunikationseinheit an die Referenzvorrichtung RD eine Nachricht, die durch die Verarbeitungseinheit unter Verwendung eines ihrer in ihrem Speicher gespeicherten privaten Schlüssel verschlüsselt ist, wobei die Nachricht Daten, die eine von der zweiten Vorrichtung D2 auszuführende Operation OP angeben, und einen jeweiligen, von der ersten Vorrichtung signierten Übertragungsbeleg enthält, der gegebene, zum Ausführen der Operation OP zu verwendende Betriebsparameter-Datenwerte und erste Zeitstempeldaten enthält;
bei Empfang der verschlüsselten Nachricht von der ersten Vorrichtung D1 durch das Kommunikationsmodul der Referenzvorrichtung RD authentifiziert das Verarbeitungsmodul der Referenzvorrichtung RD die erste Vorrichtung als Absender der empfangenen Nachricht, indem es die Nachricht unter Verwendung eines öffentlichen kryptografischen Schlüssels entschlüsselt, der dem zum Verschlüsseln der Nachricht verwendeten privaten Schlüssel des Eigentümers der ersten Vorrichtung D1 entspricht, und das Verarbeitungsmodul der Referenzvorrichtung RD überprüft, ob die Signatur auf dem empfangenen signierten Übertragungsbeleg gültig ist und ob anhand der ersten Zeitstempeldaten in dem signierten Übertragungsbeleg keine Zeitüberschreitung vorliegt; und
(A1') falls die Authentifizierung der ersten Vorrichtung D1 fehlschlägt oder die Signatur des Übertragungsbelegs nicht gültig ist oder eine Zeitüberschreitung vorliegt, sendet die Referenzvorrichtung RD mittels ihres Kommunikationsmoduls eine Fehlernachricht an die erste Vorrichtung D1 und wird die Übertragung von Daten zwischen der ersten Vorrichtung D1 und der zweiten Vorrichtung D2 abgebrochen; und
(A2') falls die Authentifizierung der ersten Vorrichtung erfolgreich ist und die Signatur auf dem Übertragungsbeleg gültig ist und anhand der ersten Zeitstempeldaten keine Zeitüberschreitung vorliegt, nimmt das Verarbeitungsmodul der Referenzvorrichtung RD einen Zeitstempel RDTS der Referenzvorrichtung in den signierten Übertragungsbeleg auf, hängt diesen signierten Übertragungsbeleg an die Nachricht an, verschlüsselt die Nachricht, die den signierten Übertragungsbeleg enthält, mit einem ihrer in dem Speichermodul gespeicherten privaten Schlüssel und sendet die verschlüsselte Nachricht mittels ihres Kommunikationsmoduls an die zweite Vorrichtung D2;
(B') bei Empfang der verschlüsselten Nachricht von der Referenzvorrichtung RD durch die zweite Vorrichtung D2 authentifiziert die Verarbeitungseinheit der zweiten Vorrichtung D2 die Referenzvorrichtung RD als Absender der empfangenen Nachricht, indem sie die Nachricht unter Verwendung eines öffentlichen kryptografischen Schlüssels entschlüsselt, der dem zum Verschlüsseln der Nachricht verwendeten privaten Schlüssel des Eigentümers der Referenzvorrichtung RD entspricht, und überprüft, ob die Signatur der ersten Vorrichtung D1 auf dem empfangenen signierten Übertragungsbeleg gültig ist und ob anhand der ersten Zeitstempeldaten und der Zeitstempeldaten der Referenzvorrichtung des signierten Übertragungsbelegs in der Nachricht keine Zeitüberschreitung vorliegt; und
(B1') falls die Authentifizierung der Referenzvorrichtung RD fehlschlägt oder die Signatur auf dem signierten Übertragungsbeleg nicht gültig ist oder eine Zeitüberschreitung vorliegt, sendet die zweite Vorrichtung D2 mittels ihrer Kommunikationseinheit eine entsprechende Fehlermeldung an die Referenzvorrichtung RD, leitet die Referenzvorrichtung RD die empfangene Fehlermeldung an die erste Vorrichtung D1 weiter und wird die Übertragung von Daten mit der ersten Vorrichtung D1 abgebrochen; und
(B2') falls die Authentifizierung der Referenzvorrichtung RD erfolgreich ist und die Signatur auf dem signierten Übertragungsbeleg gültig ist und keine Zeitüberschreitung vorliegt, wählt die Verarbeitungseinheit der zweiten Vorrichtung D2 in dem in ihrem Speicher gespeicherten Satz verifizierbarer Datenelemente D2VD verifizierbare Datenelemente D2SVD aus, deren Betriebsparameter-Datenwerte mit den empfangenen gegebenen Betriebsparameter-Datenwerten übereinstimmen, aktualisiert die Verarbeitungseinheit der zweiten Vorrichtung D2 die den ausgewählten verifizierbaren Datenelementen zugeordneten internen Regeln, führt die zweite Vorrichtung D2 die Operation gemäß den ausgewählten verifizierbaren Datenelementen D2SVD aus und entfernt ihre Verarbeitungseinheit aus dem in ihrem Speicher gespeicherten Satz ihrer verifizierbaren Datenelemente D2VD die ausgewählten verifizierbaren Datenelemente D2SVD, speichert die ausgewählten verifizierbaren Datenelemente D2SVD mit den aktualisierten zugehörigen internen Regeln gesondert in ihrem Speicher, erzeugt einen Beweis PR1 für das Entfernen und gesonderte Speichern entsprechend dem Ausführen der Operation OP, integriert die ausgewählten verifizierbaren Datenelemente D2SVD in die Nachricht, nimmt den erzeugten Beweis PR1 und zweite Zeitstempeldaten in den signierten Übertragungsbeleg auf, signiert den signierten Übertragungsbeleg zusätzlich, hängt den zusätzlich signierten Übertragungsbeleg an die Nachricht an, verschlüsselt die Nachricht mit einem ihrer privaten Schlüssel und sendet die verschlüsselte Nachricht an die Referenzvorrichtung RD;
(C') bei Empfang der Nachricht von der zweiten Vorrichtung D2 durch das Kommunikationsmodul der Referenzvorrichtung RD entschlüsselt das Verarbeitungsmodul der Referenzvorrichtung RD die Nachricht mit einem öffentlichen Schlüssel, der dem von der zweiten Vorrichtung D2 zum Verschlüsseln der Nachricht verwendeten privaten Schlüssel entspricht, und überprüft, ob die Signaturen auf dem signierten Übertragungsbeleg gültig sind und anhand der ersten Zeitstempeldaten, der Zeitstempeldaten der Referenzvorrichtung und der zweiten Zeitstempeldaten in dem signierten Übertragungsbeleg keine Zeitüberschreitung vorliegt, ob der Beweis PR1 in dem signierten Übertragungsbeleg gültig ist und die empfangenen ausgewählten verifizierbaren Datenelemente D2SVD der zweiten Vorrichtung den jeweiligen zugehörigen internen Regeln entsprechen; und
(C1') falls eine Signatur nicht gültig ist oder eine Zeitüberschreitung vorliegt oder der Beweis PR1 nicht gültig ist oder die empfangenen ausgewählten verifizierbaren Datenelemente D2SVD der zweiten Vorrichtung den zugehörigen internen Regeln nicht entsprechen, sendet die Referenzvorrichtung RD mittels ihres Kommunikationsmoduls eine entsprechende Fehlermeldung an die erste Vorrichtung D1 und die zweite Vorrichtung D2 und wird die Übertragung von Daten zwischen der ersten Vorrichtung D1 und der zweiten Vorrichtung D2 abgebrochen; und
(C2') falls die Signaturen gültig sind, keine Zeitüberschreitung vorliegt, der Beweis PR1 gültig ist und die empfangenen ausgewählten verifizierbaren Datenelemente D2SVD der zweiten Vorrichtung den zugehörigen internen Regeln entsprechen, verschlüsselt das Verarbeitungsmodul der Referenzvorrichtung RD die Nachricht mit einem in dem Speichermodul gespeicherten privaten Schlüssel und sendet die verschlüsselte Nachricht, die den signierten Übertragungsbeleg enthält, an die erste Vorrichtung D1;
(D') bei Empfang der Nachricht und des signierten Übertragungsbelegs von der Referenzvorrichtung RD durch die Kommunikationseinheit der ersten Vorrichtung D1 entschlüsselt die Verarbeitungseinheit der ersten Vorrichtung D1 die Nachricht mit dem öffentlichen Schlüssel, der dem von der Referenzvorrichtung RD zum Verschlüsseln der Nachricht verwendeten privaten Schlüssel entspricht, überprüft, ob die Signaturen auf dem signierten Übertragungsbeleg gültig sind und ob anhand der ersten Zeitstempeldaten, der Zeitstempeldaten der Referenzvorrichtung und der zweiten Zeitstempeldaten keine Zeitüberschreitung vorliegt, und extrahiert die verifizierbaren Datenelemente D2SVD der zweiten Vorrichtung aus der entschlüsselten Nachricht; und
(D1') falls eine Signatur auf dem signierten Übertragungsbeleg nicht gültig ist oder eine Zeitüberschreitung vorliegt, sendet die erste Vorrichtung D1 mittels ihrer Kommunikationseinheit eine entsprechende Fehlermeldung an die Referenzvorrichtung RD, leitet die Referenzvorrichtung RD die empfangene Fehlermeldung an die zweite Vorrichtung D2 weiter und wird die Übertragung von Daten mit der ersten Vorrichtung D1 abgebrochen; und
(D2') falls die Signaturen auf dem signierten Übertragungsbeleg gültig sind und keine Zeitüberschreitung vorliegt, modifiziert die Verarbeitungseinheit der ersten Vorrichtung D1 ihren in ihrem Speicher gespeicherten Satz verifizierbarer Datenelemente der ersten Vorrichtung (D1VD), um durch Aufnahme der extrahierten ausgewählten verifizierbaren Datenelemente D2SVD der zweiten Vorrichtung in den Satz verifizierbarer Datenelemente der ersten Vorrichtung (D1VD) einen neuen Satz verifizierbarer Datenelemente der ersten Vorrichtung D1VD' zu erzeugen und zu speichern, erzeugt einen Beweis PR2 für diese Aufnahme, entfernt die ausgewählten verifizierbaren Datenelemente D2SVD der zweiten Vorrichtung aus der Nachricht, integriert den erzeugten Beweis PR2 für die Aufnahme in den signierten Übertragungsbeleg, verschlüsselt die Nachricht mit einem im Speicher der ersten Vorrichtung D1 gespeicherten privaten Schlüssel und leitet die verschlüsselte Nachricht, die den signierten Übertragungsbeleg enthält, an die Referenzvorrichtung RD weiter; und
(D3') bei Empfang der von der ersten Vorrichtung D1 gemäß Schritt (D2') gesendeten Nachricht mit dem signierten Übertragungsbeleg durch das Kommunikationsmodul der Referenzvorrichtung RD entschlüsselt das Verarbeitungsmodul der Referenzvorrichtung RD die Nachricht mit dem öffentlichen Schlüssel, der dem von der ersten Vorrichtung D1 zum Verschlüsseln der Nachricht verwendeten privaten Schlüssel entspricht, und überprüft, ob die Signaturen auf dem signierten Übertragungsbeleg gültig sind, ob anhand der ersten Zeitstempeldaten, der Zeitstempeldaten der Referenzvorrichtung und der zweiten Zeitstempeldaten keine Zeitüberschreitung vorliegt und ob der Beweis PR2 für die Aufnahme in dem signierten Übertragungsbeleg gültig ist; und
(D4') falls eine Signatur nicht gültig ist oder eine Zeitüberschreitung vorliegt oder der Beweis PR2 für die Aufnahme nicht gültig ist, sendet die Referenzvorrichtung RD mittels ihres Kommunikationsmoduls eine entsprechende Fehlermeldung an die erste Vorrichtung D1 und die zweite Vorrichtung D2 und wird die Übertragung von Daten zwischen der ersten Vorrichtung D1 und der zweiten Vorrichtung D2 abgebrochen; und
(D5') falls die Signaturen gültig sind, keine Zeitüberschreitung vorliegt und der Beweis PR2 für die Aufnahme gültig ist, verschlüsselt das Verarbeitungsmodul der Referenzvorrichtung RD die Nachricht mit einem privaten Schlüssel aus dem Satz der in dem Speichermodul gespeicherten privaten Schlüssel und leitet die Nachricht mittels des Kommunikationsmoduls an die zweite Vorrichtung D2 weiter;
(E') bei Empfang der von der Referenzvorrichtung RD gemäß Schritt (C1') gesendeten Fehlermeldung durch die Kommunikationseinheit der zweiten Vorrichtung D2 überführt die Verarbeitungseinheit der zweiten Vorrichtung D2 die gesondert in ihrem Speicher gespeicherten ausgewählten verifizierbaren Datenelemente D2SVD der zweiten Vorrichtung in den Satz ihrer verifizierbaren Datenelemente;
(F') bei Empfang der von der Referenzvorrichtung RD gemäß Schritt (D5') weitergeleiteten Nachricht mit dem signierten Übertragungsbeleg durch die Kommunikationseinheit der zweiten Vorrichtung D2 entschlüsselt die Verarbeitungseinheit der zweiten Vorrichtung D2 die Nachricht mit einem gespeicherten öffentlichen Schlüssel, der dem von der Referenzvorrichtung RD zum Verschlüsseln der Nachricht verwendeten privaten Schlüssel entspricht, und überprüft, ob die Signaturen auf dem Übertragungsbeleg gültig sind und anhand der ersten Zeitstempeldaten, der Zeitstempeldaten der Referenzvorrichtung und der zweiten Zeitstempeldaten keine Zeitüberschreitung vorliegt und dass der Beweis PR2 für die Aufnahme gültig ist; und
(F1') falls eine Signatur nicht gültig ist oder eine Zeitüberschreitung vorliegt oder der empfangene Beweis PR2 für die Aufnahme nicht gültig ist, sendet die zweite Vorrichtung D2 mittels ihrer Kommunikationseinheit eine entsprechende Fehlermeldung an die Referenzvorrichtung RD, wird die Übertragung von Daten an die erste Vorrichtung D1 abgebrochen und leitet die Referenzvorrichtung RD die Fehlermeldung an die erste Vorrichtung D1 weiter; und
(F2') falls die Signaturen gültig sind und keine Zeitüberschreitung vorliegt und der empfangene Beweis PR2 für die Aufnahme gültig ist, löscht die zweite Vorrichtung D2 die gesondert in ihrem Speicher gespeicherten ausgewählten verifizierbaren Datenelemente D2SVD der zweiten Vorrichtung, erzeugt ferner einen Beweis PR3 für dieses Löschen, integriert den erzeugten Beweis PR3 für das Löschen in den signierten Übertragungsbeleg, verschlüsselt die Nachricht, die den signierten Übertragungsbeleg enthält, mit einem ihrer privaten Schlüssel und leitet die verschlüsselte Nachricht an die Referenzvorrichtung RD weiter; und
(G') bei Empfang der von der zweiten Vorrichtung D2 gemäß Schritt (F2') weitergeleiteten Nachricht mit dem signierten Übertragungsbeleg durch das Kommunikationsmodul der Referenzvorrichtung RD entschlüsselt das Verarbeitungsmodul der Referenzvorrichtung RD die Nachricht mit einem öffentlichen Schlüssel, der dem von der zweiten Vorrichtung D2 zum Verschlüsseln der Nachricht verwendeten privaten Schlüssel entspricht, und überprüft, ob die Signaturen auf dem Übertragungsbeleg gültig sind, ob anhand der ersten Zeitstempeldaten, der Zeitstempeldaten der Referenzvorrichtung und der zweiten Zeitstempeldaten keine Zeitüberschreitung vorliegt und ob der empfangene Beweis PR3 für das Löschen in dem signierten Übertragungsbeleg gültig ist; und
(G1') falls eine Signatur auf dem signierten Übertragungsbeleg nicht gültig ist oder eine Zeitüberschreitung vorliegt oder der empfangene Beweis PR3 für das Löschen nicht gültig ist, sendet die Referenzvorrichtung RD mittels ihres Kommunikationsmoduls eine entsprechende Fehlermeldung an die zweite Vorrichtung D2 und die erste Vorrichtung D1 und wird die Übertragung von Daten zwischen der ersten Vorrichtung D1 und der zweiten Vorrichtung D2 abgebrochen; und
(G2') falls die Signaturen auf dem signierten Übertragungsbeleg gültig sind und anhand der ersten Zeitstempeldaten, der Zeitstempeldaten der Referenzvorrichtung und der zweiten Zeitstempeldaten keine Zeitüberschreitung vorliegt und der empfangene Beweis PR3 für das Löschen gültig ist, signiert das Verarbeitungsmodul der Referenzvorrichtung RD den signierten Übertragungsbeleg zusätzlich, verschlüsselt den zusätzlich signierten Übertragungsbeleg mit einem der in dem Speichermodul gespeicherten privaten Schlüssel und leitet den verschlüsselten zusätzlich signierten Übertragungsbeleg mittels des Kommunikationsmoduls an die erste Vorrichtung D1 und die zweite Vorrichtung D2 weiter.

4. Verfahren nach Anspruch 2 oder 3, wobei in Schritt (C) bzw. (C'),
falls die internen Regeln der empfangenen ausgewählten verifizierbaren Datenelemente D2SVD der zweiten Vorrichtung eine Verwendung verifizierbarer Nachweise des Eigentümers der ersten Vorrichtung D1 bzw. der zweiten Vorrichtung D2 vorgeben, die Referenzvorrichtung RD ferner eine Konformität der verifizierbaren Nachweise des Eigentümers der ersten Vorrichtung D1 bzw. der zweiten Vorrichtung D2 mit den internen Regeln prüft, und zwar jeweils durch Kommunikation mit der ersten bzw. der zweiten Vorrichtung über ein Protokoll zum Teilen von Nachweisen.

5. Verfahren nach einem der Ansprüche 1 bis 4, wobei
jedes verifizierbare Datenelement des Satzes verifizierbarer Datenelemente einer Vorrichtung jeweiligen Blattknoten eines der Vorrichtung entsprechenden Merkle-Baums zugeordnet ist, wobei jeder Blattknoten einem Hashwert entspricht, der durch Hashen des jeweiligen zugeordneten verifizierbaren Datenelements mit einer Hashfunktion erhalten wird, wobei der Merkle-Baum Zwischenknoten bis zu einem Wurzelknoten des Baums aufweist, wobei der Wurzelknoten einem gemäß einem Hash-Schema des Merkle-Baums berechneten Wurzelwert des Baums entspricht, und wobei der Merkle-Baum im Speicher der Vorrichtung gespeichert ist;
die Verarbeitungseinheit der Vorrichtung dazu eingerichtet ist, eine Modifikation des in ihrem Speicher gespeicherten Satzes verifizierbarer Datenelemente, die einem Entfernen gegebener verifizierbarer Datenelemente aus dem Satz entspricht, durchzuführen, indem sie Knoten des gespeicherten Merkle-Baums auswählt, die jedem aus dem gespeicherten Satz verifizierbarer Datenelemente zu entfernenden gegebenen verifizierbaren Datenelement entsprechen, jedes entfernte verifizierbare Datenelement durch ein jeweiliges Stück Platzhalterdaten ersetzt und jedes Stück Platzhalterdaten mit der Hashfunktion hasht, um einen jeweiligen Platzhalter-Blattknotenwert zu erhalten, einen neuen Merkle-Baum aus dem gespeicherten Merkle-Baum durch Ersetzen der ausgewählten Blattknoten durch die jeweils entsprechenden Platzhalter-Blattknoten, um einen ersten Teil der Blattknoten des neuen Merkle-Baums zu erhalten, und durch Anfügen eines davon verschiedenen zweiten Teils von Blattknoten, die jeweils den ausgewählten Blattknoten des Merkle-Baums entsprechen, als gesondert gespeicherte Blattknoten an den ersten Teil bildet, neue Zwischenknoten des neuen Merkle-Baums bis zu einem neuen Wurzelknoten des neuen Merkle-Baums, der den ersten und den zweiten Teil von Blattknoten aufweist, unter Verwendung der Hashfunktion gemäß dem Hash-Schema berechnet und den neuen Merkle-Baum im Speicher der Vorrichtung speichert;
die Verarbeitungseinheit der Vorrichtung dazu eingerichtet ist, einen Beweis für die Modifikation des in ihrem Speicher gespeicherten Satzes verifizierbarer Datenelemente, die dem Ausführen einer von der Vorrichtung unter Verwendung der Betriebsparameter-Datenwerte der gegebenen verifizierbaren Datenelemente durchgeführten Operation entspricht, zu erzeugen, indem sie den neuen Wurzelknotenwert des neuen Merkle-Baums zusammen mit Wurzelverifizierungsdaten an die Referenzvorrichtung sendet, die jeweils die Werte der neuen Platzhalterknoten und die Werte neuer Zwischenknoten des neuen Merkle-Baums aufweisen, die gegenüber dem Merkle-Baum modifiziert worden sind und die erforderlich sind, um den neuen Wurzelwert mit der Hashfunktion gemäß dem Hash-Schema zu ermitteln; und
das Verarbeitungsmodul der Referenzvorrichtung dazu eingerichtet ist, zu überprüfen, dass ein neuer Wurzelknotenwert eines neuen Merkle-Baums, der von der Vorrichtung zusammen mit jeweiligen Wurzelverifizierungsdaten als Beweis für die Durchführung der Operation durch die Vorrichtung empfangen wird, mit einem aus den empfangenen Wurzelverifizierungsdaten berechneten Test-Wurzelknotenwert übereinstimmt, wodurch es eine Überprüfung durchführt, dass die Vorrichtung die Operation durchgeführt hat;
im Falle eines Löschens der verifizierbaren Datenelemente, die den gesondert gespeicherten Blattknoten des neuen Merkle-Baums entsprechen, ein resultierender aktualisierter Merkle-Baum erhalten wird, indem jeweilige Werte seiner aktualisierten Zwischen-Blattknoten bis zu seinem aktualisierten Wurzelknoten mit der Hashfunktion gemäß dem Hash-Schema nur aus dem ersten Teil der Blattknoten des neuen Merkle-Baums berechnet werden, wobei der aktualisierte Wurzelknotenwert des aktualisierten Merkle-Baums zusammen mit jeweiligen aktualisierten Wurzelverifizierungsdaten einen Beweis für das Löschen der verifizierbaren Datenelemente darstellt;
im Falle einer Aufnahme spezifischer verifizierbarer Datenelemente in einen Satz verifizierbarer Datenelemente, der als anfänglicher Merkle-Baum in einem Speicher einer Vorrichtung gespeichert ist, jeweilige Werte zusätzlicher Blattknoten mit der Hashfunktion aus jedem aufgenommenen spezifischen verifizierbaren Datenelement berechnet werden und ein jeweiliger endgültiger Merkle-Baum aus den Werten der Blattknoten des anfänglichen Merkle-Baums und den Werten der zusätzlichen Blattknoten gemäß dem Hash-Schema berechnet wird, wobei der resultierende Wurzelknotenwert des endgültigen Merkle-Baums zusammen mit resultierenden Wurzelverifizierungsdaten einen Beweis für die Aufnahme der spezifischen verifizierbaren Datenelemente darstellt; und
die Verarbeitungseinheiten der Vorrichtungen und das Verarbeitungsmodul der Referenzvorrichtung dazu eingerichtet sind, Knotenwerte eines Merkle-Baums mit einer programmierten Hashfunktion und einem Hash-Schema zu berechnen und einen Wurzelwert aus Wurzelverifizierungsdaten zu berechnen.

6. Verfahren nach einem der Ansprüche 2 bis 5, wobei in Schritt (B2) bzw. Schritt (B2') die Verarbeitungseinheit der zweiten Vorrichtung D2:
einen neuen symmetrischen Verschlüsselungsschlüssel K erzeugt und ein spezifisches Steuerfeld jedes ausgewählten verifizierbaren Datenelements D2SVD mit dem erzeugten Schlüssel K verschlüsselt;
den erzeugten Schlüssel K so verschlüsselt, dass er mit einem öffentlichen kryptografischen Schlüssel der ersten Vorrichtung D1 entschlüsselt werden kann; und
ferner den verschlüsselten Schlüssel K zusammen mit jedem verschlüsselten spezifischen Steuerfeld in die Nachricht integriert.

7. Verfahren nach Anspruch 6, wobei in Schritt (C2) bzw. Schritt (C2') bei Empfang der Nachricht, die die ausgewählten verifizierbaren Datenelemente D2SVD der zweiten Vorrichtung und den signierten Übertragungsbeleg enthält, von der Referenzvorrichtung RD die Verarbeitungseinheit der ersten Vorrichtung den verschlüsselten Schlüssel K mit einem jeweiligen in ihrem Speicher gespeicherten privaten Schlüssel der ersten Vorrichtung entschlüsselt, um den Verschlüsselungsschlüssel K zu erhalten, und jedes verschlüsselte Steuerfeld der ausgewählten verifizierbaren Datenelemente D2SVD der zweiten Vorrichtung in der empfangenen Nachricht mit dem Schlüssel K entschlüsselt, wodurch es der ersten Vorrichtung D1 ermöglicht wird, auf Steuerfelddaten der zweiten Vorrichtung D2 zuzugreifen, ohne dass diese Daten gegenüber der Referenzvorrichtung RD offengelegt werden.

8. Verfahren nach einem der Ansprüche 2 bis 5, wobei in Schritt (B) bzw. Schritt (B') nach dem Entschlüsseln der empfangenen Nachricht und vor dem Überprüfen, dass die Signatur des empfangenen signierten Übertragungsbelegs gültig ist und dass keine Zeitüberschreitung vorliegt, die zweite Vorrichtung D2 eine weitere Authentifizierungsstufe der ersten Vorrichtung D1 bzw. der Referenzvorrichtung RD durchführt, indem sie einen Schritt einer Challenge-Response-Kommunikation mit der ersten Vorrichtung D1 bzw. der Referenzvorrichtung RD durchführt, und erst bei Empfang einer korrekten Antwort der ersten Vorrichtung D1 bzw. der Referenzvorrichtung RD auf eine ihr von der zweiten Vorrichtung D2 gesendete Challenge durch die zweite Vorrichtung D2 die Verarbeitungseinheit der zweiten Vorrichtung D2 dann überprüft, dass die Signatur auf dem empfangenen signierten Übertragungsbeleg gültig ist und dass anhand der ersten Zeitstempeldaten in dem signierten Übertragungsbeleg keine Zeitüberschreitung vorliegt, und, falls die Antwort auf die Challenge fehlerhaft ist, die Übertragung von Daten mit der ersten Vorrichtung D1 abgebrochen wird.

9. Verfahren nach einem der Ansprüche 1 bis 8, wobei
jeder DID eines Eigentümers einer Vorrichtung einen jeweiligen, von einem Identitätsserver (IS) als Reaktion auf einen einmaligen Registrierungsvorgang des Eigentümers der Vorrichtung bei dem Identitätsserver ausgegebenen eindeutigen Identifikator (UID) des Eigentümers der Vorrichtung enthält,
jede Vorrichtung dazu eingerichtet ist, über das Kommunikationsnetz mit einem Escrow-Server (ES) zu kommunizieren, und jeder Eigentümer einer Vorrichtung einen einmaligen Registrierungsvorgang bei dem Escrow-Server durchführen kann, indem er ihm über die Vorrichtung eine Anfrage sendet, die seinen eindeutigen Identifikator und ein kryptografisches Commitment zu einem Verknüpfungsgeheimnis der Vorrichtung enthält, wobei der Escrow-Server bei Empfang der Anfrage einen jeweiligen Entropie-Testvektor (ETV) als einen von einem Zufallszahlengenerator erzeugten Byteblock und ein jeweiliges Paar asymmetrischer Verschlüsselungsschlüssel (OK_{pub}, OKₚᵣᵢᵥ) erstellt, ein jeweiliges abgeschirmtes Profil (SP) bestimmt, das erhalten wird, indem zuerst der empfangene eindeutige Identifikator (UID) mit dem privaten Schlüssel OKₚᵣᵢᵥ verschlüsselt wird und dann der Entropie-Testvektor und der verschlüsselte eindeutige Identifikator mit dem privaten Schlüssel OKₚᵣᵢᵥ verschlüsselt werden, das erhaltene Triplett (OK_{pub}, SP, UID) speichert und einen anonymen verifizierbaren Nachweis C_{ES}, der das Triplett (OK_{pub}, SP, UID) und das kryptografische Commitment zu dem Verknüpfungsgeheimnis der Vorrichtung enthält, an die Vorrichtung ausgibt, wobei der Escrow-Server dazu eingerichtet ist, über das Kommunikationsnetz mit dem Identitätsserver zu kommunizieren und den Identitätsserver aufzufordern, zu bestätigen, dass ein von dem Escrow-Server von einer Vorrichtung empfangener eindeutiger Identifikator (UID) tatsächlich dem Eigentümer der Vorrichtung gehört,
jede Vorrichtung dazu eingerichtet ist, über das Kommunikationsnetz mit einem Governance-Server (GS) zu kommunizieren, und jeder Eigentümer einer Vorrichtung einen einmaligen Registrierungsvorgang bei dem Governance-Server durchführen kann, indem er zunächst über seine Vorrichtung eine Sitzung mit dem Governance-Server aufbaut, während der die Vorrichtung einen ephemeren DID verwendet und der Governance-Server authentifiziert wird, wobei der Governance-Server die Vorrichtung dann auffordert, einen Beweis für die Registrierung ihres Eigentümers bei dem Escrow-Server (ES) zu erbringen, und die Vorrichtung als Antwort einen Beweis auf Grundlage des von dem Escrow-Server ausgegebenen anonymen verifizierbaren Nachweises C_{ES} erzeugt und den Beweis an den Governance-Server sendet, wobei der Governance-Server bei Empfang des Beweises eine Vielzahl von Einmal-Identitätstoken und einen jeweiligen verifizierbaren Nachweis C_{GS} an die Vorrichtung ausgibt, wobei jedes ausgegebene Einmal-Identitätstoken (SUIT) eine Zeichenfolge ist, die zum Nachschlagen des öffentlichen Schlüssels OK_{pub} der Vorrichtung verwendet werden kann, und wobei der ausgegebene verifizierbare Nachweis C_{GS} ein Feld für jedes ausgegebene Einmal-Identitätstoken (SUIT) und das kryptografische Commitment zu dem Verknüpfungsgeheimnis der Vorrichtung enthält,
falls eine Vorrichtung A der Vielzahl von Vorrichtungen unter Verwendung eines zuvor noch nie gesehenen DID mit einer Vorrichtung B der Vielzahl von Vorrichtungen kommuniziert,
die Vorrichtung B die Vorrichtung A dann auffordert, zu beweisen, dass der Eigentümer der Vorrichtung A bei dem Governance-Server registriert ist, indem die Vorrichtung A eines der Einmal-Identitätstoken SUITs offenlegt, die von dem Governance-Server in dem jeweiligen verifizierbaren Nachweis C_{GS} an die Vorrichtung A ausgegeben wurden,
wobei die Vorrichtung A als Antwort einen Zero-Knowledge-Beweis auf Grundlage des verifizierbaren Nachweises C_{GS} erbringt, der eines der jeweiligen Einmal-Identitätstoken SUIT offenlegt, und
die Vorrichtung B die offengelegten Einmal-Identitätstoken SUIT in dem von der Vorrichtung A erzeugten signierten Übertragungsbeleg aufzeichnet.

10. System zum Steuern einer Vielzahl von Vorrichtungen über eine Referenzvorrichtung und zum Veranlassen der Vorrichtungen, zur Durchführung einer Aufgabe zusammenzuwirken, wobei jede Vorrichtung einem jeweiligen Eigentümer gehört, wobei jede Vorrichtung mit einer Verarbeitungseinheit mit einem Speicher und einer Kommunikationseinheit ausgestattet und dazu eingerichtet ist, zur Durchführung der Aufgabe erforderliche Operationen auszuführen, wobei der Speicher jeder Vorrichtung Folgendes speichert: einen jeweiligen Satz privater kryptografischer Schlüssel des Eigentümers der Vorrichtung, einen dezentralen Identifikator (DID) ihres Eigentümers, dem ein Satz öffentlicher kryptografischer Schlüssel zugeordnet ist, die jeweils den privaten Schlüsseln entsprechen, ein programmiertes Verfahren zur Authentifizierung der anderen Vorrichtungen und der Referenzvorrichtung, das dazu eingerichtet ist, auf der Verarbeitungseinheit der Vorrichtung ausgeführt zu werden, die Sätze öffentlicher kryptografischer Schlüssel der anderen Vorrichtungen, einen Satz verifizierbarer Datenelemente mit jeweiligen Betriebsparameter-Datenwerten und zugehörigen, zur Durchführung der Aufgabe erforderlichen internen Regeln und verifizierbare Nachweise des Eigentümers der Vorrichtung, wobei die Kommunikationseinheiten der Vorrichtungen dazu eingerichtet sind, über ein drahtloses oder drahtgebundenes Kommunikationsnetz sicher miteinander zu kommunizieren, wobei die Referenzvorrichtung mit einem Verarbeitungsmodul, einem Speichermodul und einem Kommunikationsmodul ausgestattet und dazu eingerichtet ist, über das drahtlose oder drahtgebundene Kommunikationsnetz sicher mit der Kommunikationseinheit jeder Vorrichtung zu kommunizieren, wobei die Referenzvorrichtung und die Vorrichtungen dazu eingerichtet sind, Daten unter Verwendung von Verschlüsselungsprotokollen zu übertragen, wobei das Speichermodul der Referenzvorrichtung einen jeweiligen Satz privater kryptografischer Schlüssel eines Referenzeigentümers der Referenzvorrichtung, jeweilige dezentrale Identifikatordaten (DID) und einen Satz öffentlicher kryptografischer Schlüssel, die jeweils den privaten Schlüsseln der Referenzvorrichtung entsprechen, sowie den Satz öffentlicher kryptografischer Schlüssel jeder Vorrichtung der Vielzahl von Vorrichtungen speichert, wobei die Referenzvorrichtung und jede Vorrichtung dazu eingerichtet sind, einen Übertragungsbeleg mit ihren jeweiligen privaten Schlüsseln digital zu signieren, und wobei der Speicher jeder Vorrichtung ferner den Satz öffentlicher kryptografischer Schlüssel der Referenzvorrichtung speichert, wobei eine Uhr der Verarbeitungseinheit jeder Vorrichtung mit einer Uhr des Verarbeitungsmoduls der Referenzvorrichtung RD synchronisiert ist und jede Vorrichtung und die Referenzvorrichtung RD dazu eingerichtet sind, Zeitstempeldaten in einen Übertragungsbeleg aufzunehmen und anhand von Zeitstempeldaten in einem empfangenen Übertragungsbeleg zu überprüfen, ob eine Zeitüberschreitung vorliegt**, dadurch gekennzeichnet, dass** die Vorrichtungen und die Referenzvorrichtung dazu eingerichtet sind, die Schritte des Verfahrens nach einem der Ansprüche 1 bis 9 durchzuführen.

11. System nach Anspruch 10, ferner aufweisend:
einen Identitätsserver IS, der dazu eingerichtet ist, über das Kommunikationsnetz mit den Vorrichtungen zu kommunizieren und als Reaktion auf einen einmaligen Registrierungsvorgang des Eigentümers der Vorrichtung bei dem Identitätsserver einen jeweiligen, den dezentralen Identifikatordaten DID des Eigentümers der Vorrichtung zuzuordnenden eindeutigen Identifikator UID des Eigentümers an eine Vorrichtung auszugeben,
einen Escrow-Server ES, der dazu eingerichtet ist, über das Kommunikationsnetz mit den Vorrichtungen zu kommunizieren und eine einmalige Registrierung des Eigentümers einer Vorrichtung bei Empfang einer den eindeutigen Identifikator UID ihres Eigentümers und ein kryptografisches Commitment zu einem Verknüpfungsgeheimnis der Vorrichtung enthaltenden Anfrage von dieser Vorrichtung durchzuführen, indem er
creating a corresponding Entropy Test Vector (ETV) as a chunk of bytes generated by a random number generator, a corresponding pair of asymmetric encryption keys (OK_{pub}, OKₚᵣᵢᵥ), determining a corresponding shielded profile (SP) obtained by first encrypting the received unique identifier (UID) with the private key OKₚᵣᵢᵥ and then encrypting the Entropy Test Vector and encrypted unique identifier with the private key OKₚᵣᵢᵥ, storing the obtained triplet (OK_{pub}, SP, UID), and delivering to the device an anonymous verifiable credential C_{ES} containing the triplet (OK_{pub}, SP, UID) and the cryptographic commitment to the device's link secret, the Escrow Server being adapted to communicate with the Identity Server via the communication network and request the Identity Server to confirm that a unique identifier (UID) received by the Escrow Server from a device is indeed owned by the owner of said device,
einen Governance-Server GS, der dazu eingerichtet ist, über das Kommunikationsnetz mit den Vorrichtungen zu kommunizieren und einen einmaligen Registrierungsvorgang des Eigentümers einer Vorrichtung bei einem durch die Vorrichtung erfolgenden Aufbau einer Sitzung mit dem Governance-Server, während der die Vorrichtung einen ephemeren DID verwendet und der Governance-Server authentifiziert wird, durchzuführen, wobei der Governance-Server die Vorrichtung dann auffordert, einen Beweis für die Registrierung ihres Eigentümers bei dem Escrow-Server (ES) zu erbringen, und die Vorrichtung als Antwort einen Beweis auf Grundlage des von dem Escrow-Server ausgegebenen anonymen verifizierbaren Nachweises C_{ES} erzeugt und den Beweis an den Governance-Server sendet, und wobei der Governance-Server bei Empfang des Beweises eine Vielzahl von Einmal-Identitätstoken und einen jeweiligen verifizierbaren Nachweis C_{GS} an die Vorrichtung ausgibt, wobei jedes ausgegebene Einmal-Identitätstoken (SUIT) eine Zeichenfolge ist, die zum Nachschlagen des öffentlichen Schlüssels OK_{pub} der Vorrichtung verwendet werden kann, und wobei der ausgegebene verifizierbare Nachweis C_{GS} ein Feld für jedes ausgegebene Einmal-Identitätstoken (SUIT) und das kryptografische Commitment zu dem Verknüpfungsgeheimnis der Vorrichtung enthält, und
wobei, falls eine Vorrichtung A der Vielzahl von Vorrichtungen unter Verwendung eines zuvor noch nie gesehenen DID mit einer Vorrichtung B der Vielzahl von Vorrichtungen kommuniziert,
die Vorrichtung B die Vorrichtung A dann auffordert, zu beweisen, dass der Eigentümer der Vorrichtung A bei dem Governance-Server GS registriert ist, indem die Vorrichtung A eines der Einmal-Identitätstoken SUITs offenlegt, die von dem Governance-Server in dem jeweiligen verifizierbaren Nachweis C_{GS} an die Vorrichtung A ausgegeben wurden, und
wobei die Vorrichtung A als Antwort einen Zero-Knowledge-Beweis auf Grundlage des verifizierbaren Nachweises C_{GS} erbringt, der eines der jeweiligen Einmal-Identitätstoken SUIT offenlegt, und
die Vorrichtung B die offengelegten Einmal-Identitätstoken SUIT in dem von der Vorrichtung A erzeugten signierten Übertragungsbeleg aufzeichnet.

## Revendications

1. Procédé pour commander une pluralité de dispositifs via un dispositif de référence et amener les dispositifs à coopérer pour réaliser une tâche, chaque dispositif étant détenu par un détenteur correspondant, chaque dispositif étant équipé d'une unité de traitement avec une mémoire et d'une unité de communication, et adapté pour exécuter des opérations nécessaires pour réaliser la tâche, la mémoire de chaque dispositif stockant un ensemble correspondant de clés cryptographiques privées du détenteur du dispositif, un identifiant décentralisé (DID) de son détenteur associé à un ensemble de clés cryptographiques publiques correspondant respectivement aux clés privées, un procédé programmé d'authentification des autres dispositifs et du dispositif de référence adapté pour tourner sur l'unité de traitement du dispositif, les ensembles de clés cryptographiques publiques des autres dispositifs, un ensemble de données vérifiables, chaque donnée vérifiable comprenant des valeurs de données de paramètres d'opération correspondantes et des règles internes associées nécessaires pour réaliser la tâche, et des accréditations vérifiables du détenteur du dispositif, les unités de communication des dispositifs étant adaptées pour communiquer de manière sécurisée les unes avec les autres via un réseau de communication sans fil ou filaire, le dispositif de référence étant équipé d'un module de traitement, d'un module de mémoire et d'un module de communication et adapté pour communiquer de manière sécurisée avec chaque unité de communication de dispositif via le réseau de communication sans fil ou filaire, le dispositif de référence et les dispositifs étant adaptés pour transférer des données en utilisant un protocole de chiffrement, le module de mémoire du dispositif de référence stockant un ensemble correspondant de clés cryptographiques privées d'un détenteur de référence du dispositif de référence, et des données d'identifiant décentralisé (DID) correspondantes associées à un ensemble de clés cryptographiques publiques correspondant respectivement aux clés privées de dispositif de référence, et à l'ensemble de clés cryptographiques publiques de chaque dispositif de ladite pluralité de dispositifs, le dispositif de référence et chaque dispositif étant adaptés pour signer numériquement avec leurs clés privées stockées correspondantes un reçu de transfert, et la mémoire de chaque dispositif stockant en outre l'ensemble de clés cryptographiques publiques du dispositif de référence, le procédé étant **caractérisé en ce que** :
- chaque transfert de données entre n'importe quels deux dispositifs, et entre le dispositif de référence et n'importe quel dispositif, est chiffré avec une clé privée conformément au protocole de chiffrement, et n'importe quel destinataire d'un message transféré conformément audit protocole de chiffrement authentifie un expéditeur du message reçu en déchiffrant le message avec une clé publique correspondant à la clé privée du détenteur de l'expéditeur du message utilisée pour chiffrer ledit message, et au cas où le message comporte un reçu de transfert signé, le destinataire vérifie en outre si chaque signature sur le reçu de transfert signé est valide ;
- chaque reçu de transfert signé envoyé ou reçu par un dispositif est stocké dans sa mémoire, et chaque reçu de transfert signé envoyé ou reçu par le dispositif de référence est stocké dans son module de mémoire ;
- à chaque fois qu'un premier dispositif envoie à un second dispositif, via son unité de communication, possiblement via le dispositif de référence, un message chiffré comportant un reçu de transfert signé et indiquant une opération impliquant une utilisation de valeurs de données de paramètres d'opération données devant être exécutée par le second dispositif comme faisant partie de la tâche, le reçu de transfert signé comporte les DID respectifs du premier dispositif, du second dispositif et du dispositif de référence conjointement avec les valeurs de données de paramètres d'opération données ; et,
- le second dispositif, à la réception de ce message par son unité de communication, déchiffre le message, exécute l'opération en utilisant les valeurs de données de paramètres d'opération comprises dans le reçu de transfert signé dans le message reçu et son unité de traitement retire de l'ensemble de ses données vérifiables stocké dans sa mémoire des données vérifiables sélectionnées dont les valeurs de paramètres d'opération coïncident avec les valeurs de données de paramètres d'opération données utilisées pour exécuter l'opération et stocke à part dans sa mémoire lesdites données vérifiables sélectionnées, génère une preuve desdits retrait et stockage à part des données vérifiables sélectionnées et ajoute la preuve générée dans le reçu de transfert signé, et le second dispositif signe encore via son unité de traitement le reçu de transfert signé dans le message déchiffré reçu, et envoie via son unité de communication au dispositif de référence un message chiffré comportant ledit reçu de transfert encore signé conjointement avec lesdites données vérifiables sélectionnées ; et
- à la réception par le module de communication du dispositif de référence du message chiffré provenant du second dispositif comportant ledit reçu de transfert encore signé conjointement avec lesdites données vérifiables sélectionnées, le dispositif de référence vérifie si la preuve reçue dans le reçu de transfert encore signé reçu est valide et si des données des données vérifiables sélectionnées reçues respectent les règles internes associées ; et
- en cas d'authentification réussie du destinataire et de l'expéditeur respectifs pour n'importe quel transfert de message entre le premier dispositif et le second dispositif concernant ladite opération, et entre n'importe lequel des premier et second dispositifs et le dispositif de référence concernant ladite opération, et de vérification réussie d'un contenu de données de n'importe quel message transféré, le dispositif de référence signe encore et stocke dans son module de mémoire le reçu de transfert signé par le premier dispositif et le second dispositif et contenant ladite preuve générée par le second dispositif, et envoie un message chiffré contenant ledit reçu de transfert encore signé au premier dispositif et au second dispositif, indiquant ainsi auxdits deux dispositifs que l'opération a été exécutée ; et
- à la réception par l'unité de communication du second dispositif dudit reçu de transfert encore signé par le dispositif de référence, le second dispositif efface de sa mémoire les données vérifiables sélectionnées.

2. Procédé selon la revendication 1, dans lequel une horloge d'unité de traitement de chaque dispositif est synchronisée sur une horloge de module de traitement du dispositif de référence RD, et chaque dispositif et le dispositif de référence RD sont adaptés pour ajouter des données d'estampille temporelle dans un reçu de transfert et vérifier s'il y a un dépassement de temps par rapport aux données d'estampille temporelle dans un reçu de transfert reçu, et dans lequel une opération qui fait partie de la tâche est exécutée conformément aux étapes suivantes :
(A) un premier dispositif D1 envoie à un second dispositif D2 via son unité de communication un message, chiffré par son unité de traitement en utilisant l'une de ses clés privées stockées dans sa mémoire, le message comportant des données indiquant une opération OP devant être exécutée par le second dispositif D2 et un reçu de transfert correspondant signé par le premier dispositif contenant des valeurs de données de paramètres d'opération données devant être utilisées pour exécuter l'opération OP et des premières données d'estampille temporelle ;
(B) à la réception par le second dispositif D2 du message chiffré provenant du premier dispositif D1, l'unité de traitement du second dispositif authentifie le premier dispositif comme étant l'expéditeur du message reçu en déchiffrant le message en utilisant une clé cryptographique publique correspondant à la clé privée du détenteur du premier dispositif utilisée pour chiffrer le message, ou en utilisant une clé symétrique partagée négociée avec la clé privée de l'expéditeur du message, et en vérifiant si la signature sur le reçu de transfert signé reçu est valide, et l'unité de traitement du second dispositif vérifie qu'il n'y a pas de dépassement de temps par rapport aux premières données d'estampille temporelle dans le reçu de transfert signé reçu ; et,
(B1) en cas d'échec de l'authentification du premier dispositif D1, ou de non-validité de la signature sur le reçu de transfert signé ou de dépassement de temps, le second dispositif D2 envoie au dispositif de référence une notification d'erreur correspondante via son unité de communication, le transfert de données avec le premier dispositif D1 est annulé, et le dispositif de référence RD retransmet la notification d'erreur reçue au premier dispositif D1 ; et
(B2) en cas de réussite de l'authentification du premier dispositif D1, et de validité de la signature sur le reçu de transfert signé, et d'absence de dépassement de temps, l'unité de traitement du second dispositif D2 sélectionne des données vérifiables D2SVD dont les valeurs de données de paramètres d'opération coïncident avec les valeurs de données de paramètres d'opération données reçues dans l'ensemble de données vérifiables D2VD stocké dans sa mémoire, l'unité de traitement du second dispositif D2 met à jour les règles internes des données vérifiables sélectionnées, le second dispositif D2 exécute l'opération en utilisant les données vérifiables D2SVD sélectionnées et son unité de traitement retire de l'ensemble de ses données vérifiables D2VD stocké dans sa mémoire les données vérifiables D2SVD sélectionnées et stocke à part dans sa mémoire lesdites données vérifiables D2SVD sélectionnées avec les règles internes associées mises à jour, génère une preuve PR1 desdits retrait et stockage à part des données vérifiables D2SVD sélectionnées, incorpore les données vérifiables D2SVD sélectionnées dans le message, ajoute la preuve PR1 générée et des secondes données d'estampille temporelle dans le reçu de transfert signé, signe encore le reçu de transfert et ajoute ce reçu de transfert encore signé dans le message, chiffre avec l'une de ses clés privées le message et envoie au dispositif de référence RD le message chiffré ;
(C) à la réception par le module de communication du dispositif de référence RD du message provenant du second dispositif D2, le module de traitement du dispositif de référence RD déchiffre le message avec une clé publique correspondant à la clé privée utilisée par le second dispositif D2 pour chiffrer le message, vérifie si les signatures sur le reçu de transfert sont valides et qu'il n'y a pas de dépassement de temps par rapport aux premières et secondes données d'estampille temporelle, si la preuve PR1 est valide et les données vérifiables D2SVD sélectionnées de second dispositif reçues respectent les règles internes associées correspondantes ; et
(C1) en cas de non-validité d'une signature ou de dépassement de temps ou de non-validité de la preuve PR1 ou de non-respect par les données vérifiables D2SVD sélectionnées de second dispositif reçues des règles internes correspondantes, le dispositif de référence RD envoie au premier dispositif D1 et au second dispositif D2 une notification d'erreur correspondante via son module de communication et le transfert de données entre le premier dispositif D1 et le second dispositif D2 est annulé ; et
(C2) en cas de validité des signatures, d'absence de dépassement de temps, de validité de la preuve PR1, et de respect par les données vérifiables D2SVD sélectionnées de second dispositif reçues des règles internes correspondantes, le module de traitement du dispositif de référence RD ajoute les données vérifiables D2SVD sélectionnées de second dispositif dans le message, signe encore le reçu de transfert signé et attache ce reçu de transfert encore signé au message, chiffre le message avec une clé privée stockée dans le module de mémoire, envoie au premier dispositif D1 le message chiffré, et le module de traitement du dispositif de référence RD chiffre le reçu de transfert encore signé avec une clé privée stockée dans le module de mémoire et envoie le reçu de transfert encore signé chiffré au second dispositif D2 ;
(D) à la réception par l'unité de communication du premier dispositif D1 du message provenant du dispositif de référence RD, l'unité de traitement du premier dispositif D1 déchiffre le message avec la clé publique correspondant à la clé privée utilisée par le dispositif de référence RD pour chiffrer le message et extrait les données vérifiables sélectionnées de second dispositif du message ; et,
(D1) le premier dispositif D1 modifie son ensemble de données vérifiables de premier dispositif (D1VD) stocké dans sa mémoire en générant et stockant un nouvel ensemble de données vérifiables de premier dispositif D1VD' comportant les données vérifiables D2SVD sélectionnées de second dispositif extraites ;
(E) à la réception par l'unité de communication du second dispositif D2 de la notification d'erreur envoyée par le dispositif de référence RD conformément à l'étape (C1), l'unité de traitement du second dispositif D2 transfère les données vérifiables D2SVD sélectionnées de second dispositif stockées à part dans sa mémoire dans l'ensemble de ses données vérifiables D2VD ;
(F) à la réception par l'unité de communication du second dispositif D2 du déchiffrement et de la validation des signatures du reçu de transfert signé chiffré envoyé par le dispositif de référence RD conformément à l'étape (C2), l'unité de traitement du second dispositif D2 efface les données vérifiables D2SVD sélectionnées de second dispositif stockées à part dans sa mémoire.

3. Procédé selon la revendication 1, dans lequel une horloge d'unité de traitement de chaque dispositif est synchronisée sur une horloge de module de traitement du dispositif de référence RD, et chaque dispositif et le dispositif de référence RD sont adaptés pour ajouter des données d'estampille temporelle dans un reçu de transfert et vérifier s'il y a un dépassement de temps par rapport aux données d'estampille temporelle dans un reçu de transfert reçu, et dans lequel une opération qui fait partie de la tâche est exécutée conformément aux étapes suivantes :
(A') un premier dispositif D1 envoie au dispositif de référence RD via son unité de communication un message, chiffré par son unité de traitement en utilisant l'une de ses clés privées stockées dans sa mémoire, le message comportant des données indiquant une opération OP devant être exécutée par le second dispositif D2 et un reçu de transfert correspondant signé par le premier dispositif contenant des valeurs de données de paramètres d'opération données devant être utilisées pour exécuter l'opération OP et des premières données d'estampille temporelle ;
à la réception par le module de communication du dispositif de référence RD du message chiffré provenant du premier dispositif D1, le module de traitement du dispositif de référence RD authentifie le premier dispositif comme étant l'expéditeur du message reçu en déchiffrant le message en utilisant une clé cryptographique publique correspondant à la clé privée du détenteur du premier dispositif D1 utilisée pour chiffrer le message, et le module de traitement du dispositif de référence RD vérifie si la signature sur le reçu de transfert signé reçu est valide, et qu'il n'y a pas de dépassement de temps par rapport aux premières données d'estampille temporelle dans le reçu de transfert signé ; et,
(A1') en cas d'échec de l'authentification du premier dispositif D1, ou de non-validité de la signature du reçu de transfert ou de dépassement de temps, le dispositif de référence RD envoie au premier dispositif D1 un message d'erreur via son module de communication et le transfert de données entre le premier dispositif D1 et le second dispositif D2 est annulé°; et
(A2') en cas de réussite de l'authentification du premier dispositif, et de validité de la signature sur le reçu de transfert, et d'absence de dépassement de temps par rapport aux premières données d'estampille temporelle, le module de traitement du dispositif de référence RD ajoute une estampille temporelle de dispositif de référence RDTS dans le reçu de transfert signé, attache ce reçu de transfert signé au message et chiffre le message comportant le reçu de transfert signé avec l'une de ses clés privées stockées dans le module de mémoire, et envoie au second dispositif D2 le message chiffré via son module de communication ;
(B') à la réception par le second dispositif D2 du message chiffré provenant du dispositif de référence RD, l'unité de traitement du second dispositif D2 authentifie le dispositif de référence RD comme étant l'expéditeur du message reçu en déchiffrant le message en utilisant une clé cryptographique publique correspondant à la clé privée du détenteur du dispositif de référence RD utilisée pour chiffrer le message, vérifie si la signature du premier dispositif D1 sur le reçu de transfert signé reçu est valide, et qu'il n'y a pas de dépassement de temps par rapport aux premières données d'estampille temporelle et aux données d'estampille temporelle de dispositif de référence du reçu de transfert signé dans le message ; et,
(B1') en cas d'échec de l'authentification du dispositif de référence RD, ou de non-validité de la signature sur le reçu de transfert signé ou de dépassement de temps, le second dispositif D2 envoie au dispositif de référence RD une notification d'erreur correspondante via son unité de communication, le dispositif de référence RD retransmet la notification d'erreur reçue au premier dispositif D1 et le transfert de données avec le premier dispositif D1 est annulé ; et
(B2') en cas de réussite de l'authentification du dispositif de référence RD, et de validité de la signature sur le reçu de transfert signé, et d'absence de dépassement de temps, l'unité de traitement du second dispositif D2 sélectionne des données vérifiables D2SVD dont les valeurs de données de paramètres d'opération coïncident avec les valeurs de données de paramètres d'opération données reçues dans l'ensemble de données vérifiables D2VD stocké dans sa mémoire, l'unité de traitement du second dispositif D2 met à jour les règles internes associées aux données vérifiables sélectionnées, le second dispositif D2 exécute l'opération conformément aux données vérifiables D2SVD sélectionnées et son unité de traitement retire de l'ensemble de ses données vérifiables D2VD stocké dans sa mémoire les données vérifiables D2SVD sélectionnées et stocke à part dans sa mémoire lesdites données vérifiables D2SVD sélectionnées avec les règles internes associées mises à jour, génère une preuve PR1 desdits retrait et stockage à part correspondant à ladite exécution de l'opération OP, incorpore les données vérifiables D2SVD sélectionnées dans le message, ajoute la preuve PR1 générée et des secondes données d'estampille temporelle dans le reçu de transfert signé, signe encore le reçu de transfert signé et attache le reçu de transfert encore signé au message, chiffre avec l'une de ses clés privées le message et envoie au dispositif de référence RD le message chiffré ;
(C') à la réception par le module de communication du dispositif de référence RD du message provenant du second dispositif D2, le module de traitement du dispositif de référence RD déchiffre le message avec une clé publique correspondant à la clé privée utilisée par le second dispositif D2 pour chiffrer le message, vérifie si les signatures sur le reçu de transfert signé sont valides et qu'il n'y a pas de dépassement de temps par rapport aux premières données d'estampille temporelle, aux données d'estampille temporelle de dispositif de référence et aux secondes données d'estampille temporelle dans le reçu de transfert signé, si la preuve PR1 dans le reçu de transfert signé est valide et les données vérifiables D2SVD sélectionnées de second dispositif reçues respectent les règles internes associées correspondantes ; et
(C1') en cas de non-validité d'une signature ou de dépassement de temps ou de non-validité de la preuve PR1 ou de non-respect par les données vérifiables D2SVD sélectionnées de second dispositif reçues des règles internes associées, le dispositif de référence RD envoie au premier dispositif D1 et au second dispositif D2 une notification d'erreur correspondante via son module de communication et le transfert de données entre le premier dispositif D1 et le second dispositif D2 est annulé ; et
(C2') en cas de validité des signatures, d'absence de dépassement de temps, de validité de la preuve PR1, et de respect par les données vérifiables D2SVD sélectionnées de second dispositif reçues des règles internes associées, le module de traitement du dispositif de référence RD chiffre le message avec une clé privée stockée dans le module de mémoire, et envoie au premier dispositif D1 le message chiffré comportant le reçu de transfert signé ;
(D') à la réception par l'unité de communication du premier dispositif D1 du message et du reçu de transfert signé provenant du dispositif de référence RD, l'unité de traitement du premier dispositif D1 déchiffre le message avec la clé publique correspondant à la clé privée utilisée par le dispositif de référence RD pour chiffrer le message, vérifie si les signatures sur le reçu de transfert signé sont valides et qu'il n'y a pas de dépassement de temps par rapport aux premières données d'estampille temporelle, aux données d'estampille temporelle de dispositif de référence et aux secondes données d'estampille temporelle, extrait les données vérifiables D2SVD de second dispositif du message déchiffré ; et,
(D1') en cas de non-validité d'une signature sur le reçu de transfert signé ou de dépassement de temps, le premier dispositif D1 envoie au dispositif de référence RD une notification d'erreur correspondante via son unité de communication, le dispositif de référence RD retransmet la notification d'erreur reçue au second dispositif D2 et le transfert de données avec le premier dispositif D1 est annulé ; et
(D2') en cas de validité des signatures sur le reçu de transfert signé et d'absence de dépassement de temps, l'unité de traitement du premier dispositif D1 modifie son ensemble de données vérifiables de premier dispositif (D1VD) stocké dans sa mémoire pour générer et stocker un nouvel ensemble de données vérifiables de premier dispositif D1VD' comportant les données vérifiables D2SVD sélectionnées de second dispositif extraites dans l'ensemble de données vérifiables de premier dispositif (D1VD), génère une preuve PR2 de cet ajout, retire les données vérifiables D2SVD sélectionnées de second dispositif du message, incorpore la preuve PR2 d'ajout générée dans le reçu de transfert signé, chiffre le message avec une clé privée stockée dans la mémoire du premier dispositif D1 et retransmet au dispositif de référence RD le message chiffré comportant le reçu de transfert signé ; et
(D3') à la réception par le module de communication du dispositif de référence RD du message avec le reçu de transfert signé envoyé par le premier dispositif D1 conformément à l'étape (D2'), le module de traitement du dispositif de référence RD déchiffre le message avec la clé publique correspondant à la clé privée utilisée par le premier dispositif D1 pour chiffrer le message, vérifie si les signatures sur le reçu de transfert signé sont valides, qu'il n'y a pas de dépassement de temps par rapport aux premières données d'estampille temporelle, aux données d'estampille temporelle de dispositif de référence et aux secondes données d'estampille temporelle, si la preuve PR2 d'ajout dans le reçu de transfert signé est valide ; et
(D4') en cas de non-validité d'une signature ou de dépassement de temps ou de non-validité de la preuve PR2 d'ajout, le dispositif de référence RD envoie au premier dispositif D1 et au second dispositif D2 une notification d'erreur correspondante via son module de communication et le transfert de données entre le premier dispositif D1 et le second dispositif D2 est annulé ; et
(D5') en cas de validité des signatures, d'absence de dépassement de temps, et de validité de la preuve PR2 d'ajout, le module de traitement du dispositif de référence RD chiffre le message avec une clé privée provenant de l'ensemble des clés privées stocké dans le module de mémoire, et retransmet au second dispositif D2 le message via le module de communication ;
(E') à la réception par l'unité de communication du second dispositif D2 de la notification d'erreur envoyée par le dispositif de référence RD conformément à l'étape (C1'), l'unité de traitement du second dispositif D2 transfère les données vérifiables D2SVD sélectionnées de second dispositif stockées à part dans sa mémoire dans l'ensemble de ses données vérifiables ;
(F') à la réception par l'unité de communication du second dispositif D2 du message avec le reçu de transfert signé retransmis par le dispositif de référence RD conformément à l'étape (D5'), l'unité de traitement du second dispositif D2 déchiffre le message avec une clé publique stockée correspondant à la clé privée utilisée par le dispositif de référence RD pour chiffrer le message, vérifie si les signatures sur le reçu de transfert sont valides et qu'il n'y a pas de dépassement de temps par rapport aux premières données d'estampille temporelle, aux données d'estampille temporelle de dispositif de référence et aux secondes données d'estampille temporelle, et que la preuve PR2 d'ajout est valide ; et,
(F1') en cas de non-validité d'une signature ou de dépassement de temps ou de non-validité de la preuve PR2 d'ajout reçue, le second dispositif D2 envoie au dispositif de référence RD une notification d'erreur correspondante via son unité de communication, le transfert de données vers ledit premier dispositif D1 est annulé, et le dispositif de référence RD retransmet ladite notification d'erreur au premier dispositif D1 ; et
(F2') en cas de validité des signatures, et d'absence de dépassement de temps, et de validité de la preuve PR2 d'ajout reçue, le second dispositif D2 efface les données vérifiables D2SVD sélectionnées de second dispositif stockées à part dans sa mémoire, génère en outre une preuve PR3 de cet effacement, incorpore la preuve PR3 d'effacement générée dans le reçu de transfert signé, chiffre avec l'une de ses clés privées le message comportant le reçu de transfert signé, et retransmet au dispositif de référence RD le message chiffré ; et
(G') à la réception par le module de communication du dispositif de référence RD du message avec le reçu de transfert signé retransmis par le second dispositif D2 conformément à l'étape (F2'), le module de traitement du dispositif de référence RD déchiffre le message avec une clé publique correspondant à la clé privée utilisée par le second dispositif D2 pour chiffrer le message, vérifie si les signatures sur le reçu de transfert sont valides, qu'il n'y a pas de dépassement de temps par rapport aux premières données d'estampille temporelle, aux données d'estampille temporelle de dispositif de référence et aux secondes données d'estampille temporelle, et si la preuve PR3 d'effacement reçue dans le reçu de transfert signé est valide ; et
(G1') en cas de non-validité d'une signature sur le reçu de transfert signé, ou de dépassement de temps, ou de non-validité de la preuve PR3 d'effacement reçue, le dispositif de référence RD envoie au second dispositif D2 et au premier dispositif D1 une notification d'erreur correspondante via son module de communication, le transfert de données entre lesdits premier dispositif D1 et second dispositif D2 est annulé ; et
(G2') en cas de validité des signatures sur le reçu de transfert signé, et d'absence de dépassement de temps par rapport aux premières données d'estampille temporelle, aux données d'estampille temporelle de dispositif de référence et aux secondes données d'estampille temporelle, et de validité de la preuve PR3 d'effacement reçue, le module de traitement du dispositif de référence RD signe encore le reçu de transfert signé, chiffre le reçu de transfert encore signé avec l'une des clés privées stockées dans le module de mémoire, et retransmet via le module de communication au premier dispositif D1 et au second dispositif D2 le reçu de transfert encore signé chiffré.

4. Procédé selon la revendication 2 ou 3, dans lequel respectivement à l'étape (C) ou (C'),
en cas de spécification par les règles internes des données vérifiables D2SVD sélectionnées de second dispositif reçues d'une utilisation d'accréditations vérifiables respectivement du détenteur du premier dispositif D1 ou du second dispositif D2, le dispositif de référence RD vérifie en outre un respect par les accréditations vérifiables respectivement du détenteur du premier dispositif D1 ou du second dispositif D2 desdites règles internes, respectivement en communiquant avec lesdits premier ou second dispositifs via un protocole de partage d'accréditations.

5. Procédé selon l'une quelconque des revendications 1 à 4, dans lequel
chaque donnée vérifiable de l'ensemble de données vérifiables d'un dispositif est associée à des nœuds feuilles respectifs d'un arbre de Merkle correspondant audit dispositif, chaque nœud feuille correspondant à une valeur de hachage obtenue en hachant des données vérifiables associées correspondantes avec une fonction de hachage, l'arbre de Merkle comprenant des nœuds intermédiaires jusqu'à un nœud racine de l'arbre correspondant à une valeur de racine de l'arbre calculée conformément à un schéma de hachage de l'arbre de Merkle, l'arbre de Merkle étant stocké dans la mémoire du dispositif ;
l'unité de traitement du dispositif est adaptée pour réaliser une modification de l'ensemble de données vérifiables stocké dans sa mémoire, correspondant à un retrait de données vérifiables données de l'ensemble, en sélectionnant des nœuds de l'arbre de Merkle stocké correspondant à chaque donnée vérifiable donnée devant être retirée de l'ensemble stocké de données vérifiables, en remplaçant chaque donnée vérifiable retirée par une donnée d'espace réservé correspondante et en hachant avec la fonction de hachage chaque donnée d'espace réservé pour obtenir une valeur de nœud feuille d'espace réservé correspondante, en formant un nouvel arbre de Merkle à partir de l'arbre de Merkle stocké en remplaçant les nœuds feuilles sélectionnés par les nœuds feuilles d'espace réservé correspondants respectivement pour obtenir une première partie des nœuds feuilles du nouvel arbre de Merkle et en adjoignant à ladite première partie une seconde partie distincte de nœuds feuilles correspondant respectivement aux nœuds feuilles sélectionnés de l'arbre de Merkle, en tant que nœuds feuilles stockés à part, et en calculant de nouveaux nœuds intermédiaires du nouvel arbre de Merkle jusqu'à un nouveau nœud racine du nouvel arbre de Merkle ayant lesdites première et seconde parties de nœuds feuilles en utilisant la fonction de hachage conformément au schéma de hachage, et en stockant dans la mémoire du dispositif le nouvel arbre de Merkle ;
l'unité de traitement du dispositif est adaptée pour générer une preuve que la modification de l'ensemble de données vérifiables stocké dans sa mémoire, correspondant à une exécution d'une opération réalisée par le dispositif en utilisant les valeurs de données de paramètres d'opération des données vérifiables données, en envoyant au dispositif de référence la nouvelle valeur de nœud racine du nouvel arbre de Merkle conjointement avec des données de vérification de racine comprenant respectivement les valeurs des nouveaux nœuds d'espace réservé et les valeurs de nouveaux nœuds intermédiaires du nouvel arbre de Merkle qui ont été modifiées par rapport à l'arbre de Merkle et qui sont nécessaires pour récupérer la nouvelle valeur de racine avec la fonction de hachage conformément au schéma de hachage ; et
le module de traitement du dispositif de référence est adapté pour vérifier qu'une nouvelle valeur de nœud racine d'un nouvel arbre de Merkle reçue à partir du dispositif conjointement avec des données de vérification de racine correspondantes, en tant que preuve de réalisation de l'opération par le dispositif, coïncide avec une valeur de nœud racine de test calculée à partir des données de vérification de racine reçues, vérifiant ainsi que le dispositif a réalisé l'opération ;
en cas d'effacement des données vérifiables correspondant aux nœuds feuilles stockés à part du nouvel arbre de Merkle, un arbre de Merkle mis à jour résultant est obtenu en calculant des valeurs respectives de ses nœuds feuilles intermédiaires mis à jour jusqu'à son nœud racine mis à jour avec la fonction de hachage conformément au schéma de hachage uniquement à partir de la première partie des nœuds feuilles du nouvel arbre de Merkle, la valeur de nœud racine mise à jour de l'arbre de Merkle mis à jour conjointement avec des données de vérification de racine mises à jour correspondantes constituant une preuve dudit effacement des données vérifiables ;
en cas d'ajout de données vérifiables spécifiques dans un ensemble de données vérifiables stocké en tant qu'arbre de Merkle initial dans une mémoire d'un dispositif, des valeurs correspondantes de nœuds feuilles supplémentaires sont calculées avec la fonction de hachage à partir de chaque donnée vérifiable spécifique ajoutée, et un arbre de Merkle final correspondant est calculé à partir des valeurs des nœuds feuilles de l'arbre de Merkle initial et des valeurs des nœuds feuilles supplémentaires conformément au schéma de hachage, la valeur de nœud racine résultante dudit arbre de Merkle final conjointement avec des données de vérification de racine résultantes constituant une preuve dudit ajout des données vérifiables spécifiques ; et
les unités de traitement des dispositifs et le module de traitement du dispositif de référence étant adaptés pour calculer des valeurs de nœuds d'un arbre de Merkle avec une fonction de hachage et un schéma de hachage programmés, et calculer une valeur de racine à partir de données de vérification de racine.

6. Procédé selon l'une quelconque des revendications 2 à 5, dans lequel à l'étape (B2) ou l'étape (B2'), respectivement, l'unité de traitement du second dispositif D2 :
génère une nouvelle clé K de chiffrement symétrique et chiffre un champ de commande spécifique de chaque donnée vérifiable D2SVD sélectionnée avec ladite clé K générée ;
chiffre la clé K générée afin qu'elle puisse être déchiffrée avec une clé cryptographique publique du premier dispositif D1 ; et
incorpore en outre dans le message la clé K chiffrée conjointement avec chaque champ de commande spécifique chiffré.

7. Procédé selon la revendication 6, dans lequel à l'étape (C2) ou l'étape (C2'), respectivement, à la réception à partir du dispositif de référence RD du message comportant les données vérifiables D2SVD sélectionnées de second dispositif et le reçu de transfert signé, l'unité de traitement du premier dispositif déchiffre la clé K chiffrée avec une clé privée correspondante du premier dispositif stockée dans sa mémoire pour obtenir la clé K de chiffrement, et déchiffre chaque champ de commande chiffré des données vérifiables D2SVD sélectionnées de second dispositif dans le message reçu avec la clé K, permettant ainsi au premier dispositif D1 d'accéder à des données de champ de commande du second dispositif D2 sans que ces données ne soient révélées au dispositif de référence RD.

8. Procédé selon l'une quelconque des revendications 2 à 5, dans lequel à l'étape (B) ou l'étape (B'), respectivement, après avoir déchiffré le message reçu et avant de vérifier que la signature du reçu de transfert signé reçu est valide, qu'il n'y a pas de dépassement de temps, le second dispositif D2 réalise un autre niveau d'authentification, respectivement, du premier dispositif D1 ou du dispositif de référence RD en réalisant une étape de communication par défi-réponse avec, respectivement, le premier dispositif D1 ou le dispositif de référence RD, et uniquement à la réception par le second dispositif D2 d'une réponse correcte reçue à partir, respectivement, du premier dispositif D1 ou du dispositif de référence RD, à un défi qui lui a été envoyé par le second dispositif D2, l'unité de traitement du second dispositif D2 vérifie ensuite que la signature sur le reçu de transfert signé reçu est valide, qu'il n'y a pas de dépassement de temps par rapport aux premières données d'estampille temporelle dans le reçu de transfert signé, et en cas de réponse erronée au défi le transfert de données avec le premier dispositif D1 est annulé.

9. Procédé selon l'une quelconque des revendications 1 à 8, dans lequel
chaque DID d'un détenteur d'un dispositif comporte un identifiant unique (UID) correspondant du détenteur dudit dispositif délivré par un serveur d'identités (IS) en réponse à un paramétrage d'inscription ponctuelle du détenteur du dispositif avec le serveur d'identités,
chaque dispositif est adapté pour communiquer via le réseau de communication avec un serveur de fiducie (ES) et chaque détenteur d'un dispositif peut réaliser un paramétrage d'inscription ponctuelle avec le serveur de fiducie en lui envoyant via ledit dispositif une demande contenant son identifiant unique et un engagement cryptographique à un secret de liaison du dispositif, à la réception de la demande le serveur de fiducie crée un vecteur d'entropie de test (ETV) correspondant en tant que fragment d'octets généré par un générateur de nombres aléatoires, une paire correspondante de clés (OKpub, OKpriv) de chiffrement asymétrique, détermine un profil protégé (SP) correspondant obtenu en chiffrant tout d'abord l'identifiant unique (UID) reçu avec la clé OKpriv privée puis en chiffrant le vecteur d'entropie de test et l'identifiant unique chiffré avec la clé OKpriv privée, stocke le triplet (OKpub, SP, UID)obtenu, et délivre au dispositif une accréditation CES vérifiable anonyme contenant le triplet (OKpub, SP, UID) et l'engagement cryptographique au secret de liaison du dispositif, le serveur de fiducie étant adapté pour communiquer avec le serveur d'identités via le réseau de communication et demander au serveur d'identités de confirmer qu'un identifiant unique (UID) reçu par le serveur de fiducie à partir d'un dispositif est effectivement détenu par le détenteur dudit dispositif,
chaque dispositif est adapté pour communiquer via le réseau de communication avec un serveur d'autorité (GS) et chaque détenteur d'un dispositif peut réaliser un paramétrage d'inscription ponctuelle avec le serveur d'autorité en établissant tout d'abord via son dispositif une session avec le serveur d'autorité pendant laquelle le dispositif utilise un DID éphémère et le serveur d'autorité est authentifié, le serveur d'autorité défie ensuite le dispositif de produire une preuve d'inscription de son détenteur avec le serveur de fiducie (ES) et, en réponse, le dispositif génère une preuve sur la base de l'accréditation CES vérifiable anonyme délivrée par le serveur de fiducie et envoie la preuve au serveur d'autorité, à la réception de la preuve le serveur d'autorité délivre au dispositif une pluralité de jetons d'identité à usage unique et une accréditation vérifiable CGS correspondante, chaque jeton d'identité à usage unique (SUIT) délivré étant une chaîne qui peut être utilisée pour consulter la clé OKpub publique du dispositif, l'accréditation vérifiable CGS délivrée contenant un champ pour chaque jeton d'identité à usage unique (SUIT) délivré et l'engagement cryptographique au secret de liaison du dispositif,
dans le cas où un dispositif A de la pluralité de dispositifs communique avec un dispositif B de la pluralité de dispositifs en utilisant un DID jamais vu avant,
le dispositif B défie ensuite le dispositif A de prouver que le détenteur du dispositif A est inscrit avec le serveur d'autorité en révélant l'un des jetons d'identité à usage unique SUIT délivrés au dispositif A par le serveur d'autorité dans l'accréditation vérifiable CGS correspondante,
en réponse, le dispositif A produit une preuve à divulgation nulle de connaissance sur la base de l'accréditation vérifiable CGS qui révèle l'un des jetons d'identité à usage unique SUIT correspondants, et
le dispositif B enregistre les jetons d'identité à usage unique SUIT révélés dans le reçu de transfert signé généré par le dispositif A.

10. Système pour commander une pluralité de dispositifs via un dispositif de référence pour amener les dispositifs à coopérer pour réaliser une tâche, chaque dispositif étant détenu par un détenteur correspondant, chaque dispositif étant équipé d'une unité de traitement avec une mémoire et d'une unité de communication, et adapté pour exécuter des opérations nécessaires pour réaliser la tâche, la mémoire de chaque dispositif stockant un ensemble correspondant de clés cryptographiques privées du détenteur du dispositif, un identifiant décentralisé (DID) de son détenteur associé à un ensemble de clés cryptographiques publiques correspondant respectivement aux clés privées, un procédé programmé d'authentification des autres dispositifs et du dispositif de référence adapté pour tourner sur l'unité de traitement du dispositif, les ensembles de clés cryptographiques publiques des autres dispositifs, un ensemble de données vérifiables, avec des valeurs de données de paramètres d'opération correspondantes et des règles internes associées nécessaires pour réaliser la tâche, et des accréditations vérifiables du détenteur du dispositif, les unités de communication des dispositifs étant adaptées pour communiquer de manière sécurisée les unes avec les autres via un réseau de communication sans fil ou filaire, le dispositif de référence étant équipé d'un module de traitement, d'un module de mémoire et d'un module de communication et étant adapté pour communiquer de manière sécurisée avec chaque unité de communication de dispositif via le réseau de communication sans fil ou filaire, le dispositif de référence et les dispositifs étant adaptés pour transférer des données en utilisant des protocoles de chiffrement, le module de mémoire du dispositif de référence stockant un ensemble correspondant de clés cryptographiques privées d'un détenteur de référence du dispositif de référence, et une donnée d'identifiant décentralisé (DID) correspondante et un ensemble de clés cryptographiques publiques correspondant respectivement aux clés privées de dispositif de référence, et à l'ensemble de clés cryptographiques publiques de chaque dispositif de ladite pluralité de dispositifs, le dispositif de référence et chaque dispositif étant adaptés pour signer numériquement avec leurs clés privées correspondantes un reçu de transfert, et la mémoire de chaque dispositif stockant en outre l'ensemble de clés cryptographiques publiques du dispositif de référence, une horloge d'unité de traitement de chaque dispositif est synchronisée sur une horloge de module de traitement du dispositif de référence RD, et chaque dispositif et le dispositif de référence RD sont adaptés pour ajouter des données d'estampille temporelle dans un reçu de transfert et vérifier s'il y a un dépassement de temps par rapport aux données d'estampille temporelle dans un reçu de transfert reçu, le système étant **caractérisé en ce que** les dispositifs et le dispositif de référence sont adaptés pour réaliser les étapes du procédé selon l'une quelconque des revendications 1 à 9.

11. Système selon la revendication 10, comprenant en outre
un serveur d'identités IS adapté pour communiquer avec les dispositifs via le réseau de communication et délivrer à un dispositif, en réponse à un paramétrage d'inscription ponctuelle du détenteur du dispositif avec le serveur d'identités, un identifiant unique UID correspondant dudit détenteur devant être associé aux données d'identifiant décentralisé DID du détenteur du dispositif,
un serveur de fiducie ES adapté pour communiquer avec les dispositifs via le réseau de communication et réaliser une inscription ponctuelle du détenteur d'un dispositif, à la réception à partir de ce dispositif d'une demande contenant l'identifiant unique UID de son détenteur et un engagement cryptographique à un secret de liaison dudit dispositif, en
créant un vecteur d'entropie de test (ETV) correspondant en tant que fragment d'octets généré par un générateur de nombres aléatoires, une paire correspondante de clés (OKpub, OKpriv) de chiffrement asymétrique, déterminant un profil protégé (SP) correspondant obtenu en chiffrant tout d'abord l'identifiant unique (UID) reçu avec la clé OKpriv privée puis en chiffrant le vecteur d'entropie de test et l'identifiant unique chiffré avec la clé OKpriv privée, stockant le triplet (OKpub, SP, UID) obtenu, et délivrant au dispositif une accréditation CES vérifiable anonyme contenant le triplet (OKpub, SP, UID) et l'engagement cryptographique au secret de liaison du dispositif, le serveur de fiducie étant adapté pour communiquer avec le serveur d'identités via le réseau de communication et demander au serveur d'identités de confirmer qu'un identifiant unique (UID) reçu par le serveur de fiducie à partir d'un dispositif est effectivement détenu par le détenteur dudit dispositif,
un serveur d'autorité GS adapté pour communiquer avec les dispositifs via le réseau de communication et réaliser un paramétrage d'inscription ponctuelle du détenteur d'un dispositif, à l'établissement par ledit dispositif d'une session avec le serveur d'autorité pendant laquelle le dispositif utilise un DID éphémère et le serveur d'autorité est authentifié, le serveur d'autorité défiant ensuite le dispositif de produire une preuve d'inscription de son détenteur avec le serveur de fiducie (ES) et, en réponse, le dispositif générant une preuve sur la base de l'accréditation CES vérifiable anonyme délivrée par le serveur de fiducie et envoyant la preuve au serveur d'autorité, et à la réception de la preuve le serveur d'autorité délivrant au dispositif une pluralité de jetons d'identité à usage unique et une accréditation vérifiable CGS correspondante, chaque jeton d'identité à usage unique (SUIT) délivré étant une chaîne qui peut être utilisée pour consulter la clé OKpub publique du dispositif, l'accréditation vérifiable CGS délivrée contenant un champ pour chaque jeton d'identité à usage unique (SUIT) délivré et l'engagement cryptographique au secret de liaison du dispositif, et
dans lequel, dans le cas où un dispositif A de la pluralité de dispositifs communique avec un dispositif B de la pluralité de dispositifs en utilisant un DID jamais vu avant,
le dispositif B défie ensuite le dispositif A de prouver que le détenteur du dispositif A est inscrit avec le serveur d'autorité GS en révélant l'un des jetons d'identité à usage unique SUIT délivrés au dispositif A par le serveur d'autorité dans l'accréditation vérifiable CGS correspondante, et
en réponse, le dispositif A produit une preuve à divulgation nulle de connaissance sur la base de l'accréditation vérifiable CGS qui révèle l'un des jetons d'identité à usage unique SUIT correspondants, et
le dispositif B enregistre les jetons d'identité à usage unique SUIT révélés dans le reçu de transfert signé généré par le dispositif A.
